Europäisches Patentamt

(19) European Patent Office

Office européen des brevets

(11) Numéro de publication : **0 321 336 B1**

(12) **FASCICULE DE BREVET EUROPEEN**

(45) Date de publication du fascicule du brevet :
17.04.91 Bulletin 91/16

(51) Int. Cl.⁵ : **B64C 27/54, B64C 27/72**

(21) Numéro de dépôt : 88403169.1

(22) Date de dépôt : 13.12.88

(54) **Dispositif hydraulique de commande individuelle du pas d'une pale de rotor, et moyeu de rotor et rotor équipés de tels dispositifs.**

(30) Priorité : 15.12.87 FR 8717500

(43) Date de publication de la demande :
21.06.89 Bulletin 89/25

(45) Mention de la délivrance du brevet :
17.04.91 Bulletin 91/16

(84) Etats contractants désignés :
DE GB IT

(56) Documents cités :
DE-A- 3 614 371
US-A- 4 379 678
US-A- 4 534 704

(73) Titulaire : **AEROSPATIALE Société Nationale Industrielle**
**37, Boulevard de Montmorency**
**F-75781 Paris Cédex 16 (FR)**

(72) Inventeur : **Aubry, Jacques Antoine**
**2 Avenue Marie Gasquet**
**F-13480 Cabries (FR)**
Inventeur : **Deguise, Michel**
**20 rue Joliot-Curie**
**F-13370 Mallemort (FR)**

(74) Mandataire : **Bérogin, Francis et al**
**CABINET HARLE & PHELIP 21, rue de la Rochefoucauld**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif hydraulique de commande individuelle du pas d'une pale de rotor, c'est-à-dire un dispositif grâce auquel le pas d'une pale de rotor peut être commandé directement par un vérin hydraulique rotatif interposé entre le pied de ladite pale et le moyeu de rotor sur lequel elle est attachée et articulée en pas, l'alimentation hydraulique de ce vérin étant assurée par un servo-distributeur, de préférence à commande électrique, ledit servo-distributeur étant monté sur le moyeu et entraîné en rotation autour de l'axe de rotation avec le moyeu lui-même de façon à avoir une position relative globalement fixe vis-à-vis dudit moyeu et de la pale correspondante.

Essentiellement destiné à l'équipement des moyeux de rotors et rotors principaux d'hélicoptères, qui sont des rotors à pas variable, ainsi qu'à l'équipement des hélices basculantes ou rotors basculants des aérodynes convertibles, qui sont également des rotors à pas variable, le nouveau dispositif hydraulique, selon l'invention, permet la commande individuelle de chacune des pales du ou des rotors de tels giravions, de façon, d'une part, à assurer le pilotage classique du ou des rotors par introduction du pas général, qui est constant quel que soit l'azimut de la pale en rotation, mais également du pas cyclique, qui varie sinusoïdalement sur un tour de rotation de ladite pale, et, d'autre part, à pouvoir éventuellement surajouter à ces variations du pas général et cyclique, une variation dynamique quelconque du pas pour assurer la commande multicyclique du ou des rotors.

Cette commande indépendante de chaque pale permet, d'une part, d'optimiser la commande mono-cyclique du ou des rotors, et, d'autre part, par l'intermédiaire de la commande multicyclique des pales, d'introduire sur le ou les rotors un système de contrôle actif des vibrations, ces dispositions apportant une grande efficacité anti-vibratoire et des gains notables de performances, en particulier en vitesse maximale.

Il est bien connu que le pilotage des hélicoptères est obtenu, de manière classique et principalement, d'une part, par la commande du pas général des pales du rotor principal, cette commande permettant de faire varier la portance d'ensemble du rotor, et, d'autre part, par la commande de ces mêmes pales permettant d'incliner le disque du rotor, la combinaison de ces deux commandes ayant comme résultat la possibilité de faire varier l'amplitude et l'inclinaison de l'effort moyen résultant développé par le rotor et en conséquence de piloter l'hélicoptère que ce rotor sustente.

Ces commandes sont introduites sur la plupart des hélicoptères qui volent à ce jour par l'intermédiaire d'un dispositif complexe à plateaux cycliques, ces plateaux permettant d'engendrer simultanément sur les pales du rotor, d'une part, la commande du pas général des pales par leur déplacement axial suivant l'axe du rotor, et, d'autre part, la commande sinusoïdale du pas ou commande monocyclique dont la pulsation est égale au régime de rotation du rotor, par leur basculement angulaire par rapport à l'axe du rotor.

Généralement, les plateaux cycliques, utilisés pour commander la variation du pas des pales d'un rotor de giravion, tel qu'un hélicoptère, sont montés autour du mât rotor et comprennent un plateau tournant, relié par des biellettes aux leviers de pas des pales du rotor, et entraîné par le moyeu ou le mât du rotor, en par l'intermédiaire d'au moins un compas de liaison, en rotation autour du mât rotor, ce plateau tournant étant monté en rotation à l'aide d'au moins un roulement à billes sur un plateau non-tournant monté autour du mât rotor et coulissant axialement le long de ce dernier, sous l'action d'un levier de pas collectif manoeuvré par le pilote, le plateau non-tournant étant également articulé par rapport au mât rotor à l'aide d'une rotule, de sorte que les plateaux puissent osciller dans tous les sens autour de la rotule par l'action de bielles des commandes pilotes sur le plateau non-tournant, cette action étant commandée à partir du manche cyclique.

Par ailleurs, les niveaux vibratoires relevés sur les hélicoptères sont en général supérieurs à ceux relevés sur les avions de transport. La cause principale de ces niveaux vibratoires élevés est le rotor principal des hélicoptères, sur lequel se développent des efforts aérodynadynamiques et dynamiques alternés importants, qui, après transmission au fuselage de l'hélicoptère, se traduisent par des accélérations périodiques élevées, surtout à grande vitesse. Indépendamment de l'optimisation dynamique des rotors et des structures, les moyens utilisés à ce jour pour limiter ces phénomènes vibratoires sont des moyens passifs, du type anti-vibreur ou suspensions, disposés au niveau de la tête de rotor, au niveau de la liaison entre rotor et fuselage, ainsi que sur le fuselage lui-même. Parallèlement aux moyens passifs, dont l'avenir semble limité, du fait que leur masse risque d'être rédhibitoire pour satisfaire aux exigences de plus en plus sévères en matière de confort, associées aux vitesses de croisière de plus en plus élevées des hélicoptères modernes, des moyens actifs de contrôle des vibrations sont également étudiés et développés.

Comme cas particulier de ces moyens actifs de contrôle des vibrations, il a déjà été proposé d'utiliser une commande multicyclique, dont le principe d'action, dans cette application, consiste à développer des efforts alternés, qui, au niveau du rotor principal, s'opposent aux efforts générateurs de vibrations.

Par rapport à une commande de pas mono-cyclique, introduite par des plateaux cycliques, cette commande multicyclique est une commande plus élaborée, contenant plusieurs harmoniques du régime de rotation. Elle peut être également utilisée pour rechercher l'amélioration des qualités de vol et des gains en performances, notamment par le contrôle du décrochage sur la pale reculante.

Il est à noter de plus qu'une commande multicyclique du rotor principal d'un hélicoptère, en tant que système de contrôle actif des vibrations, se prête favorablement à une intégration dans un système de commandes de vol électriques, permettant d'assurer un contrôle automatique généralisé de l'hélicoptère.

Dans un premier mode connu de mise en oeuvre, il a été proposé d'introduire la commande multicyclique au niveau des vérins de commande du plateau non-tournant d'un dispositif classique à plateaux cycliques, de sorte que la commande multicyclique soit simplement ajoutée à la commande générale et mono-cyclique classique, correspondant à une constante en repère fixe, c'est-à-dire sans prendre en considération la rotation autour de l'axe du rotor. Une telle réalisation a pour seul intérêt de conserver la chaîne de commande monocyclique classique à plateaux cycliques et bielles de pas, à laquelle on rajoute des actionneurs linéaires multicycliques, tels que des vérins hydrauliques linéaires qui sont mis en série sur les vérins de commande du déplacement longitudinal et de l'inclinaison du plateau non-tournant. Ainsi, par un choix judicieux de l'amplitude et de la phase des commandes envoyées sur les trois vérins de commande multicyclique, on peut donc s'opposer à la génération de vibrations au niveau du rotor principal.

Cependant, l'inconvénient d'une telle réalisation est qu'il faut ajouter des actionneurs linéaires et leurs circuits de commande en puissance à un dispositif à plateaux cycliques, déjà lourd, encombrant et complexe par lui-même et qu'il est nécessaire de plus de renforcer notablement les plateaux cycliques, eux-mêmes. Ceci revient donc à augmenter le coût, la complexité et le poids d'une telle installation, montée autour du mât rotor.

Par opposition à une telle superposition d'une commande monocyclique classique et d'une commande multicyclique, il a déjà été proposé d'effectuer la commande multicyclique par une commande directe en repère tournant, à l'aide de dispositifs d'actionnement qui tournent chacun avec la pale dont le pas est commandé.

Différentes réalisations de ce type ont été présentées dans un article de Mr. KENNETH F. GUINN, intitulé "Commande individuelle de pales indépendante du plateau cyclique" (Individual blade control independent of a swash-plate) et publié dans le numéro de Juillet 1982 du "Journal of American Helicopter Society".

Cet article présente des réalisations de commande de rotor principal d'hélicoptère qui s'écartent de la conception conventionnelle en plaçant des actionneurs de commande, des alimentations de puissance correspondantes et des calculateurs dans le système de commande tournant. Dans une première réalisation, ayant pour but d'améliorer le dispositif de commande de pas mécanique, et en tant que moyen permettant d'introduire une commande à harmonique supérieure sur le rotor, la commande multicyclique comprend un actionneur, à savoir un vérin hydraulique linéaire, monté axialement le long du mât rotor et à l'extérieur de la partie supérieure de ce dernier, le circuit hydraulique d'alimentation et la pompe étant logés à l'intérieur du mât rotor. Alors que, dans cette première réalisation, la commande multicyclique est appliquée en parallèle à la commande monocyclique, les autres réalisations proposées dans cet article ne comportent plus de plateaux cycliques permettant l'application d'une commande monocyclique, et certaines de ces réalisations comportent des agencements en série d'un vérin hydraulique linéaire, de ses moyens hydrauliques d'alimentation, notamment de la pompe, et d'une bielle d'actionnement du levier de commande du pas de la pale correspondante, ces agencements allongés étant disposés axialement soit à l'intérieur du mât rotor soit à l'extérieur et le long de ce dernier, selon que l'on veut protéger les vérins contre le milieu ambiant, indépendamment des problèmes thermiques posés par le fonctionnement de ces dispositifs, ou que l'on souhaite bénéficier du déplacement rotatif des vérins pour obtenir un effet de ventilateur améliorant leur refroidissement. Dans une autre configuration, afin que le refroidissement des commandes pendant le fonctionnement à grande vitesse, lorsque la température du système est maximale, soit suffisant en raison du grand volume d'air déplacé, les commandes sont placées sur le moyeu rotor et comprennent pour chaque pale, une pompe hydraulique montée sur la partie centrale du moyeu, alimentée par une canalisation interne au mât rotor et alimentant elle-même un vérin hydraulique linéaire, fixé selon l'envergure sur un bras radial du moyeu, et dont l'extrémité radiale externe, par rapport à l'axe de rotation du rotor, actionne deux leviers de commande de pas coudés pour commander les pivotements de la pale autour de son axe de changement de pas. Dans cette configuration, les renvois doubles d'actionnement de la pale nécessitent des supports extrêmement longs donc lourds et peu rigides, les vérins sont alimentés par des tuyauteries relativement longues et les forces centrifuges sollicitent les structures et influent sur le fonctionnement des éléments du dispositif monté dans le sens de l'envergure. Selon une autre configuration, les actionneurs sont toujours des vérins linéaires, mais ces derniers sont placés dans le sens de la corde de la pale, ce qui permet de les monter avec leurs renvois plus près du mât rotor, et de réduire le poids des tuyauteries hydrauliques et des supports de renvois. Une variante de cette configuration, qui utilise toujours des vérins montés dans le sens de la corde, est décrite dans le brevet des Etats-Unis d'Amérique N° 4 379 678, et élimine tous les renvois coudés et les supports des renvois, par lesquels les vérins actionnent les leviers de commande du pas des pales, mais au prix d'un montage des vérins sur des supports articulés transversaux et encombrants. Dans le brevet américain précité, le rotor équipé d'un dispositif de commande individuelle du pas de chaque pale est un rotor sur lequel chaque pale a son pied accouplé à l'extrémité radiale externe d'un bras souple en flexion et torsion du moyeu, entraîné en rotation par un mât rotor tubulaire. Un actionneur électro-hydraulique, qui est un vérin linéaire triple, est disposé selon la corde, perpendiculairement à l'axe de la pale, au niveau du pied de celle-ci, et la tige du vérin fait office de bielle de commande de pas, actionnant un levier de commande de pas solidaire du pied de la pale. Chacun des trois étages du vérin électro-hydraulique est raccordé à un circuit hydraulique indépendant, comportant une pompe et une bâche hydraulique, et chacun des trois étages du vérin est simultanément commandé, indépendamment des deux autres étages, par un générateur de signaux électriques, qui délivre des ordres de commande aux servo-valves associées aux vérins, le générateur de signaux étant alimenté en courant électrique produit par un alternateur, qui est entraîné en rotation en même temps qu'une pompe hydraulique à l'aide d'un arbre commun portant un pignon d'entraînement en prise avec une roue dentée fixée à l'extrémité supérieure d'un tube vertical fixe (non rotatif) traversant le mât rotor tubulaire. Comme le vérin électro-hydraulique, chaque générateur de signaux électriques, chaque alternateur correspondant et chaque pompe hydraulique des trois circuits indépendants alimentant chacun l'un des étages du vérin, sont fixés sur le moyeu rotor, et donc entraînés en rotation avec ce dernier, l'entraînement de chaque pompe et de chaque alternateur correspondant est assuré par la rotation du pignon d'entraînement commun autour de la roue dentée fixe. Les déplacements transversaux de la tige du vérin orienté selon la corde sont transmis à un levier de pas coudé par un embiellage de transmission en forme de U, dont la base est liée à la tige du vérin, dont les deux ailes s'étendent de part et d'autre du vérin et ont leur extrémité libre accouplée à un bras du levier de pas coudé. L'autre bras de ce levier est solidaire en rotation de l'extrémité radiale interne d'une extension radiale de la pale, prolonge cette dernière, vers le moyeu rotor, au-delà d'un axe d'articulation en traînée, lequel articule la pale sur les deux branches radiales du bras de moyeu correspondant, conformé en chape à deux branches souples en flexion et torsion, et entre lesquelles est logée l'extension de la pale. De plus, un amortisseur linéaire des oscillations angulaires de la pale en traînée est accouplé entre deux attaches désaxées dont l'une est sur le pied de pale et l'autre sur l'extension de pale.

Compte-tenu de l'encombrement occasionné sur la tête de rotor par la présence non seulement des vérins montés selon la corde, mais également des circuits hydrauliques correspondants, avec les tuyauteries, les pompes, les réservoirs, les filtres et les clapets associés, ainsi que des circuits électriques et optiques de génération et transmission d'ordres de commande, il est apparu nécessaire de prévoir un carénage du moyeu rotor, afin de protéger les commandes et de réduire la traînée aérodynamique résultant de leur présence sur le moyeu. De plus, les tuyauteries hydrauliques ont été au moins partiellement logées dans ce carénage de moyeu, afin que ce dernier fasse simultanément office d'échangeur de chaleur.

Cependant, un tel système, de structure complexe, pose des problèmes importants de montage, d'alignement et également d'usure des joints d'étanchéité au niveau des vérins linéaires utilisés. Pour ces raisons, l'article de revue précité propose une autre configuration, présentant une disposition de vérin plus efficace. Cette configuration comporte deux leviers de commande de pas et quatre vérins linéaires par pale. Chaque vérin de pale est commandé par une alimentation hydraulique et électrique différente, qui est située sur le moyeu rotor. Quatre calculateurs, également placés sur le moyeu, traitent toutes les données de commande allant aux pales du rotor ou provenant de ces dernières, et ayant pour origine des détecteurs de la position des pales. Les alimentations hydrauliques sont entraînées par des pignons fixes montés sur des tubes verticaux. Un tube vertical est placé dans le mât rotor tubulaire et débouche au-dessus du moyeu du rotor, un autre tube vertical est placé à l'extérieur du mât et arrive juste sous le moyeu, de sorte que, lorsque le rotor tourne, les alimentations hydrauliques sont entraînées par des trains d'engrenage eux-mêmes entraînés en rotation autour des pignons fixes. Deux des quatre alimentations hydrauliques sont prévues au-dessus du moyeu et les deux autres au-dessous. Les ordres de commande des servo-valves électro-hydrauliques équipant les quatre vérins linéaires, ainsi que les données de configuration ou de position des pales sont transmis à travers une interface entre la partie rotative du rotor et la partie non-rotative, par l'intermédiaire de fibres optiques coopérant avec les collecteurs optiques redondants, dont l'un est situé au-dessus et l'autre au-dessous du moyeu rotor. En ce qui concerne l'entraînement en rotation de la pale autour de son axe de changement de pas, chaque pale est solidaire en rotation de deux leviers de commande de pas, perpendiculaire à l'axe de pas de la pale et à son plan de traînée, et dont l'un s'étend au-dessus et l'autre au-dessous de ce plan de traînée. L'extrémité libre de chacun des deux leviers de commande de pas est articulée sur les tiges de deux vérins linéaires montés selon la corde, en opposition, l'un en avant et l'autre en arrière de l'axe de pas de la pale. Les quatre vérins de chaque pale se répartissent ainsi entre deux vérins supérieurs et deux vérins inférieurs, qui sont tous disposés selon la corde de la pale et en opposition deux à deux, afin de commander les basculements de commande du pas autour de l'axe de changement de pas de la pale, et ainsi d'entraîner les variations angulaires de la pale autour de cet axe. Chacun des quatre vérins linéaires associés à chaque pale comporte une servo-valve électro-hydraulique de commande, ainsi que des clapets et un circuit de dérivation pour la limitation des charges subies, et également des transducteurs linéaires de la position du piston du vérin et du ou des clapets de surcharge. Tous les vérins sont logés dans deux supports de vérins qui remplissent également la fonction de collecteurs hydrauliques, avec des raccords rapides pour connecter les vérins au montage sur les circuits hydrauliques correspondants. Pour chaque pale, on utilise ainsi quatre servo-commandes électro-hydrauliques tournantes, dont les autres composants restants, savoir un réservoir, un module de filtrage, et un ou deux calculateurs sont combinés pour former un bloc intégré électro-hydraulique qui est placé près de la pompe et de l'alternateur associés. Un carénage de moyeu comprenant deux disques bombés complémentaires est fixé sur le moyeu rotor afin de caréner ce dernier et de protéger les commandes.

Par rapport à un dispositif classique à plateaux cycliques, qui, disposé autour du mât rotor, entre le rotor et le fuselage, produit une traînée importante en vol de croisière, le fait de placer les commandes de vol multicycliques sur le moyeu rotor, avec un carénage approprié, et d'éliminer les plateaux cycliques et la tringlerie de commande correspondante, permet de réduire la traînée du rotor dans une mesure importante. De plus et surtout, la commande individuelle des pales assure une grande souplesse de commande en permettant d'introduire des lois de commande complexes en même temps que les entrées conventionnelles de pas général et cyclique sur les pales. Ceci facilite l'application d'entrées de commande à la fois harmoniques et non harmoniques, afin d'améliorer les charges du rotor en fonctionnement, les qualités vibratoires, les performances et/ou les qualités de manoeuvrabilité de l'appareil. On peut ainsi amortir les excitations des pales avant qu'elles ne puissent provoquer des vibrations indésirables, et, à l'aide d'harmoniques supérieures, on peut provoquer l'élimination ou le décrochage de glace déposée sur les pales et assurer ainsi un dégivrage.

Cependant, bien que l'on puisse utiliser, dans cette configuration, des vérins à simple effet, de type non compensé, il n'en reste pas moins que ces effets avantageux résultent de l'utilisation d'une structure complexe, comportant pour chaque pale, quatre servo-commandes électro-hydrauliques tournantes installées au-dessus et au-dessous du moyeu de rotor ainsi que des pieds de pale, et également autour de la partie supérieure du mât rotor, de sorte qu'une telle installation reste très complexe, coûteuse, encombrante, et d'une fiabilité non éprouvée.

Il en est sensiblement de même du système de commande individuelle du pas des pales d'un rotor d'hélicoptère qui est décrit dans le brevet des Etats-Unis d'Amérique N° 4 519 743. Dans ce brevet, chaque pale dont le pas doit être individuellement commandé, a son pied retenu dans une chape métallique solidaire de l'armature radiale interne d'une articulation à rotule sphérique lamifiée dont l'armature radiale externe est retenue sur un bras de support rigide solidaire du moyeu. Au niveau de l'articulation à rotule sphérique lamifiée, qui permet les mouvements de la pale en battement, en traînée et autour de son axe de changement de pas, une bande métallique flexible, reliant le bras de support du moyeu à la chape de retenue du pied de pale, porte des jauges de contrainte qui délivrent des signaux de sortie témoignant de la déformation en torsion de la pale autour de son axe de pas et en battement. On peut ainsi surveiller la réponse dynamique de la pale, pour préparer des signaux de contre-réaction dans la boucle d'asservissement qui comprend, par ailleurs des moyens essentiellement électro-mécaniques pour ajuster la position angulaire de la pale autour de son axe de changement de pas. De plus, au moins un accéléromètre est monté sur la pale de sorte qu'il soit sensible aux accélérations dans une direction perpendiculaire à la surface de la pale, afin d'être sensible aux déformations en battement et de fournir des signaux de contre-réaction également introduits dans la boucle d'asservissement. Le pas de chaque pale du rotor est commandé individuellement par un servo-moteur propre à chaque pale, et par l'intermédiaire d'une transmission mécanique comportant des engrenages et un ensemble pignon-manivelle. Le servo-moteur est un ensemble moteur-tachymètre monté parallèlement à l'axe du mât rotor, entre deux flasques radiaux supportés par ce dernier. Un pignon monté sur l'arbre de sortie du moteur est en prise avec un pignon conique entraînant en rotation un arbre radial monté tourillonnant dans des paliers portés par des supports solidaires du moyeu rotor, et cet arbre radial entraîne en rotation une manivelle dont l'extrémité porte un maneton articulé sur l'extrémité inférieure d'une bielle de commande de pas, dont l'extrémité supérieure est articulée sur un axe diamétral et transversal, coupant l'axe de changement de pas de la pale, et fixé à la chape de retenue du pied de cette pale ainsi qu'à l'armature radiale interne de la butée sphérique lamifiée. Ainsi, toute rotation du moteur dans l'un ou l'autre sens est transmise, par l'intermédiaire des pignons en sortie du moteur, à la manivelle dont le maneton excerce une traction ou une poussée sur la bielle de commande de pas, pour commander ainsi les variations angulaires de la pale autour de son axe de changement de pas.

Les inconvénients d'une telle solution sont que la position des ensembles moteur le long du mât rotor et à l'extérieur de ce dernier, ainsi que la présence des étages de pignons réducteurs, et les supports de leurs paliers, ainsi que des ensembles manivelles-manetons et bielles de commande de pas sur un plateau du moyeu rotor, donnent au dispositif un encombrement important, à l'origine d'une traînée aérodynamique également importante, et qui s'ajoute à la complexité de la structure, ayant des incidences défavorables sur les coûts de fabrication et de maintenance.

On connaît déjà, également, par le brevet US-4.534.704 des dispositifs de commande hydraulique du pas d'une pale de rotor d'aérodyne dans lesquels la commande de pas est réalisée par l'intermédiaire d'un vérin hydraulique rotatif. Le stator de ce vérin est solidaire d'un manchon de moyeu dans lequel il est monté, le rotor de ce vérin étant monté coaxialement rotatif dans ledit stator et étant solidarisé, quant à lui, d'une armature de liaison sur laquelle le pied de la pale est monté. Les surfaces cylindriques en regard de ce rotor et de ce stator sont chacune munies de palettes définissant entre elles, avec lesdites surfaces, plusieurs chambres à volume variable alimentées en fluide de commande par des servo-vannes commandant le positionnement en pas de chaque pale par rapport au moyeu.

Cependant, il n'est prévu dans le dispositif dont fait état ce document US-4.534.704 aucune articulation en traînée ou battement des pales du rotor de l'aérodyne par rapport au moyeu dudit rotor. La mise en place d'une telle (ou de telles) articulation(s) pourrait être, bien entendu, envisagée entre le moyeu et le vérin hydraulique du dispositif de commande de pas ou entre ce vérin hydraulique et la pale ou son armature de liaison. La structure de liaison pale/moyeu s'en trouverait néanmoins considérablement allongée.

Par la présente invention, on se propose de remédier aux inconvénients précités des dispositifs connus de commande individuelle du pas des pales de rotor, ou dispositif de commande multicyclique, et l'invention a plus particulièrement pour objet un dispositif hydraulique de ce type, qui soit d'une très grande compacité, d'une excellente fiabilité, d'une grande efficacité et précision de commande de la position des pales en incidence, ainsi que de coûts de fabrication et de maintenance réduits.

Un autre but de l'invention est de réaliser un dispositif hydraulique de commande individuelle du pas d'une pale de rotor, qui soit d'une grande souplesse de fonctionnement et adapté à l'obtention d'une réduction importante des vibrations générées au niveau des pales du rotor par une commande multicyclique de leur pas.

Un autre but encore de l'invention est de proposer un dispositif hydraulique de commande individuelle du pas d'une pale de rotor, qui se prête favorablement à une intégration dans des éléments d'articulation et de liaison d'une pale à un moyeu de rotor, et auquel, de préférence, au moins un amortisseur des oscillations angulaires de la pale en traînée peut être combiné ou intégré, sans augmenter trop sensiblement la complexité de la structure ni l'encombrement de l'ensemble du dispositif.

A cet effet, l'invention a pour objet un dispositif hydraulique de commande individuelle du pas d'une pale d'un rotor d'aérodyne, tel qu'un rotor d'hélicoptère ou une hélice basculante de convertible, le dispositif comprenant :

au moins un actionneur hydraulique de commande du pas de la pale, lequel actionneur est destiné à être monté sur le rotor et entraîné en rotation avec lui, chaque actionneur étant raccordé à au moins un circuit hydraulique de puissance par au moins une conduite hydraulique sur laquelle est monté au moins un servo-distributeur tournant également avec le rotor et commandant l'alimentation d'au moins un actionneur en fluide hydraulique sous pression,

chaque servo-distributeur recevant des signaux de commande élaborés à partir d'ordres de commande pilote et/ou d'un calculateur élaborant des ordres de commandes à partir de signaux d'état d'au moins une pale, provenant d'au moins un détecteur de la position et/ou des mouvements et/ou des déformations d'au moins une pale, et, selon l'invention, ce dispositif Hydraulique se caractérise en ce qu'au moins un actionneur, mais de préférence chacun d'eux, est un vérin hydraulique rotatif dont l'axe de rotation coïncide avec l'axe longitudinal de changement de pas de cette pale, vérin rotatif dont le stator est solidarisé à la partie centrale du moyeu de la tête de rotor de l'aérodyne et dont le rotor, coaxial au stator, est lié en rotation à la pale, et qui comporte au moins une chambre interne à volume variable, délimitée au moins partiellement entre le rotor et le stator de vérin, et reliée à au moins un servo-distributeur commandé de sorte que l'alimentation de la chambre en fluide hydraulique sous pression et son augmentation de volume, ou la vidange de la chambre et sa diminution de volume provoquent, autour de l'axe de pas de la pale, une rotation du rotor de vérin par rapport au stator de vérin, qui est transmise à la pale et fait varier son incidence, le dispositif hydraulique de commande individuelle du pas d'une pale comportant de plus une articulation à rotule sphérique, qui est centrée sensiblement sur l'axe de pas de la pale et comporte au moins un élément d'un matériau élastique, sensiblement et au moins partiellement en forme d'au moins une portion d'au moins une calotte sphérique, et qui est retenu entre deux supports rigides, dont l'un est destiné à être solidaire de la pale en torsion autour de l'axe de pas de la pale, et dont l'autre est solidaire en rotation du rotor d'au moins un vérin hydraulique rotatif du dispositif autour de l'axe de pas, et de sorte que l'articulation à rotule sphérique soit rigide en direction circonférentielle autour de l'axe de pas tout en autorisant, autour de son centre, une liberté relative de mouvement angulaire de la pale en battement et traînée par cisaillement du matériau élastique. Il est clair que l'utilisation de vérins rotatifs, coaxiaux avec l'axe de pas de la pale, permet, par rapport à l'utilisation d'actionneurs linéaires, comme c'est le cas dans l'état de la technique, de réduire très sensiblement l'encombrement et la complexité de chaque dispositif au niveau du moyeu rotor, et d'éviter au maximum l'introduction de souplesses ou de jeux parasites de commande entre les vérins et les pales.

Bien que l'on puisse utiliser des vérins rotatifs à simple effet, rappelés par exemple élastiquement vers une position de pas minimum, à partir de laquelle la pale est angulairement déplacée autour de son axe de pas par admission de fluide hydraulique sous pression dans la ou les chambres du ou des vérins de rotation, il est avantageux, aux plans de la souplesse de fonctionnement, de l'efficacité, de la sécurité et sans incidence sensible sur l'augmentation du volume, d'utiliser, dans chaque dispositif, au moins un vérin hydraulique rotatif qui soit un vérin à double effet, mais de préférence chacun des vérins de chaque dispositif est un tel vérin à double effet, comportant au moins deux chambres internes à volume variable reliées à au moins un servo-distributeur commandé de sorte que l'alimentation d'une chambre et son augmentation de volume soient simultanées à la vidange correspondante d'une autre chambre et à sa diminution de volume, afin que la rotation du rotor de vérin, et donc de la pale, par rapport au stator de vérin et autour de l'axe de pas de la pale puisse être commandée dans les deux sens opposés.

Selon l'invention, le stator et le rotor d'au moins un vérin, mais de préférence de chacun d'eux, sont deux organes sensiblement tubulaires et coaxiaux autour de l'axe de pas de la pale, et ils présentent chacun, en regard de l'autre, une surface latérale de révolution autour de leur axe commun, au moins une palette de vérin, mais de préférence deux palettes diamétralement opposées par rapport à cet axe commun, faisant saillie sur chacune des surfaces latérales et s'étendant jusqu'à proximité immédiate de la surface latérale en regard, et la ou les palettes de vérin en saillie sur l'une des surfaces latérales étant décalée(s) en direction circonférentielle autour de l'axe de pas de la pale, par rapport à la ou aux palettes en saillie sur l'autre surface latérale, afin de délimiter au moins deux, mais de préférence quatre chambres à volume variable, à faible débit de fuite d'une chambre à l'autre, par le faible jeu radial entre les palettes et les surfaces de révolution en regard. Ce faible jeu radial, éventuellement combiné à une dimension axiale importante des palettes, occasionne un laminage important du fluide hydraulique, ce qui assure une étanchéité suffisante entre les différentes chambres de chaque vérin hydraulique rotatif.

Dans une forme préférée de réalisation, favorable à l'intégration du vérin hydraulique rotatif dans d'autres éléments avantageusement utilisés pour la liaison et l'articulation des pales au moyeu du rotor, l'une des surfaces latérales de révolution de chaque vérin hydraulique rotatif est une surface cylindrique de section transversale circulaire, sur laquelle chaque palette en saillie a sensiblement la forme d'un segment de sphère à convexité tournée sur ou vers l'autre surface latérale, laquelle est une surface en forme de calotte sphérique sur laquelle chaque palette en saillie a également sensiblement la forme d'un segment de sphère lié par sa face convexe à la calotte sphérique, et présentant une face en portion de cylindre de section circulaire en regard de la surface cylindrique.

Pour faciliter les changements de pas de la pale, le dispositif comprend avantageusement au moins un empilement axial et sensiblement concentrique, par rapport à l'axe de pas de la pale, d'au moins un vérin hydraulique rotatif et d'au moins un palier cylindrique d'articulation d'incidence de la pale et d'encastrement sur le moyeu, qui permet la rotation de la pale par rapport au moyeu autour de son axe de pas.

Afin d'assurer éventuellement une certaine redondance, qui peut s'imposer pour des raisons de sécurité, il est clair que chaque dispositif hydraulique de commande individuelle du pas d'une pale peut comporter plusieurs vérins hydrauliques rotatifs, empilés soit axialement soit radialement par rapport à l'axe de changement de pas de la pale, et le rotor d'au moins un vérin hydraulique rotatif, mais de préférence de chacun d'eux, est monté en rotation vis-à-vis du stator de vérin correspondant par au moins un palier cylindrique. Il est avantageux que ce palier cylindrique constitue simultanément un palier d'articulation d'incidence de la pale et d'encastrement sur le moyeu. Avantageusement, au moins un palier cylindrique est un palier à deux paires espacées axialement de portées cylindriques en regard l'une de l'autre, le rotor et le stator d'au moins un vérin hydraulique rotatif étant intégrés entre lesdites paires de portées. Ceci permet d'assurer un meilleur guidage axial et en rotation du rotor par rapport au stator de vérin correspondant.

Pour une bonne transmission du couple de commande du pas entre le rotor du vérin rotatif et le support rigide de la rotule sphérique auquel la pale est liée, le ou les éléments en matériau élastique de la rotule sphérique comprennent deux couronnes crénelées ou crantées radialement et adhérisées radialement aux deux supports rigides de la rotule sphérique, entre des surfaces crénelées ou crantées en regard des deux supports rigides, afin de rigidifier la liaison entre le support de rotule lié à la pale et le rotor d'au moins un vérin hydraulique rotatif, en rotation autour de l'axe de pas de la pale, de sorte que toute rotation du rotor de vérin par rapport au stator de vérin soit transmise au support de rotule lié à la pale, et donc à la pale. Dans ce cas, il est avantageux que la surface de révolution en calotte sphérique, qui constitue l'une des deux surfaces de révolution délimitant les chambres internes du vérin hydraulique rotatif correspondant, et les palettes de ce vérin en forme de segments de sphère soient concentriques à la rotule sphérique.

De plus, il est avantageux qu'au moins un palier cylindrique d'incidence et d'encastrement soit, d'une part, lié à celui des supports rigides de l'articulation à rotule sphérique qui est solidaire en rotation d'au moins un rotor de vérin, et, d'autre part, sensiblement coaxial à l'autre support rigide de l'articulation à rotule sphérique. En outre, pour diminuer l'encombrement du dispositif, simplifier sa structure, et éviter, en fonctionnement, le développement d'effort et de moments excentrés ou désaxés, l'articulation à rotule sphérique est avantageusement, d'une part, radialement en série, par rapport à l'axe de pas de la pale, avec l'empilement axial d'au moins un vérin hydraulique rotatif et d'au moins un palier cylindrique d'incidence et d'encastrement, et d'autre part, sensiblement concentrique au(x) palier(s) cylindrique(s) correspondant(s).

Pour que le dispositif de contrôle de la commande multicyclique selon l'invention fonctionne en boucle fermée, c'est-à-dire dispose d'informations relatives à la position prise par la pale autour de son axe de pas, afin de rétro-agir sur la commande du ou des vérins rotatifs de chaque dispositif, ce dernier comprend au moins un détecteur de position de la pale correspondante, ce détecteur étant avantageusement un transducteur de rotation, de type inductif ou capacitif, qui comporte au moins un organe mobile, lié en rotation au rotor d'au moins un vérin rotatif, et monté en rotation par rapport à au moins un organe fixe vis-à-vis du stator de ce vérin rotatif, de façon à délivrer un signal de sortie indiquant la position angulaire relative des organes respectivement mobile(s) et fixe(s) du transducteur de rotation. Dans une forme très compacte de réalisation, au moins un organe fixe de chaque transducteur de rotation est logé dans un évidement axial ménagé dans une partie d'extrémité axiale du stator du vérin et/ou d'une portée cylindrique d'un palier d'articulation d'incidence et d'encastrement en empilement axial avec ce stator de vérin, et au moins un organe mobile de chaque transducteur de rotation est monté en rotation, autour d'un axe parallèle à l'axe de pas de la pale, dans ledit organe fixe ou autour de ce dernier, et est solidaire en rotation d'un pignon externe au vérin et au palier correspondant, et en prise avec la denture d'une couronne solidaire en rotation du rotor de ce vérin. Dans un exemple avantageux de réalisation, la couronne dentée a une forme annulaire de révolution définie par la rotation, autour de l'axe de pas de la pale, d'une section transversale en U couché, de sorte que la couronne présente un flasque sensiblement radial supportant deux collets tubulaires coaxiaux, dont l'un est fixé au rotor du vérin, et dont l'autre porte la denture à dents radiales en prise avec le pignon correspondant de chaque transducteur de rotation, chaque pignon étant logé dans l'évidement délimité entre les deux collets et par le flasque de la couronne, qui est ainsi conformée en capot de protection du ou des pignons axialement en saillie par rapport au stator du vérin et/ou à la portée du palier en empilement axial avec ce stator de vérin.

Selon une autre caractéristique propre à l'invention, le dispositif hydraulique de commande individuelle du pas d'une pale comprend de plus un amortisseur hydraulique des mouvements angulaires de la pale en traînée.

Avantageusement, pour favoriser la combinaison fonctionnelle de cet amortisseur hydraulique avec les autres composants du dispositif, cet amortisseur hydraulique est un amortisseur rotatif, du type comportant un stator et un rotor sensiblement coaxiaux, délimitant entre eux au moins une chambre interne d'amortisseur remplie d'un fluide hydraulique, tel qu'une huile ou un gel de silicone de haute viscosité, et au moins une palette d'amortisseur solidaire du rotor ou du stator d'amortisseur, et subdivisant la chambre interne en deux chambres d'amortissement reliées l'une à l'autre par des moyens de laminage, de sorte que toute rotation relative du stator et du rotor d'amortisseur, autour de leur axe commun, entraîne une rotation de chaque palette dans la chambre interne correspondante en comprimant l'une des deux chambres d'amortissement et en provoquant une détente dans l'autre, de façon à assurer un amortissement du mouvement de rotation par laminage, au travers des moyens de laminage, du fluide circulant de la chambre comprimée vers la chambre d'étendue, le stator d'amortisseur étant solidaire en rotation, autour de l'axe de pas de la pale, du rotor d'au moins un vérin hydraulique rotatif, et le rotor d'amortisseur étant lié à la pale. Les moyens de laminage de l'amortisseur peuvent être montés dans le rotor et/ou dans le stator d'amortisseur, ou encore dans une palette d'amortisseur, mais, dans une réalisation de structure simplifiée, ces moyens de laminage comprennent un étroit passage entre l'extrémité libre de chaque palette d'amortisseur portée par le rotor ou le stator d'amortisseur et une surface en regard sur respectivement le stator ou le rotor d'amortisseur. L'étanchéité de chaque chambre interne d'amortisseur est assurée par au moins un organe en matériau élastique, reliant le rotor d'amortisseur au stator d'amortisseur.

Avantageusement, une excellente coopération fonctionnelle est obtenue si l'amortisseur hydraulique est radialement en série, par rapport à l'axe de pas de la pale, avec au moins un vérin hydraulique rotatif et/ou au moins un empilement axial d'au moins un vérin hydraulique rotatif et d'au moins un palier cylindrique d'incidence et d'encastrement.

Dans ce cas, afin de réduire l'encombrement et de simplifier encore la structure, il est avantageux que l'amortisseur hydraulique soit au moins partiellement intégré dans l'articulation à rotule sphérique, au moins une chambre interne d'amortisseur étant délimitée au moins partiellement entre les supports rigides de la rotule sphérique et/ou dans un évidement de l'un au moins de ces supports rigides.

Dans une forme de réalisation optimale, le stator et le rotor d'amortisseur et au moins un organe en matériau élastique qui les relie l'un à l'autre sont constitués respectivement par le support rigide de la rotule sphérique qui est solidaire en rotation du rotor d'au moins un vérin hydraulique rotatif, par le support rigide de ladite rotule sphérique qui est lié en torsion à la pale, et par au moins un élément en matériau élastique de liaison des supports rigides de la rotule sphérique.

Dans ces différents cas, et selon une architecture préférée, la rotule sphérique et l'amortisseur hydraulique rotatif entourent radialement un vérin hydraulique rotatif, dont le rotor entoure radialement le stator de vérin, le rotor d'amortisseur comprenant un support annulaire et rigide, en position radiale externe, qui présente radialement vers l'intérieur des portions de surface concave adhérisées à des éléments de matériaux élastiques qui sont également adhérisés à des portions de surface convexe présentées radialement vers l'extérieur par le stator d'amortisseur, lequel comprend un support annulaire et rigide, en position radiale intermédiaire, qui entoure lui-même radialement le stator de vérin, en position radiale interne. En particulier, pour obtenir un dispositif très compact, il est possible qu'un vérin hydraulique rotatif, dont le rotor entoure le stator, soit disposé dans un évidement ménagé dans la face radiale interne du stator d'amortisseur et/ou du support rigide de la rotule sphérique qui est liée au rotor du vérin rotatif.

Cependant, selon un mode de réalisation avantageux, car d'une structure simplifiée, le rotor du vérin hydraulique rotatif constitue simultanément le stator d'amortisseur. Cet élément présente alors des portions de faces radiales externe et interne qui sont avantageusement des portions de sphère, respectivement convexes et concaves, et centrées sur le centre la rotule sphérique.

De plus, dans cette réalisation simpifiée, le rotor d'amortisseur et le support rigide de la rotule sphérique qui est solidaire de la pale en torsion autour de l'axe de pas de cette dernière peuvent être essentiellement et simultanément constitués par une armature radiale externe reliée par le matériau élastique à une armature radiale interne, constituant elle-même simultanément l'autre support rigide de la rotule sphérique, le stator d'amortisseur portant chaque palette d'amortisseur en saillie radiale vers l'extérieur, et enfin le rotor du vérin rotatif portant la ou les palettes mobiles de vérin, en saillie radialement vers l'intérieur, en regard du stator de vérin, qui est conformé en manchon cylindrique portant la ou les palettes fixes de vérin, en saillie radialement vers l'extérieur. Pour faciliter le guidage en rotation, il est alors avantageux, que d'un côté et/ou de l'autre de leurs palettes de vérin, en direction axiale, le manchon cylindrique et l'armature interne présentent des portées cylindriques radialement en regard l'une de l'autre, formant un palier lisse d'incidence et d'encastrement, et au niveau duquel d'étanchéité du vérin rotatif est assurée par au moins un joint d'étanchéité logé dans une gorge radiale ménagée dans l'une des deux portées en regard. Pour permettre alors un montage simplifié du dispositif sur un moyeu de rotor, le manchon cylindrique du stator de vérin présente avantageusement des cannelures axiales internes par lesquelles il est destiné à venir en prise avec des cannelures axiales externes ménagées sur la périphérie d'une protubérance du moyeu, sur laquelle le manchon est destiné à être encastré, afin d'être immobilisé en rotation autour de son axe. De plus, l'une au moins des parties d'extrémité axiale du manchon cylindrique peut être avantageusement percée d'au moins une canalisation de raccordement d'au moins une chambre à volume variable du vérin hydraulique rotatif à un circuit hydraulique externe au dispositif.

Dans une forme de réalisation de structure simple mais assurant un excellent amortissement en traînée de la pale, l'amortiseur hydraulique comprend deux palettes d'amortisseur, sensiblement radiales et symétriques l'une de l'autre par rapport à l'axe de rotation relative du rotor et du stator d'amortisseur, les palettes étant solidaires du stator d'amortisseur et chacune d'elles s'étendant sensiblement perpendiculairement au plan de traînée de la pale et sensiblement symétriquement au-dessus et au-dessous de ce plan de traînée, dans l'une respectivement de deux chambres d'amortisseur délimitées chacune par un évidement s'étendant radialement et en direction circonférentielle dans le rotor de l'amortisseur, par une partie de la surface radiale du stator d'amortisseur en regard de l'évidement correspondant dans le rotor d'amortisseur, et autour du pied de la palette engagée dans cet évidement, et par des portions de surfaces annulaires du ou des organes en matériau élastique reliant le stator d'amortisseur au rotor d'amortisseur. Pour faciliter la réalisation d'un tel ensemble, les évidements du rotor d'amortisseur logeant les palettes d'amortisseur sont fermés radialement vers l'extérieur par une chemise périphérique, montée avec étanchéité et amovible sur le pourtour du rotor d'amortisseur. En outre, chaque palette d'amortisseur peut être fixée de manière inamovible, par exemple par soudage par bombardement électronique, sur la portion de la face du stator d'amortisseur qui forme le fond d'un évidement logeant la palette correspondante.

Le fonctionnement de l'amortisseur hydraulique est amélioré si, de plus, chaque chambre interne de l'amortisseur est reliée, par au moins un passage de communication, à au moins une chambre de compensation des dilatations du fluide hydraulique d'amortisseur, pressurisé par un mécanisme de pressurisation assurant une mise en pression statique de l'amortisseur. Avantageusement, dans ce cas, le ou les passages de communication entre une chambre de compensation et une chambre interne d'amortisseur est ou sont calibré(s) de façon à constituer un filtre dynamique pour les fréquences de fonctionnement de l'amortisseur. De plus, ce ou ces passages de communication peut ou peuvent être, d'une manière simple, délimité(s) par un jeu radial entre, d'une part, la chemise périphérique et, d'autre part, le rotor d'amortisseur et/ou un support rigide de la rotule sphérique.

Le mécanisme de pressurisation peut comprendre au moins une membrane souple, de préférence élastiquement déformable, qui délimite au moins partiellement la chambre de compensation correspondante. Cependant, il est avantageux que la membrane souple soit une vessie étanche, logée dans la chambre de compensation, et gonflable de l'extérieur du mécanisme de pressurisation. De plus, l'étanchéité de la chambre de compensation est avantageusement assurée par au moins un élément en matériau élastique appartenant de préférence à l'amortisseur et/ou à la rotule sphérique. Pour réduire encore l'encombrement du dispositif, il est de plus avantageux qu'au moins une chambre de compensation soit au moins partiellement délimitée entre le rotor et le stator d'amortisseur, et/ou dans un évidement de l'un desdits rotor et stator d'amortisseur, l'étanchéité de la chambre de compensation étant assurée par au moins un élément visco-élastique de liaison du rotor au stator d'amortisseur.

Lorsque l'amortisseur comprend deux palettes diamétralement opposées, il est de plus souhaitable que le dispositif comprenne également deux chambres hydrauliques de compensation, sensiblement symétriques l'une de l'autre par rapport à l'axe de rotation relative du rotor et du stator d'amortisseur, et par rapport au plan de traînée de la pale, chacune des deux chambres de compensation étant délimitée au moins partiellement par l'un de deux évidements s'étendant en direction circonférentielle, en positions alternées dans cette direction avec les évidements des chambres d'amortisseur, dans l'un des rotor et stator d'amortisseur et/ou des supports rigides de la rotule sphérique, et/ou dans au moins une partie d'au moins un élément visco-élastique de l'amortisseur et/ou de la rotule sphérique. De plus, chaque chambre interne d'amortisseur peut être séparée de chacune des chambres de compensation entre lesquelles elle est située en direction circonférentielle par une partie massive de matériau élastique, solidaire du ou des éléments de matériau élastique reliant l'un à l'autre le rotor et le stator d'amortisseur et/ou les deux supports rigides de la rotule sphérique.

Par ailleurs, l'un au moins des paliers d'incidence et d'encastrement est avantageusement un palier lisse et sec, avec au moins une bague auto-lubrifiante logée dans une gorge de maintien annulaire ménagée dans celle de deux portées cylindriques en regard l'une de l'autre de ce palier qui est présentée par le rotor de vérin et/ou le stator d'amortisseur et/ou le support rigide de la rotule sphérique qui est lié au rotor de vérin.

En plus des composants présentés ci-dessus, le dispositif hydraulique de commande individuelle du pas d'une pale selon l'invention comprend de plus, avantageusement, un dispositif de rattrapage automatique du jeu d'au moins un palier d'incidence et d'encastrement.

Dans le cas où l'un au moins des paliers d'incidence et d'encastrement est un palier lisse et sec équipé d'une bague auto-lubrifiante dans une gorge de maintien annulaire, le dispositif de rattrapage automatique de jeu est avantageusement un dispositif hydraulique, comprenant au moins une chambre de compensation, remplie d'un fluide hydraulique pressurisé par au moins un mécanisme de pressurisation, et en communication avec chacune des gorges de maintien du palier par au moins une canalisation débouchant entre le fond de la gorge et la bague auto-lubrifiante correspondante, montée avec étanchéité dans ladite gorge, de sorte que le rattrapage de jeu soit assuré par déplacement diamétral de la bague sous l'action de la pression du fluide hydraulique dans la ou les chambres de compensation du dispositif de rattrapage de jeu. Comme précédemment, ce mécanisme de pressurisation d'une chambre de compensation du dispositif de rattrapage de jeu peut comprendre une membrane souple, de préférence élastiquement déformable, délimitant au moins partiellement la chambre de compensation correspondante, et, avantageusement, cette membrane souple est une vessie étanche, logée dans la chambre de compensation correspondante et gonflable de l'extérieur du dispositif.

Dans ce cas, pour simplifier la réalisation, au moins une chambre de compensation des dilatations du fluide hydraulique de l'amortisseur et son mécanisme de pressurisation constituent simultanément et respectivement une chambre de compensation du dispositif hydraulique de rattrapage de jeu et son mécanisme de pressurisation. De plus, la ou les canalisations qui relient une chambre de compensation à une gorge de maintien d'une bague d'un palier est ou sont de préférence calibrée(s) de façon à constituer un filtre dynamique pour les fréquences de fonctionnement de l'amortisseur.

D'une manière générale, le dispositif hydraulique de rattrapage de jeu peut être au moins partiellement intégré dans l'amortisseur hydraulique.

Afin d'absorber les légers déplacements axiaux qui peuvent être dus aux effets de la force centrifuge sur la pale correspondante et sur les éléments de liaison de ladite pale au moyeu, il est préférable qu'au moins un vérin hydraulique rotatif du dispositif, et, le cas échéant au moins un palier cylindrique d'incidence et d'encastrement, au moins un capteur de position de la pale, une rotule sphérique, un amortisseur rotatif et un dispositif de rattrapage de jeu, soient montés libres en translation axiale limitée grâce à un jeu axial de montage du stator du ou des vérins sur le moyeu.

L'invention a également pour objet un moyeu de rotor, destiné à l'équipement d'un rotor à pas variable de giravion, et du type comprenant un corps central de moyeu, centré sur l'axe de rotation du moyeu, ainsi que des extensions radiales, par rapport à l'axe de rotation, qui sont solidaires du corps central et en nombre égal au nombre des pales du rotor, pour assurer chacune la liaison d'une pale au moyeu. Selon une caractéristique propre à l'invention, un tel moyeu se caractérise en ce qu'il comprend de plus des dispositifs hydrauliques de commande individuelle du pas d'une pale selon l'invention et tels que définis ci-dessus, en nombre égal au nombre des pales, et dont chacun est monté sur une extension radiale, de sorte que le stator du ou des vérins hydrauliques rotatifs du dispositif correspondant soit retenu sur ladite extension et immobilisé en rotation autour de l'axe de pas de la pale correspondante.

De plus, lorsque le moyeu de rotor est du type dont chaque extension radiale supporte, pour la liaison à la pale correspondante, au moins un palier d'incidence et, centrée sur l'axe du palier d'incidence, une articulation à rotule sphérique à au moins un élément en matériau élastique, permettant, autour de son centre, une liberté relative de mouvement de la pale correspondant en battement et en traînée, par cisaillement du matériau élastique, le moyeu selon l'invention se caractérise en ce qu'au moins un vérin rotatif du dispositif hydraulique correspondant de commande individuelle du pas d'une pale est combiné à au moins un palier d'incidence, et le rotor du ou des vérins rotatifs dudit dispositif hydraulique est solidaire en rotation, autour de l'axe du ou des paliers d'incidence, de l'un de deux supports rigides de la rotule sphérique, entre lesquels est ou sont montés le ou les éléments en matériau élastique.

En outre, lorsque le moyeu de rotor est du type comprenant, pour chaque pale de rotor, un organe de liaison rigide en traction mais souple en flexion et torsion, accouplé par une partie d'emplanture à une extension radiale, et destiné à être accouplé à une pale afin de retenir la pale à l'encontre de la force centrifuge et d'autoriser les oscillations de battement et de traînée de la pale et les variations angulaires de son pas, ainsi qu'un organe rigide en flexion et torsion, relié à ladite extension radiale et destiné à être solidarisé en rotation à la pale autour de l'axe de pas de cette dernière, selon une caractéristique propre à l'invention, la liaison dudit organe rigide en flexion et torsion à ladite extension radiale est assurée au moins partiellement par l'intermédiaire du dispositif hydraulique correspondant de commande individuelle du pas d'une pale, de sorte que le rotor du ou des vérins rotatifs de ce dispositif hydraulique soit solidaire en rotation dudit organe rigide en flexion et torsion, autour de l'axe de pas de la pale.

En outre, lorsque le moyeu de rotor comprend, pour la liaison de chaque pale à l'extension radiale correspondante, un dispositif de palier combiné d'incidence, à rotule sphérique élastique et à amortisseur hydro-élastique, dans lequel l'amortisseur est rotatif, et intégré dans la rotule sphérique élastique retenue entre deux supports rigides dont un premier est destiné à être solidarisé à la pale correspondante, et dont le second est relié par au moins un palier d'incidence à ladite extension, de sorte que le dispositif de palier combiné permette la variation angulaire du pas de la pale correspondante par rotation de la rotule et de l'amortisseur autour de l'axe du ou des paliers d'incidence, et assure un amortissement incorporé des oscillations de traînée, le moyeu de rotor selon l'invention est alors avantageusement tel que le dispositif hydraulique correspondant de commande individuel du pas soit au moins partiellement intégré dans le dispositif de palier combiné correspondant, de sorte qu'au moins un vérin rotatif soit disposé à l'intérieur de la rotule et de l'amortisseur et empilé axialement avec au moins un palier d'incidence, et que le rotor du ou des vérins rotatifs soit solidaire du second support rigide de la rotule.

De manière connue en soi, sur un moyeu de rotor de ce type, l'organe de liaison rigide en traction mais souple en flexion et torsion peut être un bras allongé, formant un tirant sensiblement radial, par rapport à l'axe du moyeu, et de retenue de la pale correspondante à l'encontre de la force centrifuge, la partie d'extrémité radiale interne de ce bras constituant la partie d'emplanture qui est retenue à l'intérieur de l'extension radiale correspondante, de forme cylindrique et tubulaire, d'axe sensiblement perpendiculaire à l'axe de rotation du moyeu, tandis que la partie d'extrémité radiale externe de ce bras est solidaire, d'une part, d'une pièce de liaison intermédiaire, servant d'attache à la pale correspondante, et, d'autre part de la partie d'extrémité radiale externe de l'organe rigide en flexion et torsion, qui est conformé en manchette rigide entourant sans contact le bras allongé, jusqu'à proximité du corps central de moyeu, et dont la partie d'extrémité radiale interne prend appui sur l'extension tubulaire correspondante par le dispositif de palier combiné, autour de l'emplanture du bras allongé ; dans ce cas, le dispositif hydraulique correspondant de commande individuelle du pas de la pale correspondante est, selon l'invention, monté autour de l'extension tubulaire par au moins un manchon cylindrique solidaire d'au moins un stator de vérin rotatif de ce dispositif, et qui est emmanché sur l'extension tubulaire et immobilisée en rotation vis-à-vis de cette extension par des cannelures axiales en prise avec des cannelures complémentaires de ladite extension radiale du moyeu.

Dans ces différentes réalisations, le corps central du moyeu est avantageusement tubulaire, afin de loger un servo-distributeur hydraulique, de préférence à commande électrique, monté en repère tournant avec le moyeu, et en communication par des conduites rigides avec chacune des entrées et sorties du ou des vérins rotatifs des dispositifs hydrauliques de commande individuelle du pas des pales.

L'invention a enfin pour objet un rotor à pas variable pour giravion, utilisable notamment comme rotor principal d'hélicoptère ou comme hélice basculante de convertible, et comprenant un moyeu de rotor entraîné en rotation autour d'un axe de rotation du rotor par un mât-rotor, des pales dont chacune est retenue au moyeu par l'intermédiaire d'au moins un organe de liaison rigide en traction mais souple en flexion et torsion, retenant la pale à l'encontre de la force centrifuge et autorisant les oscillations de battement et de traînée de la pale correspondante, ainsi que les variations angulaires de son pas, sous l'effet d'un organe rigide en flexion et torsion, qui est lié à la pale. Selon l'invention, un tel rotor comprend de plus, pour chaque pale, une installation de commande de pas en repère tournant, comportant un servo-distributeur hydraulique rotatif qui alimente un dispositif hydraulique de commande individuelle du pas d'une pale selon l'invention et tel que défini ci-dessus, et monté de sorte que le stator du ou des vérins rotatifs de ce dispositif hydraulique soit retenu sur le moyeu et immobilisé en rotation sur ce dernier autour de l'axe de pas de la pale correspondante, alors que le rotor du ou des vérins rotatifs est lié en rotation à l'organe rigide en flexion et torsion, autour de cet axe de pas. De plus, lorsque le moyeu du rotor comporte un corps central qui est tubulaire, solidaire d'une extrémité du mât-rotor également tubulaire, et coaxial à ce mât-rotor, il est avantageux que, selon l'invention, les vérins rotatifs de tous les dispositifs hydrauliques de commande individuelle du pas d'une pale soient raccordés aux servo-valves du distributeur hydraulique logé dans le corps central du moyeu et raccordé à au moins un circuit hydraulique de puissance, lui-même au moins partiellement logé dans le mât-rotor. Dans la configuration la plus courante et la plus pratique, dans laquelle les servo-valves sont à commande électrique, il est de plus avantageux que le mât-rotor loge également un collecteur électrique de transfert, d'une part, des signaux de commande des servo-valves, et d'autre part, de signaux provenant de détecteurs de position des différentes pales du rotor.

D'une manière générale, un rotor selon l'invention comprend avantageusement un moyeu de rotor conforme à l'invention, et tel que défini ci-dessus, ce moyeu de rotor étant lui-même équipé de dispositifs de commande individuelle du pas d'une pale qui est conforme à l'invention et également tel que défini ci-dessus.

La présente invention sera mieux comprise, et d'autres caractéristiques et avantages de l'invention ressortiront à la lecture de la description donnée ci-dessous, à titre non limitatif, d'un exemple préféré de réalisation, et d'une variante décrits en référence aux dessins annexés sur lesquels :

La figure 1 est une vue schématique partielle du moyeu d'un rotor principal quadripale d'hélicoptère, représenté en partie en plan et en partie en coupe par un plan perpendiculaire à l'axe de rotation du rotor et passant par l'axe d'un bras radial de ce moyeu de rotor qui est équipé d'un dispositif hydraulique de commande individuelle du pas de la pale correspondante,

La figure 2 est une vue, à plus grande échelle, d'une partie de la figure 1 qui représente le dispositif hydraulique de commande individuelle du pas correspondant,

Les figures 3, 4, 5 et 6 sont des vues en coupe transversale du dispositif hydraulique et du bras du moyeu des figures 1 et 2 respectivement selon III-III, IV-IV, V-V, et VI-VI des figures 1 et 2.

La figure 7 est une vue schématique en coupe transversale selon VII-VII de la figure 8, relative à un dispositif hydraulique de rattrapage automatique de jeu, équipant une variante du dispositif hydraulique de commande individuelle de pas d'une pale, tel que représenté sur les figures 1 à 6,

La figure 8 est une vue schématique en coupe selon VIII-VIII de la figure 7, et

La figure 9 est une vue schématique et partielle représentant un détail de la figure 8.

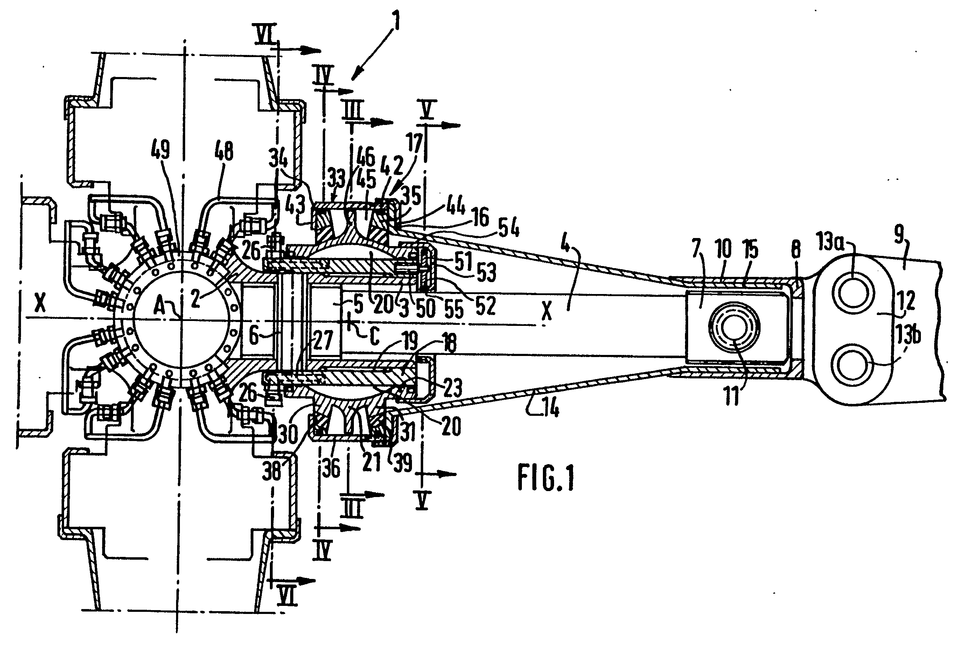

Le rotor principal quadripale d'hélicoptère représenté sur la figure 1 a un moyeu 1 comprenant un corps central tubulaire 2, d'axe A confondu avec l'axe de rotation du rotor, qui est également l'axe d'un mât-rotor tubulaire (non représenté) dont l'extrémité supérieure est solidaire du corps central tubulaire 2. Le moyeu 1 comprend également quatre extensions 3, tubulaires et radiales par rapport à l'axe A, et chacune de forme générale cylindrique, dont les axes perpendiculaires à l'axe A sont régulièrement répartis en direction circonférentielle autour de cet axe A. Ces quatre extensions tubulaires 3 sont d'une seule pièce avec le corps central tubulaire 2, avec lequel elles forment une tête de rotor rigide, entraînée en rotation par le mât-rotor autour de l'axe de rotation A.

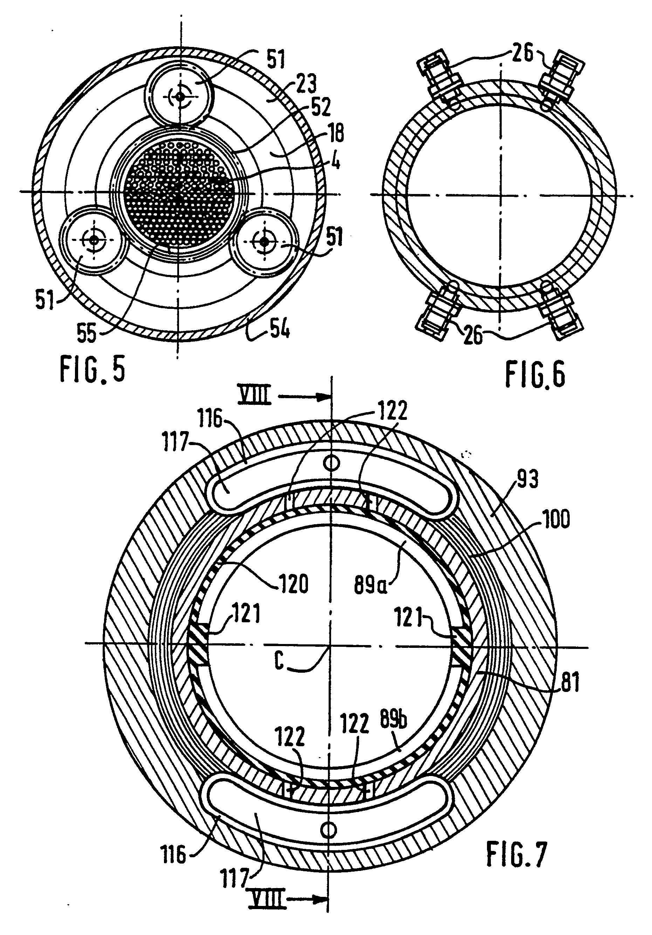

Pour la liaison de chacune des quatre pales du rotor au moyeu 1, ce dernier comprend également un bras allongé 4, constituant un tirant radial (par rapport à l'axe A) de retenue de la pale à l'encontre de la force centrifuge qui la sollicite en service. Ce bras allongé 4 est un élément de liaison rigide en traction et souple en flexion et en torsion autour de son axe longitudinal X-X, et il est essentiellement constitué, par exemple, d'un faisceau longitudinal de fils métalliques ou fibres synthétiques ou minéraux, à forte résistance mécanique, individuellement enrobés d'une résine synthétique, et agglomérés les uns aux autres par un élastomère vulcanisé, comme représenté schématiquement en coupe sur la figure 5, de sorte que ce bras souple 4 transmette, avec de faibles allongements axiaux, les efforts centrifuges en provenance de la pale correspondante, en service, et autorise, par flexion, les mouvements de battement et de traînée de cette pale, ainsi que, par torsion, les variations de l'incidence de cette pale.

Eventuellement, ce faisceau longitudinal, constitutif du bras souple 4, est creux ou tubulaire et renferme un amortisseur intégré des déformations en traînée, cet amortisseur intégré comportant une poche étanche enveloppant au moins une plaque de cisaillement d'un gel visqueux de silicone remplissant la poche, comme décrit dans la demande de brevet français de la demanderesse N° 87 07 778.

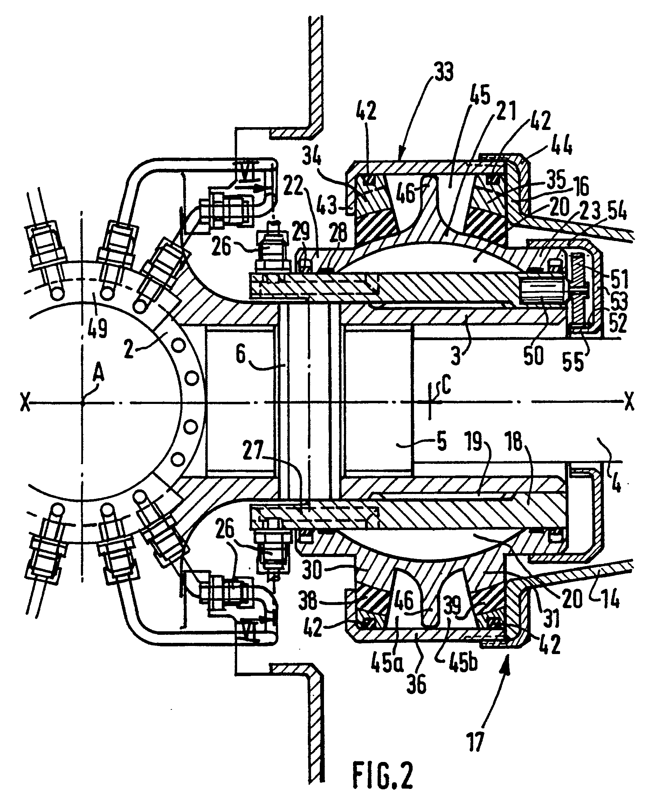

Comme représenté également sur les figures 2 et 4 l'extrémité radiale interne du bras souple 4, conformée en partie d'emplanture 5 surépaissie ou protégée par une douille axiale, est emmanchée et retenue dans l'extension cylindrique tubulaire 3 du moyeu 1, au-delà du centre C d'un dispositif hydraulique de commande individuelle du pas de la pale, qui est décrit ci-dessous, et vers l'axe A du moyeu 1, par une broche cylindrique et transversale 6, d'axe contenu dans le plan de rotation du rotor et perpendiculaire à l'axe longitudinal X-X du bras souple 4, ainsi retenu sensiblement coaxialement dans l'extension tubulaire 3. Cette broche 6 est elle-même tubulaire et logée et retenue dans des perçages cylindriques coïncidants, qui traversent l'emplanture 5 et des parties diamétralement opposées de l'extension tubulaire 3.

L'extrémité radiale externe 7 du bras souple 4, qui est de forme cylindrique, surépaissie et, éventuellement, protégée par une douille axiale, est solidarisée à une pièce intermédiaire de liaison 8, servant d'attache au pied de la pale 9 correspondante. Cette pièce de liaison 8 est conformée, radialement vers l'intérieur (vers le corps de moyeu 2) en manchon cylindrique 10, ouvert vers le corps de moyeu 2, et dans lequel l'extrémité externe 7 du bras souple 4 est engagée et retenue par un dispositif de fixation à broche transversale 11, d'axe parallèle à l'axe de rotation A du rotor, tandis que, radialement vers l'extérieur, la pièce de liaison 8 est conformée en double chappe externe 12 à deux branches (dont une seule est visible sur la figure 1) qui sont parallèles et symétriques par rapport au plan de traînée de la pale 9, et percées chacune de deux alésages coaxiaux avec les alésages de l'autre branche, afin de recevoir deux broches $13_a$ et $13_b$ de retenue du pied de pale 9, les axes des deux broches $13a$ et $13b$ étant situés dans un même plan, perpendiculaires à l'axe longitudinal X-X du bras souple 4 et au plan de rotation du rotor, et parallèles à l'axe de rotation A et à celui de la broche 11.

Pour relier chaque pale, telle que la pale 9, au moyeu 1, ce dernier comprend également une manchette tubulaire 14, qui entoure sensiblement coaxialement et sans contact le bras souple 4, jusqu'à proximité du corps de moyeu 2. Cette manchette 14, rigide en flexion et torsion, a essentiellement une forme tronconique qui converge vers son extrémité radiale externe 15, de forme cylindrique, par laquelle la manchette 14 est engagée, autour de l'extrémité externe 7 du bras souple 4, à l'intérieur du manchon 10 de la pièce de liaison 8, et retenue dans ce manchon 10 par le dispositif de fixation à douille 11, de sorte que les extrémités radiales externes 7 et 15 respectivement du bras 4 et de la manchette 14 sont solidaires l'une de l'autre.

Par son extrémité radiale interne, conformée en bride annulaire radiale 16, la manchette 14 prend appui sur l'extension radiale 3 correspondante du moyeu 1 par l'intermédiaire d'un dispositif d'ensemble 17, comprenant, d'une part, un palier combiné à rotule sphérique élastique et à amortisseur rotatif hydro-élastique incorporé, et, d'autre part, un vérin hydraulique rotatif à double corps et double effet, incorporé dans un palier cylindrique lisse d'incidence et d'encastrement sur le moyeu, et intégré à l'intérieur de la rotule sphérique qui est elle-même centrée sur l'axe du palier cylindrique, ce dernier étant coaxial à l'extension tubulaire 3 du moyeu 1 et au bras souple 4, autour de l'axe longitudinal X-X, l'empilage axial du palier d'incidence et d'encastrement et du vérin hydraulique rotatif formant le coeur d'un dispositif hydraulique de commande individuelle du pas de la pale 9, dont l'alimentation hydraulique est assurée par un servo-distributeur de préférence à commande électrique, propre à chaque pale et monté en repère tournant sur le moyeu 1.

Ce dispositif d'ensemble 17, appelé globalement dispositif de commande individuelle du pas de la pale 9, est ainsi installé sensiblement à l'intérieur de l'extrémité radiale interne de la manchette rigide 14, qui est solidarisée à la pale 9, en service, par la pièce de liaison 8, afin d'introduire directement la commande d'incidence de la pale 9 au plus près de l'emplanture 5 du bras de liaison souple 4 correspondant.

Lorsque le rotor tourne, les pales telles que la pale 9, alors retenue en position d'utilisation par les

deux broches $13_a$ et $13_b$, sur la pièce de liaison intermédiaire 8, sont soumises à des mouvements de battement et de traînée, et à des variations angulaires en incidence, que permettent les bras souples tel que le bras 4.

Dans le dispositif d'ensemble 17, le palier cylindrique lisse d'articulation d'incidence a pour fonction de permettre les variations angulaires de la pale autour de son axe de pas, dans le prolongement de l'axe X-X du bras souple 4, et le vérin hydraulique rotatif a pour fonction de commander ces variations angulaires. De plus, l'articulation à rotule sphérique de ce dispositif 17 comporte des éléments en élastomère qui lui confèrent son caractère élastique, et elle a pour fonction d'autoriser par la déformation en cisaillement de ces éléments en élastomère, une liberté relative de mouvement ou d'oscillation en battement et en traînée de la pale, en étant rigide vis-à-vis des rotations autour de l'axe de pas de la pale 9, de sorte que cette rotule fait office d'appui et de centrage pour les mouvements angulaires en battement et en traînée, tandis que l'amortisseur rotatif hydro-élastique intégré, fonctionnant par laminage, à l'aide de palettes, d'un fluide hydraulique tel qu'un gel de silicone de viscosité élevée, a pour fonction essentielle d'amortir les oscillations angulaires en traînée de la pale.

Jusqu'à ce point de la description, les positions axiales ou radiales internes ou externes ont été repérées en général par rapport à l'axe A du rotor. Pour la description qui suit de l'ensemble 17 constitué d'un vérin hydraulique de rotation intégré dans un palier lisse et cylindrique d'incidence et d'encastrement sur le moyeu, selon un empilage axial combiné à une rotule sphérique de rappel élastique en battement et en traînée et à amortisseur interne hydro-élastique des oscillations angulaires de traînée de la pale correspondante, et qui fait plus particulièrement l'objet de l'invention, les positions axiales ou radiales internes ou externes seront en général indiquées ci-dessous par référence à l'axe longitudinal X-X commun à la pale 9, en position d'utilisation, et à son bras souple 4. En référence aux figures 1 à 6, et selon un exemple de réalisation qui semble être, pour la demanderesse, le meilleur, l'ensemble 17 à palier sphérique amorti en traînée et incorporant un vérin rotatif de commande du pas de la pale 9 est constitué de la manière suivante, en partant de l'intérieur (vers l'axe X-X) pour aller radialement vers l'extérieur.

Dans cet ensemble 17, le vérin hydraulique rotatif comprend un stator, comportant un manchon cylindrique 18, qui est emmanché coaxialement sur l'extension cylindrique 3, et dont l'alésage interne présente, dans sa partie centrale, des cannelures axiales 19, en saillie radiale vers l'intérieur et en prise avec des cannelures axiales complémentaires en saillie radiale vers l'extérieur, et présentées sur la surface latérale externe de l'extension 3, de sorte que le manchon 18 du stator de vérin soit immobilisé en rotation sur l'extension 3 (autour de l'axe X-X). Mais le manchon 18 est laissé libre en translation, dans le sens axial (selon X-X) sur l'extension 3, afin d'absorber ou de compenser les faibles déplacements axiaux de l'ensemble 17 dus à l'allongement du bras souple 4 sous l'effet de la force centrifuge. De plus, la partie lisse de l'alésage du manchon 18 qui est axialement adjacente aux cannelures 19, du côté du corps de moyeu 2, forme une butée radiale maintenant la douille 6 dans les perçages de l'extension 3, en position de retenue du bras souple 4.

Le stator de vérin comporte également deux palettes de vérin fixes 20, diamétralement opposées, et en saillie radialement vers l'extérieur sur la surface latérale externe et cylindrique du manchon 18. Chaque palette fixe 20 a la forme d'un segment de sphère centré en C sur l'axe X-X, disposé axialement et dont la face radiale externe est convexe, tandis que sa face radiale interne a la forme d'une portion de cylindre par laquelle la palette 20 est appliquée contre la face latérale externe cylindrique du manchon 18, sur laquelle elle est solidarisée par exemple par soudure, par bombardement d'un faisceau électronique (voir figures 1 à 4).

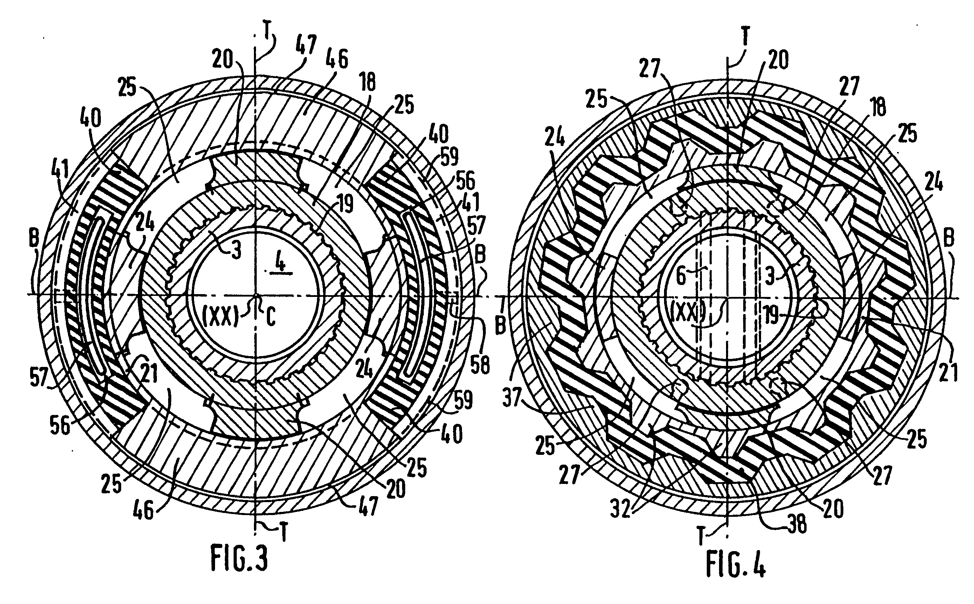

Le vérin hydraulique rotatif comprend également un rotor 21, qui constitue simultanément, d'une part, l'armature radiale interne et rigide de l'articulation à rotule sphérique visco-élastique, et, d'autre part, le stator de l'amortisseur rotatif hydro-élastique, qui seront décrits plus complètement ci-dessous. Cette armature 21, de forme tubulaire et entourant le stator de vérin 18-20, présente, dans sa partie centrale, une cavité interne sphérique centrée en C, ou plus précisément la surface radiale interne de cette partie centrale est celle d'une calotte sphérique usinée en creux dans l'armature 21, et qui débouche axialement vers l'extérieur de l'armature 21 par des alésages ménagés dans les deux parties d'extrémité axiale cylindriques 22 et 23 de cette armature 21, afin que ces deux parties cylindriques 22 et 23 présentent chacune une portée axiale lisse en regard d'une portée axiale lisse sur une portion de la face latérale externe du manchon cylindrique 18, située axialement d'un côté ou de l'autre des palettes fixes 20. Le rotor de vérin comporte également deux palettes mobiles 24, diamétralement opposées (voir figures 3 et 4), qui sont décalées de 90° en direction circonférentielle autour de l'axe X-X, par rapport aux palettes fixes 20 du stator. Ces palettes mobiles 24 ont également la forme de segments de sphère centrés en C et disposés axialement, mais elles sont solidarisées, par exemple également par soudage par bombardement électronique, par leur face radiale externe convexe contre la face radiale interne concave de la cavité sphérique de l'armature 21, et s'étendent en saillie radiale vers l'intérieur, de sorte que leur face radiale interne, en forme de portion de cylindre, soit à proximité immédiate et en regard de la face externe cylindrique du manchon 18, entre deux palettes fixes 20 qui, elles-mêmes, présentent leur face radiale externe convexe à proximité immédiate et en regard de la face interne sphérique de l'armature 21.

La face interne sphérique de l'armature 21 et les deux palettes de rotor 24 délimitent ainsi avec la face externe cylindrique du manchon 18 et les deux palettes de stator 20 quatre chambres internes 25 à volume variable, dont chacune communique avec l'un respectivement de quatre raccords hydrauliques démontables 26, montés radialement sur l'extérieur de l'extrémité axiale du manchon 18, du côté du corps de moyeu 2 (voir figures 1, 2 et 6), par un canal axial 27 percé dans l'épaisseur de la partie axiale correspondante du manchon 18, et tel que les extrémités de chaque canal débouchent radialement, l'une au niveau du raccord 26 correspondant, et l'autre dans la chambre 25 correspondante, à proximité de la palette de stator 20 qui délimite cette chambre 25 considérée (voir figure 4). Les quatre raccords 26 associés à un vérin hydraulique rotatif ainsi montés sur le moyeu 1, sont reliés à un servo-distributeur hydraulique (non représenté) tournant avec le moyeu 1 de façon à commander l'alimentation ou la vidange en fluide hydraulique sous haute pression (de l'ordre de 20 MPa) de chacune des quatre chambres hydrauliques 25. L'étanchéité entre ces quatre chambres 25, c'est-à-dire l'étanchéité, d'une part, entre la face convexe de l'extrémité radiale externe des palettes de stator 20 et la face interne concave et sphérique de l'armature 21, et d'autre part, entre la face concave et cylindrique de l'extrémité radiale interne des palettes de rotor 24 et la face externe convexe et cylindrique du manchon 18, est assurée par le laminage important du fluide hydraulique entre ces faces en regard, en raison du faible jeu radial entre les bouts libres des palettes 20 et 24 et les surfaces en regard sur l'armature 21 et le manchon 18, ainsi que d'une longueur de laminage importante, due à la dimension axiale des palettes 20 et 24.

Le rotor du vérin ou armature interne 21 peut tourillonner, autour de l'axe X-X, sur le manchon cylindrique 18 du stator de vérin grâce aux deux paliers lisses, disposés axialement de part et d'autre des palettes 20 et 24 du vérin rotatif, et formés chacun par les deux portées axiales en regard l'une de l'autre, et dont l'une est la portée interne présentée par l'extrémité axiale cylindrique 22 ou 23 de l'armature 21, et l'autre la portée externe sur la portion en regard de la face externe cylindrique du manchon 18. L'étanchéité entre le manchon 18 et l'armature 21 est assurée, au niveau des ces deux paliers lisses, par des joints ou garnitures d'étanchéité toriques 28 et 29, mais il est possible d'équiper chacun de ces deux paliers lisses d'au moins une bague auto-lubrifiante, associée à un dispositif hydraulique de rattrapage automatique du jeu radial du palier, comme décrit plus loin ci-dessous en référence à une variante de réalisation.

On réalise ainsi un empilage axial d'un vérin hydraulique rotatif (18-20, 21-24) et d'un palier cylindrique lisse (18,22-23) d'incidence et également d'encastrement sur le moyeu 1, par l'intermédiaire du manchon 18, le vérin hydraulique rotatif étant intégré dans le palier cylindrique, entre deux paires espacées axialement de portées axiales en regard et coopérant l'une avec l'autre.

En variante, il est possible de remplacer les deux paliers lisses élémentaires situés de part et d'autre des palettes du vérin 20 et 24 par des paliers à aiguilles.

Pour constituer la rotule sphérique élastique, l'armature interne 21 présente, entre ses deux parties cylindriques d'extrémité axiale 22 et 23 intégrées aux paliers cylindriques du vérin rotatif, deux couronnes annulaires crantées (ayant des crans) ou crénelées 30 et 31, en saillie radiale vers l'extérieur de l'armature 21, et elles-mêmes espacées axialement l'une de l'autre. Ces deux couronnes crénelées 30 et 31, symétriques l'une de l'autre par rapport au plan médian du dispositif passant par le centre C et perpendiculaire à l'axe X-X, présentent chacune sur toute leur périphérie des créneaux ou crans réguliers tels que 32 (voir figure 4) qui apparaissent en saillie radiale vers l'extérieur, et dont la face radiale externe de chacun est une face convexe à courbure centrée en C, les créneaux 32 ayant sensiblement la forme de petits segments de sphère délimitant entre eux des cannelures en portions sphériques espacées, également centrées en C.

La rotule sphérique élastique comprend également une armature radiale externe, repérée dans son ensemble en 33, et constituée de deux couronnes annulaires 34 et 35, reliées l'une à l'autre par une chemise tubulaire périphérique 36. Les deux couronnes 34 et 35 sont axialement espacées l'une de l'autre, de sorte que chacune soit radialement en regard et autour de l'une des deux couronnes 30 et 31 de l'armature interne 21. De même, les deux couronnes externes 34 et 35, qui sont symétriques l'une de l'autre par rapport au plan médian défini ci-dessus, et qui ont des faces radiales externes cylindriques, sont des couronnes crénelées ou crantées présentant des créneaux ou crans réguliers tels que 37 sur toute leur périphérie interne, et qui apparaissent en saillie radiale vers l'intérieur. Ces créneaux 37 ont chacun une face radiale interne qui est une face concave à courbure centrée en C et ont chacun sensiblement la forme d'un petit segment dans la face libre duquel on a usiné en creux une petite portion de surface sphérique, et les créneaux 37 délimitent entre eux des cannelures également à fonds concaves en forme de portions de surface sphérique interne centrée en C (voir figure 3). En outre, il existe un décalage en direction circonférentielle, autour de l'axe X-X, entre les crans 37 des couronnes externes 34 et 35 et les crans 32 des couronnes internes 30 et 31, de sorte que chaque cran interne 32 soit en saillie vers l'extérieur en regard d'une cannelure ou d'un creux entre deux crans externes 37 voisins, et, réciproquement, que chaque cran externe 37 soit en saillie vers l'intérieur en regard d'une cannelure ou d'un creux entre deux crans internes 32 voisins.

Pour former la rotule sphérique élastique, l'armature externe 33 est reliée à l'armature interne 21 par des éléments en élastomère et en particulier chacune des couronnes externes et rigides 34 et 35 est reliée à celle des deux couronnes internes et rigides 30 et 31 qu'elle entoure par un élément en élastomère 38 ou 39, également en forme de couronne crénelée, qui remplit l'espace entre les parois en regard des deux couronnes d'armature ainsi reliées l'une à l'autre. Chaque couronne en élastomère 38 et 39 est ainsi liée par adhérisation ou vulcanisation de toutes les parties de sa paroi radiale interne contre les petites portions de surface sphérique des crans internes 32 et des fonds des cannelures entre ces derniers, ainsi que contre les faces latérales des crans 32 de la couronne d'armature interne 30 ou 31 correspondante, et, de même, chaque couronne d'élastomère 38 et 39 est liée de la même façon par toutes les parties de sa paroi radiale externe contre les petites portions concaves de surface sphérique des crans externes 37 et des fonds des cannelures entre ces crans 37, ainsi que contre les faces latérales des crans 37 de la couronne d'armature externe 34 ou 35 correspondante.

De plus, les deux couronnes d'élastomère 38 et 39 sont reliées axialement l'une à l'autre par deux blocs massifs d'élastomère 40, qui, comme représenté sur la figure 3, sont diamétralement opposés par rapport au centre C et à l'axe X-X, et ont la forme de portions de calotte sphérique centrée en C, et adhérisées par leur face concave radiale interne sur la portion de surface convexe et sphérique délimitée sur la face radiale externe de l'armature 21, entre les couronnes crénelées 30 et 31 de cette armature 21. Chacun de ces blocs massifs 40, qui est d'une seule pièce avec les couronnes d'élastomère 38 et 39, s'étend en direction circonférentielle autour de l'axe X-X sur un secteur angulaire d'environ 90°, et symétriquement de part et d'autre du plan de battement B-B (voir figure 3) de la pale correspondante, et de part et d'autre du plan médian et radial passant par le centre de courbure C.

Dans l'évidement radial délimité entre les deux couronnes crénelées 30 et 31 de l'armature interne 21, entre les deux couronnes d'élastomère 38 et 39, et entre les deux couronnes crénelées 34 et 35 de l'armature externe 33, chacun des deux blocs massifs 40 s'étend radialement jusqu'à une portion 41 radialement surépaissie vers l'intérieur et en regard, sur la chemise périphérique ou externe 36, qui est montée amovible et avec étanchéité par des joints toriques 42 autour des couronnes externes 34 et 35 que cette chemise 36 relie axialement l'une à l'autre, la chemise 36 ayant de plus un collet radial interne 43 par lequel elle est en butée contre la face axiale interne de la couronne externe 34 la plus proche du corps de moyeu 2 (voir figures 1 et 2). La chemise 36 est solidarisée avec l'armature externe 33 à la manchette rigide 14 par une collerette radiale épaulée 44 de fixation et de centrage qui est vissée sur l'extrémité de cette chemise 36 et qui maintien la couronne externe 35 en position axiale externe contre la bride radiale 16 à l'extrémité axiale interne de la manchette 14, cette bride radiale 16 étant serrée entre la couronne 35 et la collerette radiale épaulée 44 dont l'épaulement axial vissé sur la chemise 36, la maintient en position de coopération étanche contre la couronne externe 35.

Dans la rotule sphérique ainsi complétée, les couronnes d'élastomère 38 et 39 ainsi que les deux blocs d'élastomère 40 autorisent, par le cisaillement de l'élastomère qui les constitue, les mouvements oscillatoires de la pale 9 en battement et en traînée. Ces mouvements oscillatoires sont transmis par la manchette rigide 14 à l'armature externe 33, qui rotule ainsi autour de l'armature interne 21 en battement (perpendiculairement au plan de la figure 1) et en traînée (dans le plan de la figure 1).

A ce point de la description, l'ensemble 17 est donc un ensemble intégré comportant un palier cylindrique et sec, un vérin hydraulique rotatif, et une rotule sphérique élastique, le palier cylindrique formant l'articulation d'incidence encastrée sur l'extension tubulaire du moyeu 1, et libre en translation avec un jeu axial suffisant pour permettre les déplacements axiaux de la rotule et du vérin, qui sont nécessaires compte-tenu de la force centrifuge sollicitant l'ensemble en fonctionnement et des tolérances de montage, le vérin hydraulique rotatif commandant la rotation de la pale 9 et de sa manchette 14 autour de son axe de pas X-X, et la rotule autorisant les mouvements oscillatoires de la pale et de la manchette 14 en traînée et battement.

L'ensemble 17 comporte de plus un amortisseur hydraulique rotatif de ces mouvements de traînée.

A cet effet, chacun des deux logements 45 s'étendant essentiellement dans l'armature externe 33, radialement et en direction circonférentielle, entre les deux blocs d'élastomère 40, c'est-à-dire chacun des deux logements 45 symétriques l'un de l'autre par rapport au centre C, à l'axe X-X et à l'axe de battement B-B, et occupant des positions alternées en direction circonférentielle avec les blocs d'élastomère 40, est un logement 45 rempli de fluide hydraulique laminé par une palette d'amortisseur 46. Chacun des deux logements 45 s'étend symétriquement de part et d'autre du plan de traînée passant par l'axe T-T de la pale 9 et est délimité en direction circonférentielle, par les deux blocs 40, latéralement entre les faces crantées en regard des deux couronnes internes 30 et 31, des deux couronnes d'élastomère 38 et 39, et des deux couronnes externes 34 et 35, radialement vers l'extérieur par la face cylindrique de la chemise 36, et radialement vers l'intérieur par la portion de la face radiale externe et convexe de l'armature interne 21 qui est limitée entre les deux couronnes internes 30 et 31, et qui présente, en saillie radiale vers l'extérieur, les deux palettes de laminage 46, dont chacune est reçue dans l'un des logements 45. Chacune des palettes rigides 46 est solidaire par son pied de la face externe de l'armature interne 21, sur laquelle elle est rapportée et fixée de manière inamovible par exemple par soudage, par bombardement électronique, ou avec laquelle elle est usinée d'une seule pièce. Les dimensions des palettes 46 sont telles que leur extrémité libre (en position radiale externe) n'est séparé que d'un faible intervalle radial calibré 47 de la surface interne et cylindrique de la chemise 36, qui ferme de manière étanche les logements 45 radialement vers l'extérieur, alors que la fermeture étanche de ces logements 45, en direction latérale, est assurée, entre les deux armatures 21 et 33, par les couronnes crénelées en élastomère 38 et 39, qui autorisent les rotations relatives des armatures 21 et 33 en battement et en traînée autour du centre C.

Chacun des deux logements 45 est en communication avec l'extérieur du dispositif 17 par deux perçages latéraux (non représentés) ménagés en direction axiale, et dont l'un traverse la partie supérieure de la couronne externe 35, par laquelle l'armature externe 33 est fixée à la manchette 14, et est raccordée à une valve de remplissage hydraulique (non représentée) montée sur cette couronne 35 et accessible de l'extérieur, tandis que l'autre perçage traverse la partie inférieure de la couronne externe 34 la plus proche du corps de moyeu 2, et est raccordé à une valve de purge (non représentée) également accessible de l'extérieur.

Par la valve de remplissage, on peut ainsi remplir d'une huile ou d'un gel de silicone à viscosité élevée les logements 45 qui délimitent chacun une chambre interne d'un amortisseur hydraulique rotatif, dont le stator est formé par l'armature interne 21 de la rotule sphérique visco-élastique, formant également le rotor du vérin hydraulique rotatif, ce stator d'amortisseur 21 portant les deux palettes de laminage 46 qui sont engagées chacune dans une chambre interne d'amortisseur 45, partiellement délimitée dans le rotor d'amortisseur qui est constitué par l'armature externe 33 de la rotule sphérique élastique et lié par la manchette 14 à la pale 9. Chaque palette 46 subdivise la chambre interne d'amortisseur 45 qui la loge en deux chambres d'amortissement 45a et 45b, dont l'une diminue de volume et est mise en compression, et dont l'autre augmente de volume et est mise en détente, lorsque le rotor d'amortisseur 33 pivote par rapport au stator d'amortisseur 21, en rotation autour du centre C de la rotule sphérique, par cisaillement de l'élastomère des couronnes 38 et 39 et des blocs 40, en raison d'un débattement angulaire de la pale 9 en traînée, dans le plan de traînée T-T de la figure 3 qui est le plan des figures 1 et 2.

Ces augmentations et diminutions corrélatives des volumes des chambres 45a et 45b provoquent les passages forcés de l'huile ou du gel de silicone de la chambre comprimée, à volume décroissant, vers la chambre en détente, à volume croissant, au travers du petit passage de laminage 47 délimité entre le bout libre de chaque palette 46 et la portion de surface cylindrique en regard sur la face interne de la chemise externe 36.

Ce laminage de l'huile ou du gel entre les palettes 46 et la chemise 36 assure un amortissement du mouvement de rotation, et, pour amortir l'oscillation angulaire en traînée, les palettes 46 sont de la plus grande efficacité lorsqu'elles sont symétriques l'une de l'autre par rapport au plan de battement B-B et perpendiculaires à l'axe longitudinal X-X du bras souple 4 et de la pale correspondante 9.

A ce point de la description, l'ensemble 17 comprend un amortisseur hydro-élastique rotatif, intégré dans la rotule sphérique élastique, qui est elle-même combinée au vérin hydraulique rotatif qu'elle entoure et qui est à son tour intégré dans un palier cylindrique d'incidence.

L'étanchéité des chambres 45 de l'amortisseur hydraulique, dont le rotor et le stator sont respectivement constitués par l'armature externe 33 et l'armature interne 21 de la rotule sphérique, est assurée par les éléments en élastomère 33, 39 et 40, qui, dans cette rotule, autorisent les oscillations en battement et en traînée.

Ces éléments en élastomère 38, 39 et 40 assurent le centrage du rotor d'amortisseur 33 vis-à-vis du stator d'amortisseur 21, en même temps que les palettes d'amortisseur 46 assurent un amortissement en traînée par le laminage de l'huile ou du gel de silicone, au cours des déplacements angulaires en traînée à partir de la position radiale initiale de la pale 9 en service, comme au cours des retours élastiques vers cette position initiale.

Mais, en outre, du fait de la structure crantée ou crénelée des couronnes d'élastomère 38 et 39, prisonnières entre les crans et cannelures 32 et 37 en portions de sphère des couronnes rigides internes 30, 31 et externes 34, 35 respectivement de l'armature interne de la rotule sphérique ou rotor de vérin 21 et de l'armature externe de rotule sphérique ou rotor d'amortisseur 33, la transmission du couple de commande du pas de la pale, entre le rotor 21 du vérin rotatif et le rotor 33 de l'amortisseur, solidarisé à la manchette 14 de liaison à la pale 9, est assurée au travers de l'élastomère avec la très grande rigidité en rotation autour de l'axe X-X nécessaire pour commander la variation d'incidence de la pale 9 à partir du vérin hydraulique rotatif (18-20, 21-24).

Il en résulte que l'alimentation en fluide hydraulique sous pression de deux chambres de vérin 25 diamétralement opposées, par le servo-distributeur à travers les raccords 26 correspondants, alors que lesdits raccords 26 en communication avec les deux autres chambres 25 opposées du vérin autorisent la vidange de ces deux autres chambres 25, entraîne l'augmentation du volume des deux chambres 25 alimentées, et corrélativement la diminution du volume des deux autres chambres 25, ce qui provoque la rotation des deux palettes de rotor 24 et du rotor 21 du vérin dont elles sont solidaires autour du manchon cylindrique 18 du stator de vérin. Cette rotation du rotor-armature interne de la rotule sphérique est transmise par les couronnes crénelées d'élastomère 39 et 38, rigidifiées en direction circonférentielle, à l'armature externe 33, elle-même solidaire de la manchette 14 et de la pale 9, en rotation autour de l'axe X-X, de sorte que la position angulaire de la pale en incidence est changée.

Chacun des seize raccords 26 (quatre raccords pour le vérin hydraulique rotatif de chacune des quatre pales du rotor) est raccordé par une tuyauterie rigide, telle que 48 sur la figure 1, à un servo-distributeur hydraulique monté en repère tournant sur le corps central 2 du moyeu 1, à l'intérieur de ce corps central 2 tubulaire et dont seul le socle 49 est représenté. Le servo-distributeur hydraulique est lui-même alimenté, sous une pression d'environ 20 MPa, par l'un des circuits hydrauliques de puissance de l'hélicoptère, par l'intermédiaire d'un collecteur hydraulique (non représenté) monté dans le mât rotor tubulaire.

Mais il est également possible d'assurer l'alimentation hydraulique du servo-distributeur par deux circuits hydrauliques indépendants. En plus des composants habituels des circuits hydrauliques, tels que les réservoirs ou bâches, accumulateurs, clapets de surpression, et, éventuellement, refroidisseurs ou radiateurs, ces circuits indépendants, plus ou moins complètement logés dans le mât rotor tubulaire, peuvent comprendre deux pompes hydrauliques montées dans le mât rotor, et dont l'un des deux éléments en rotation relative que sont le rotor et le stator de chaque pompe, est lié au mât rotor et entraîné en rotation avec lui, tandis que l'autre élément est lié à la structure de l'hélicoptère.

Le servo-distributeur est équipé de servo-valves à étage de puissance hydraulique et à étage de pilotage électrique, de tout type convenable connu. Ces servo-valves sont pilotées par des signaux électriques élaborés dans un circuit électronique de traitement d'ordres de commande, qui proviennent de la manoeuvre par le pilote d'au moins un organe de commande, tel qu'un levier ou manche à balai, et d'informations relatives à la position des pales et qui proviennent de détecteurs de position.

De manière classique, ce circuit électronique de traitement comprend une centrale de commande, recevant les ordres électriques de commande pilote et les signaux électriques de sortie des détecteurs de position, et préparant les signaux électriques de pilotage des servo-valves qui sont transmis à ces dernières. Ce circuit électronique comprend également un collecteur électrique (non représenté), monté dans le mât rotor, pour assurer le transfert, d'une part, des signaux électriques de sortie des détecteurs de position associés aux pales vers la centrale de commande, et, d'autre part, des signaux électriques de pilotage des servo-valves provenant de la centrale de commande et transmis aux servo-valves, montées en repère tournant sur le servo-distributeur hydraulique.

Il est à noter que les servo-valves de distribution hydraulique peuvent être installées au plus près de chaque vérin hydraulique rotatif (par exemple à la place des raccords 26 à l'extrémité des manchons 18), ce qui est avantageux pour améliorer la réponse de chaque vérin hydraulique rotatif de commande du pas d'une pale aux ordres de commande à haute fréquence, comme cela est le cas dans le cadre d'une commande multicyclique, pour le contrôle actif des vibrations.

Pour assurer la redondance nécessaire au niveau de la détection de la position angulaire de chaque pale autour de son axe de pas X-X, la servo-commande électro-hydraulique rotative double corps combinée à chaque pale 9, et comprenant le vérin hydraulique rotatif, les quatres servo-valves qui lui sont associées dans le servo-distributeur hydraulique et les quatre tuyauteries hydrauliques 48 de liaison du socle 49 du distributeur aux raccords 26, comprend en outre un ensemble de trois détecteurs ou capteurs de position par pale. Dans cet exemple, chaque capteur de position 50, installé dans un évidement axial ménagé dans l'épaisseur de la partie d'extrémité axiale du manchon cylindrique 18 qui est tournée vers la pale 9, est un capteur du type rotatif à induction. Ce capteur 50 peut être un transducteur de position en rotation, tel que ceux commercialisés sous le nom de marque de "FARRAND INDUCTOSYN" par la société INDUCTOSYN INTERNATIONAL CORPORATION, pour la mesure précise de déplacements angulaires, et qui font application d'un principe de mesure bien connu par couplage capacitif ou inductif entre des réseaux conducteurs liés à deux substrats rigides, sans contact l'un avec l'autre, et dont l'un tourne par rapport à l'autre. Dans chaque capteur de position 50, l'un des deux substrats est un organe périphérique fixé dans le logement du manchon cylindrique 18 du stator du vérin, tandis que l'autre substrat est un organe central rotatif, tournant dans l'organe périphérique autour d'un axe parallèle à l'axe X-X du vérin rotatif. Cet organe central du capteur 50 est solidaire en rotation autour de son axe d'un pignon 51, en saillie à l'extérieur du manchon 18, du côté de la pale 9.

Les trois capteurs 50 occupent des positions régulièrement réparties en direction circonférentielle autour de l'axe X-X comme représenté par la figure 5, et chacun des trois pignons 51 est en prise avec la denture radiale externe 52 d'une unique couronne annulaire dentée 53, solidaire en rotation du rotor 21 du vérin hydraulique rotatif correspondant. La couronne 53 a la forme d'un anneau de section transversale en U couché, dont la base forme un flasque radial, et dont une aile latérale, plus longue que l'autre, et en position radiale externe, s'étend axialement en collerette 54 autour de la partie d'extrémité cylindrique 23 du manchon 18, à laquelle elle est fixée, tandis que l'autre aile, en position radiale interne, forme une petite collerette 55 entourant avec du jeu radial le bras souple 4 correspondant, et portant la denture 52 de la couronne 53. Cette dernière forme simultanément ainsi un capot de protection non seulement des trois pignons 51, logés entre les collerette 54 et 55 et le flasque radial de la couronne 53, mais également de l'extrémité axiale externe du vérin hydraulique rotatif et du palier cylindrique d'incidence et d'encastrement sur le moyeu.

De la sorte, la rotation du rotor 21 autour du stator 18 du vérin hydraulique rotatif est transmise à la couronne 53, qui entraîne elle-même en rotation chacun des trois pignons 51, avec l'organe mobile du capteur 50 correspondant, et les signaux électriques de sortie des trois capteurs 50 sont transmis à la centrale de commande, qui en calcule la moyenne pour obtenir un signal représentatif de la position angulaire précise de la pale correspondante 9 autour de son axe de pas X-X.

Dans l'ensemble 17 décrit ci-dessus, afin d'améliorer le fonctionnement de l'amortisseur hydro-élastique de rotation intégré, à palettes 46 de laminage de l'huile ou du gel de silicone passant de l'une à l'autre des deux chambres 45a et 45b de chaque logement 45, pendant les oscillations angulaires en traînée de la pale 9 correspondante, il est indiqué de prévoir des moyens pour compenser les variations de volume de l'huile ou du gel de l'amortisseur, pouvant résulter éventuellement de différences entre les variations de volume des chambres d'amortissement comprimées et détendues 45a et 45b, et surtout des dilatations thermiques de cette huile ou de ce gel. A cet effet, deux logements 56, symétriques l'un de l'autre par rapport à l'axe X-X, sont ménagés chacun dans l'un des deux blocs d'élastomère 40, et s'étendent en direction circonférentielle symétriquement de part et d'autre du plan de battement B-B, et en alternance avec les logements 45 des palettes 46, dont ils restent séparés par des parties massives d'élastomère des blocs 40. En direction axiale, ces logements 56 s'étendent entre les couronnes rigides externes 34 et 35 de l'armature externe 33, et l'étanchéité de ces logements 56 est également assurée par l'élastomère des couronnes 38 et 39 et des blocs 40. Une vessie 57 en caoutchouc, étanche et gonflable, est disposée dans chaque logement 56 et est munie d'un petit tube de gonflage (non représenté) qui traverse un perçage latéral ménagé en direction axiale dans la couronne externe 35 par laquelle l'armature externe 33 est liée à la manchette rigide 14, et ce petit tube de gonflage est raccordé à une valve pneumatique de gonflage (également non représentée) montée à la sortie du perçage et accessible de l'extérieur du dispositif 17, du côté de la manchette 14.

De plus, chaque logement 56 est relié à chacun des deux logements 45 (recevant les palettes 46) par un passage calibré comportant un petit canal radial 58, centré sur l'axe de battement B-B et s'étendant radialement vers l'extérieur du logement 56, au travers de la partie en surépaisseur 41 de l'armature externe 33, jusqu'à la face cylindrique interne de la chemise externe 36, et un canal cintré 59, dans lequel débouche le canal radial 58, et qui relie l'un à l'autre les deux logements 45 et est délimité en direction circonférentielle par un jeu radial calibré entre la chemise 36 et la partie en surépaisseur 41 de l'armature externe 33 (voir figure 3).

On réalise ainsi dans chaque logement 56 et autour de la vessie étanche gonflable 57 que ce dernier contient, une chambre hydraulique qui est remplie d'huile ou de gel de silicone par les canaux calibrés 58 et 59, lors du remplissage des logements 45 par les valves de remplissage hydraulique associées.

Par les valves de gonflage pneumatique associées aux vessies gonflables et étanches 57, on gonfle ces dernières, ce qui a pour effet d'assurer une mise en pression statique de l'amortisseur hydro-élastique rotatif à palettes 46, pour lequel les chambres hydrauliques pressurisées dans les logements 56 constituent des chambres de compensation, dans lesquelles les compensations des variations de volume de l'huile ou du gel sont assurées par compression des vessies gonflées 57.

De plus, les canaux 58 et 59 de communication entre les chambres de compensation 57 et les chambres d'amortissement 45a et 45b dans les logements 45 sont calibrés de façon à constituer un filtre dynamique pour les fréquences de fonctionnement de l'amortisseur hydraulique rotatif.

En outre, afin d'améliorer la rotation du rotor 21 du vérin hydraulique autour du manchon cylindrique 18 du stator de ce vérin, au niveau du palier cylindrique d'articulation d'incidence et d'encastrement formé par les parties d'extrémité axiale cylindriques 22 et 23 du rotor 21 et par les portions en regard du manchon 18, dans le but de diminuer l'amplitude des efforts de commande nécessaires pour faire varier le pas de la pale 9, la garniture d'étanchéité montée en 29 dans chacune des portées cylindriques d'extrémité axiale du manchon 18 et axialement à l'extérieur, par rapport aux palettes 20 et 24 du vérin, du joint d'étanchéité torique 28 monté dans la même portée cylindrique, est remplacée par une bague auto-lubrifiante retenue dans une gorge annulaire ménagée dans la portée cylindrique correspondante.

Ainsi, l'ensemble combiné 17 permettant l'appui de l'extrémité axiale interne de la manchette 14 sur le moyeu 1 comporte, d'une part, un empilement axial d'une articulation de pas cylindrique et d'un rotor hydraulique rotatif à palettes, intégré dans l'articulation de pas réalisée sous la forme d'un palier d'incidence lisse comportant deux bagues auto-lubrifiantes espacées axialement de part et d'autre des palettes du vérin et maintenues chacune dans sa gorge de façon à être montées dans le rotor du vérin, en tournant sur et autour du manchon cylindrique 18 du stator de vérin, lequel manchon 18 est encastré et immobilisé en rotation sur l'extension tubulaire 2 du moyeu 1, et, d'autre part, et en série radiale et concentriquement, une articulation à rotule sphérique de battement et de traînée, à éléments élastiques, et dans laquelle est intégré un amortisseur hydro-élastique de rotation à palettes de laminage d'un fluide hydraulique.

Lorsqu'un ensemble combiné 17, tel que décrit ci-dessus, comporte à la fois un amortisseur à au moins une chambre hydraulique de compensation des variations de volume du fluide hydraulique des chambres d'amortissement, et un palier cylindrique d'incidence et d'encastrement à deux bagues auto-lubrifiantes retenues dans des gorges annulaires espacées axialement dans des portées situées d'un côté et de l'autre du vérin hydraulique rotatif, il est avantageux que chaque bague auto-lubrifiante soit constituée de deux demi-bagues sensiblement complémentaires et de forme hémi-cylindriques, qui sont logées dans une même gorge de maintien et sollicitées radialement vers l'intérieur, contre le manchon cylindrique 18, par un dispositif hydraulique de rattrapage automatique du jeu radial du palier. Dans ce cas, chaque bague auto-lubrifiante est reliée de manière étanche à chacune des deux faces latérales de la gorge de maintien dans laquelle elle est logée, par un joint annulaire souple et élastiquement déformable. Ce joint présente par exemple une section transversale de forme en U qui est logé dans la gorge de maintien correspondante et dont les ailes sont solidarisées aux faces latérales de cette gorge, tandis que la base du joint en U, entre la bague et le fond de la gorge, n'est pas solidarisée à ce fond, dans lequel débouche une canalisation de communication avec une chambre hydraulique pressurisée du dispositif de rattrapage de jeu, cette chambre hydraulique pressurisée étant une chambre hydraulique de compensation de l'amortisseur de rotation. Pour assurer l'étanchéité du dispositif hydraulique de rattrapage de jeu, au niveau des deux bagues, chaque demi-bague est reliée par ses deux extrémités aux deux extrémités de l'autre demi-bague correspondante par deux raccords souples et élastiquement déformables, dont chacun est solidaire du joint en U, dont il raccorde les deux ailes l'une à l'autre. De plus, ces joints et raccords souples sont des éléments en un matériau élastique, tel qu'un élastomère, et on peut utiliser, pour les réaliser, le même élastomère que celui du ou des éléments élastiques de la rotule sphérique et de l'amortisseur hydraulique.

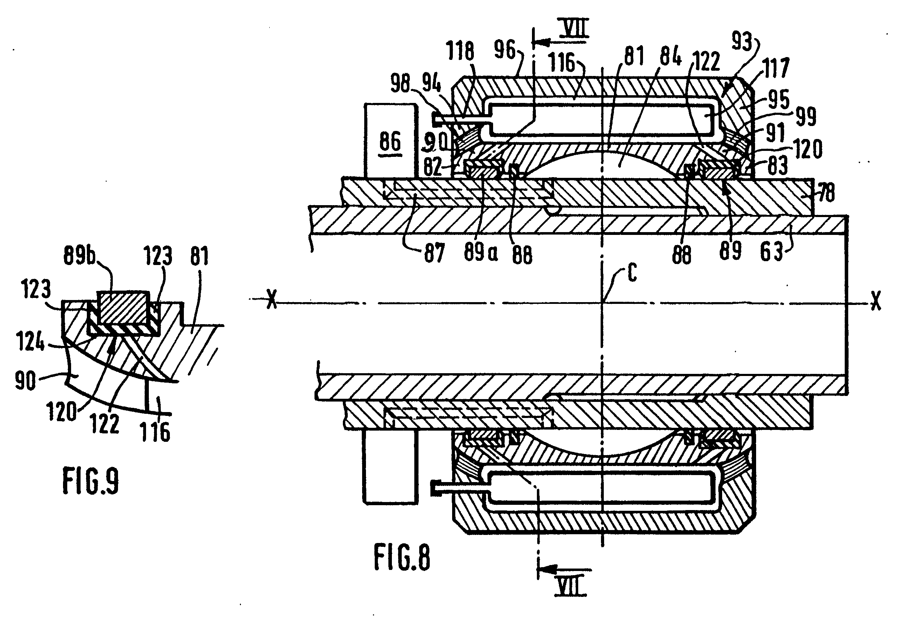

Un telle réalisation est schématiquement représentée sur les figures 7 à 9, à présent décrites et sur lesquelles en retrouve les armatures externe 93 et interne 81 d'une rotule sphérique élastique, dont l'armature externe 93 comprend deux couronnes radiales rigides 94 et 95, crénelées en direction circonférentielle, et une chemise externe 96 qui les relie axialement, et dont l'armature interne 81 comprend deux parties d'extrémité axiales cylindriques 82 et 83 et deux couronnes radiales rigides 90 et 91, également crénelées en direction circonférentielle, et reliées aux couronnes 94 et 95 de l'armature externe 93 par deux couronnes crénelées d'élastomère visco-élastique 98 et 99, les armatures externe 93 et interne 81 formant simultanément et respectivement le rotor et le stator d'un amortisseur hydro-élastique de rotation, comportant deux chambres internes d'amortisseur (non représentées) logeant chacune une palette de laminage (également non représentée) d'une seule pièce avec le stator d'amortisseur ou armature interne 81, et deux chambres hydrauliques de compensation 116 logeant chacune une vessie étanche 117 en un matériau élastiquement déformable, et gonflable par un tube de gonflage 118 raccordé à une valve de gonflage non représentée, l'étanchéité des chambres d'amortisseur et de compensation, reliées les unes aux autres par des canaux calibrés, comme dans l'exemple précédent, étant assurée par les couronnes d'élastomère 98 et 99 et par des blocs d'élastomère 100 reliant ces couronnes entre elles, entre les chambres hydrauliques de l'amortisseur. On retrouve également que l'armature interne-stator d'amortisseur 81 constitue simultanément le rotor d'un vérin hydraulique rotatif, qui comporte des palettes de rotor 84 solidaires du rotor 81 et des palettes de stator, alternées, en direction circonférentielle, avec les palettes 84 du rotor et solidaires d'un manchon cylindrique 78, sur lequel le rotor de vérin 81-84 est monté en rotation autour de l'axe de pas X-X de la pale correspondante. On retrouve encore que les chambres internes du vérin rotatif, délimitées entre les palettes de rotor et de stator, sont alimentées par des servo-valves électro-hydrauliques 86 montées sur une extrémité axiale du manchon 78 et reliées à ces chambres par des canaux axiaux 87 percés dans l'épaisseur du manchon 78, qui est encastré autour de l'extension radiale tubulaire 63 d'un moyeu, sur lequel ce manchon est immobilisé en rotation autour de l'axe X-X par des cannelures internes en prise avec des cannelures externes de l'extension 63, des joints d'étanchéité toriques 88 étant de plus logés dans des gorges ménagées dans les portées cylindriques des extrémités axiales 82 et 83 du rotor 81, pour assurer l'étanchéité axiale du vérin hydraulique rotatif.

Par contre, la différence principale entre cette réalisation et l'exemple décrit en référence aux figures précédentes est que, axialement de part et d'autre des palettes 84 du vérin hydraulique rotatif et des joints d'étanchéité 88, le palier cylindrique d'incidence et d'encastrement, formé par le manchon cylindrique 78 et par les parties d'extrémité cylindrique 82 et 83 du rotor 81, comprend de plus une bague auto-lubrifiante 89, en deux parties ou demi-bagues 89a et 89b sensiblement hémi-cylindriques, qui sont logées dans une même gorge annulaire de maintien, ménagée dans la portée cylindrique interne de la partie d'extrémité 82 ou 83 correspondante du rotor de vérin 81, les deux demi-bagues 89a et 89b de chaque bague 89 étant engagées dans un unique joint élastique annulaire 120 injecté dans le même élastomère que celui des couronnes 98 et 99, et de section transversale en forme de U. Les deux ailes latérales 123 du joint en U 120 sont adhérisées intérieurement aux faces latérales des demi-bagues 89a et 89b, et extérieurement aux parois latérales de la gorge correspondante, tandis que la face arrière ou radiale externe de la base 124 du joint en U 120 n'est pas adhérisée contre le fond de la gorge correspondante, dans lequel débouche des fines canalisations 122, percées dans l'armature interne 81 et qui mettent en communication chaque chambre hydraulique de compensation 116 avec le volume annulaire délimité dans chaque gorge entre le fond de cette dernière et la base 124 du joint en U 120. Les deux ailes 123 de ce joint 120 sont reliées l'une à l'autre par des raccords 121, comblant le jeu circonférentiel entre les extrémités en regard des deux demi-bagues 89a et 89b de chaque bague 89, et les deux raccords 121 sont en élastomère et d'une seule pièce avec le joint 120. Les bagues 89 sont en un matériau approprié pour former un palier sec auto-lubrifiant, par exemple en un matériau composite à fibres de carbone dispersées de manière aléatoire dans une résine polyimide.

On obtient ainsi un palier cylindrique d'incidence à deux bagues autolubrifiantes 89 coopérant avec un dispositif hydraulique de rattrapage automatique du jeu radial du palier, dans lequel les chambres hydrauliques de compensation 116 de l'amortisseur rotatif remplissent simultanément la fonction de chambre hydraulique de compensation du dispositif hydraulique de rattrapage de jeu, lequel est destiné à compenser l'usure par frottement des bagues 89 du palier, afin de ne pas réduire l'efficacité de ce dernier. Le rattrapage de jeu est obtenu hydrauliquement, par la mise en communication, par les fines canalisations 122, de chaque chambre de compensation 116 avec la chambre annulaire et étanche entre la base du joint 120 retenue dans chaque gorge et le fond de cette gorge, de sorte que les joints élastiques 120 assurent non seulement la suspension et la retenue des demi-bagues 89a et 89b à l'armature interne 81, mais également l'étanchéité du dispositif hydraulique de rattrapage automatique de jeu, et permettent un degré de liberté radiale des demi-bagues, dont ils cloisonnent également le jeu annulaire.

Le rattrapage de jeu, en fonctionnement statique, s'effectue par déplacement diamétral ou radial des demi-bagues 89a et 89b contre le manchon 78 du palier sec d'incidence, sous l'action de la pression statique de l'huile ou du gel de silicone de l'amortisseur, pression qui est déterminée par la pression de gonflage des vessies pneumatiques 117. En fonction dynamique, le palier d'incidence est bloqué sans jeu radial, du fait que les fines canalisations 122 sont calibrées de façon à constituer également un filtre dynamique des fréquences de fonctionnement de l'amortisseur.

Comme dans l'exemple précédent, l'armature interne-rotor de vérin 81, avec ses deux bagues auto-lubrifiantes 89, ainsi que la rotule sphérique élastique et l'amortisseur hydro-élastique de rotation intégrés, qui l'entourent et lui sont concentriques, peuvent se déplacer axialement en translation le long du manchon cylindrique 78 du palier lisse d'incidence, sur une faible course, permettant de compenser les effets de la force centrifuge, et limitée vers l'extérieur par la présence de la manchette rigide correspondante, et, vers l'intérieur, par l'épaulement limitant dans le manchon 78 la fin des cannelures.

Dans l'exemple décrit en référence aux figures 1 à 6, le bras souple 4 et la manchette rigide 14, associés à une même pale 9, sont considérés comme constituant des éléments du moyeu 1, qui s'accouplent à la pale 9 par une liaison amovible.

Mais il est également possible que seul le bras souple 4 appartienne au moyeu, et s'accouple par une liaison amovible au longeron de la pale, alors que la manchette rigide 14 correspondante est d'une seule pièce avec la coque profilée de la pale et dans le prolongement de cette coque, la manchette rigide étant alors un élément de la pale. Il est encore possible que le bras souple 4 soit d'une seule pièce avec le longeron de la pale et dans le prolongement de ce longeron, et constitue donc un élément de la pale, alors que la manchette rigide soit un élément du moyeu qui se raccorde à la coque profilée de la pale par une liaison amovible, ou encore que le bras souple et la manchette soient tous deux des éléments de la pale, respectivement liés au longeron et à la coque profilée de cette pale, et non des éléments du moyeu.

Les signes de référence insérés après les caractéristiques techniques mentionnées dans les revendications, ont pour seul but de faciliter la compréhension de ces dernières, et n'en limitent aucunement la portée.

## Revendications

1. Dispositif hydraulique de commande individuelle du pas d'une pale (9) d'un rotor d'aérodyne, tel qu'un rotor d'hélicoptère ou une hélice basculante de convertible, comprenant :

au moins un actionneur hydraulique (18-20, 21-24) de commande du pas de la pale (9), ledit actionneur étant destiné à être monté sur le rotor et entraîné en rotation avec lui, chaque actionneur étant raccordé à au moins un circuit hydraulique de puissance par au moins un servo-distributeur tournant également avec le rotor et commandant l'alimentation d'au moins un actionneur en fluide hydraulique sous pression,

chaque servo-distributeur recevant des signaux de commande élaborés à partir d'ordres de commande pilote et/ou de signaux d'état d'au moins une pale (9) provenant d'au moins un détecteur (50) de la position et/ou des mouvements et/ou des déformations d'au moins une pale (9),

au moins un actionneur, mais de préférence chacun d'eux, étant un vérin hydraulique rotatif dont l'axe de rotation coïncide avec l'axe longitudinal de changement de pas (XX) de chaque pale (9), vérin rotatif dont le stator (18-20) est solidarisé à la partie centrale du moyeu (1) de la tête de rotor de l'aérodyne et dont le rotor (21-24), coaxial au stator (18, 20), est lié en rotation à la pale (9), et qui comporte au moins une chambre interne (25) à volume variable, délimitée au moins partiellement entre le rotor (21-24) et le stator (18-20) de vérin et reliée à au moins un servo-distributeur de commande de sorte que l'alimentation de la chambre (25) en fluide hydraulique sous pression et son augmentation de volume ou vidange de la chambre et sa diminution de volume provoquent, autour de l'axe de pas (X-X) de la pale (9), une rotation du rotor de vérin (21-24) par rapport au stator de vérin (18-20) qui est transmise à la pale (9) et fait varier son incidence, caractérisé en ce qu'il comprend de plus une articulation à rotule sphérique (21, 33, 38-39), centrée sensiblement sur l'axe de pas (X-X) de la pale (9) et comportant au moins un élément d'un matériau élastique (38, 39), sensiblement et au moins partiellement en forme d'au moins une portion d'au moins une calotte sphérique, et qui est retenu entre deux supports rigides (21, 33), dont l'un (33) est destiné à être solidaire de la pale (9) en torsion autour de l'axe de pas (X-X) de la pale, et dont l'autre (21) est solidaire en rotation du rotor d'au moins un vérin hydraulique rotatif (18-20, 21-24) autour dudit axe de pas, et de sorte que l'articulation à rotule sphérique soit rigide en direction circonférentielle autour de l'axe de pas tout en autorisant, autour de son centre (C), une liberté relative de mouvement angulaire de la pale en battement et traînée, par cisaillement du matériau élastique.

2. Dispositif selon la revendication 1, caractérisé en ce qu'au moins un vérin hydraulique rotatif (18-20, 21-24) mais de préférence chacun d'eux, est un vérin à double effet, comportant au moins deux chambres internes (25) à volume variable reliées à au moins une servovalve (26) commandée de sorte que l'alimentation d'une chambre (25) et son augmentation de volume soient simultanées à la vidange correspondante d'une autre chambre (25) et à sa diminution de volume afin que la rotation du rotor de vérin (21-24), et donc de la pale (9), par rapport au stator de vérin (18-20) et autour de l'axe de pas (X-X) de la pale (9), puisse être commandée dans les deux sens opposés.

3. Dispositif selon l'une des revendications 1 et 2, caractérisé en ce que le stator (18-20) et le rotor (21-24) d'au moins un vérin sont deux organes sensiblement tubulaires et coaxiaux autour de l'axe de pas (X-X) de la pale (9) et présentant chacun en regard de l'autre une surface latérale de révolution autour de leur axe commun (X-X), au moins une palette de vérin (20-24) mais de préférence deux palettes diamétralement opposées par rapport audit axe commun, faisant saillie sur chacune des surfaces latérales et s'étendant jusqu'à proximité immédiate de la surface latérale en regard, et la ou les palettes de vérin (20) en saillie sur l'une desdites surfaces latérales étant décalée(s) en direction circonférentielle, autour de l'axe (X-X) de pas de la pale (9) par rapport à la ou les palettes (24) en saillie sur l'autre surface latérale, afin de délimiter au moins deux, mais de préférence quatre chambres (25) à volume variable à faible débit de fuite d'une chambre (25) à l'autre par le faible jeu radial entre les palettes (20, 24) et les surfaces de révolution en regard.

4. Dispositif selon la revendication 3, caractérisé en ce que l'une desdites surfaces latérales de révolution est une surface cylindrique (18) de section transversale circulaire, sur laquelle chaque palette (20) en saillie a sensiblement la forme d'un segment à convexité tournée vers l'autre surface latérale, laquelle est une surface en forme de calotte sphérique (21) sur laquelle chaque palette (24) en saillie a également sensiblement la forme d'un segment de sphère lié par sa face convexe à la calotte sphérique et présentant une face en portion de cylindre de section circulaire en regard de ladite surface cylindrique (18).

5. Dispositif selon l'une des revendications 1 à 4, caractérisé en ce qu'il comprend au moins un empilement axial et sensiblement concentrique, par rapport à l'axe de pas (X-X) de la pale (9), d'au moins un vérin hydraulique rotatif (18-20, 21-24) et d'au moins un palier cylindrique (18, 22-23) d'articulation d'incidence de la pale (9) et d'encastrement sur le moyeu (1) qui permet la rotation de la pale (9) par rapport au moyeu (1) autour de son axe de pas.

6. Dispositif selon l'une des revendications 1 à 5, caractérisé en ce que le rotor (21-24) d'au moins un vérin hydraulique rotatif est monté en rotation vis-à-vis du stator de vérin (18-20) correspondant par au moins un palier cylindrique (18, 22-23) constituant un palier d'articulation d'incidence de la pale (9) et d'encastrement sur le moyeu (1).

7. Dispositif selon l'une des revendications 5 et 6, caractérisé en ce qu'au moins un palier cylindrique est un palier (18, 22-23) à deux paires espacées axialement de portées cylindriques en regard l'une de l'autre, le rotor (21-24) et le stator (18-20) d'au moins un vérin hydraulique rotatif étant intégrés entre lesdites paires de portées.

8. Dispositif selon l'une des revendications 1 à 7, caractérisé en ce que le ou les éléments en matériau élastique de rotule sphérique comprennent deux couronnes crénelées radialement (38, 39) et adhérisées radialement aux deux supports rigides (21, 33) de la rotule sphérique, entre des surfaces crénelées en regard desdits deux supports rigides, afin de rigidifier la liaison entre le support de rotule (33) lié à la pale (9) et le rotor (21) d'au moins un vérin hydraulique rotatif, en rotation autour de l'axe de pas (X-X) de la pale (9), de sorte que toute rotation du rotor de vérin (21, 34) par rapport au stator de vérin (18-20) soit transmise au support de rotule (33) lié à la pale (9), et donc à la pale (9).

9. Dispositif selon l'une quelconque des revendications prise en combinaison avec la revendication 4, caractérisé en ce que ladite surface de révolution en calotte sphérique (21) et lesdites palettes (20, 24) de vérin en segments de sphère sont concentriques à la rotule sphérique (21, 33, 38-39).

10. Dispositif selon l'une des revendications 1 à 9, caractérisé en ce qu'au moins un palier cylindrique d'incidence et d'encastrement (18, 22-23) est, d'une part, lié à celui (21) des supports rigides (21, 33) de l'articulation à rotule sphérique qui est solidaire en rotation d'au moins un rotor (21, 24) vérin, et, d'autre part, sensiblement coaxial à l'autre support rigide (33) de l'articulation à rotule sphérique.

11. Dispositif selon l'une des revendications 1 à 8, caractérisé en ce que l'articulation à rotule sphérique (21, 33, 38-39) est d'une part, radialement en série, par rapport à l'axe (X-X) de pas de la pale (9), avec l'empilement axial d'au moins un vérin hydraulique rotatif (18-20, 21-24) et d'au moins un palier cylindrique d'incidence et d'encastrement (18, 22-23), et, d'autre part, sensiblement concentriques au(x) palier(s) cylindrique(s) correspondant(s).

12. Dispositif selon l'une des revendications 1 à 11, caractérisé en ce qu'il comprend au moins un détecteur (50) de position de la pale (9) correspondante, ledit détecteur (50) étant un transducteur de rotation, de type inductif ou capacitif, qui comporte au moins un organe mobile, lié en rotation au rotor (21-24) d'au moins un vérin rotatif, et monté en rotation par rapport à un organe fixe vis-à-vis du stator (18-20) dudit vérin rotatif, de façon à délivrer un signal de sortie indiquant la position angulaire relative des organes respectivement mobile(s) et fixe(s) du transducteur de rotation.

13. Dispositif selon la revendication 12, caractérisé en ce qu'au moins un organe fixe de chaque transducteur de rotation (50) est logé dans un évidement axial ménagé dans une partie d'extrémité axiale du stator (18-20) du vérin et/ou d'un palier d'articulation d'incidence et d'encastrement (18-20) en empilement axial avec ledit stator (18-20) de vérin, et au moins un organe mobile de chaque transducteur de rotation (50) est monté en rotation autour d'un axe parallèle à l'axe de pas (X-X) de la pale (9), dans ledit organe fixe ou autour de ce dernier, et est solidaire en rotation d'un pignon (51) externe audit vérin et/ou audit palier, et en prise avec la denture (52) d'une couronne (53) solidaire en rotation du rotor (21-24) dudit vérin.

14. Dispositif selon la revendication 13, caractérisée en ce que la couronne dentée (53) a une forme annulaire de révolution définie par la rotation autour de l'axe de pas (X-X) de la pale (9) d'une section transversale en U couché, de sorte que la couronne (53) présente un flasque radial supportant deux collets (54, 55) tubulaires coaxiaux dont l'un (54) est fixé au rotor (21-24) dudit vérin, et dont l'autre (55) porte la denture (52) à dents radiales en prise avec le pignon (51) correspondant de chaque transducteur de rotation (50), chaque pignon (51) étant logé dans l'évidement délimité entre les deux collets (54, 55) et par ledit flasque de la couronne (53) ainsi conformée en capot de protection du ou des pignons (51) axialement en saillie par rapport au stator (18-20) dudit vérin et/ou à ladite partie (23) du palier (18-23) en empilement axial avec ledit stator (18, 20) de vérin.

15. Dispositif selon l'une des revendications 1 à 14, caractérisé en ce qu'il comprend au moins un amortisseur hydraulique (21, 33, 45, 46) des mouvements angulaires de la pale (9) en traînée.

16. Dispositif selon la revendication 15, caractérisé en ce que l'amortisseur hydraulique est un amortisseur rotatif, du type comportant un stator (21) et un rotor (33) sensiblement coaxiaux, délimitant entre eux au moins une chambre interne d'amortissement (45) remplie d'un fluide hydraulique, tel qu'une huile ou un gel de silicone de haute viscosité, et au moins une palette d'amortissement (46), solidaire du rotor (33) ou du stator (21) d'amortisseur, et subdivisant la chambre interne (45) en deux chambres d'amortissement (45a, 45b) reliées l'une à l'autre par des moyens de laminage (47), de sorte que toute rotation relative du stator (21) et du rotor (33) d'amortisseur, autour de leur axe commun (B-B) entraîne une rotation de chaque palette (46) dans la chambre interne correspondante (45) en comprimant l'une des deux chambres d'amortissement (45a, 45b) et en provoquant une détente dans l'autre, de façon à assurer un amortissement du mouvement de rotation par laminage au travers des moyens de laminage (47), de fluide circulant de la chambre comprimée vers la chambre de détente, le stator (21) d'amortisseur étant solidaire en rotation, autour de l'axe (X-X) de la pale (9), du rotor (21-24) d'au moins un vérin hydraulique rotatif, et le rotor (33) d'amortisseur étant lié à la pale (9).

17. Dispositif selon la revendication 16, caractérisé en ce que les moyens de laminage comprennent un étroit passage (47) entre l'extrémité libre de chaque palette d'amortisseur (46) portée par le rotor (33) ou le stator (21) d'amortisseur et une surface en regard sur respectivement le stator (21) ou le rotor (33) d'amortisseur.

18. Dispositif selon l'une des revendications 16 et 17, caractérisé en ce que l'étanchéité de chaque chambre interne d'amortisseur (45) est assurée par au moins un organe en matériau élastique (38, 39) reliant le rotor d'amortisseur (33) au stator d'amortisseur (21).

19. Dispositif selon l'une des revendications 15 à 18, caractérisé en ce que l'amortisseur hydraulique (21, 33, 45-46) est radialement en série, par rapport à l'axe de pas (X-X) de la pale (9) avec au moins un vérin hydraulique rotatif (18-20, 21-24) et/ou au moins un empilement axial d'au moins un vérin hydraulique rotatif et d'au moins un palier cylindrique (18, 22-23).

20. Dispositif selon l'une des revendications 16 à 19, caractérisée en ce que l'amortisseur hydraulique (21, 33, 45, 46) est au moins partiellement intégré dans l'articulation à rotule sphérique, (21, 33, 38-39) au moins une chambre interne d'amortisseur (45) étant délimitée au moins partiellement entre les supports rigides (21, 33) de la rotule sphérique et/ou dans un évidement de l'un au moins desdits supports rigides.

21. Dispositif selon la revendication 20, caractérisé en ce que le stator (21) et le rotor (33) d'amortisseur et au moins un organe en matériau élastique (38, 39) qui les relie l'un à l'autre sont constitués respectivement par le support rigide (21) de la rotule sphérique qui est solidarisé en rotation au rotor (21-24) d'au moins un vérin hydraulique rotatif, par le support rigide (33) de ladite rotule sphérique qui est lié en torsion à la pale (9), et par au moins un élément en matériau élastique (39, 38) liant les supports rigides (21, 33) de la rotule sphérique.

22. Dispositif selon l'une des revendications 15 à 21 caractérisé en ce que la rotule sphérique (21, 33, 38, 39) et l'amortisseur hydraulique rotatif (21, 33, 45, 46) entourent radialement un vérin hydraulique rotatif dont le rotor (21-24) entoure radialement le stator (18-20) de vérin, le rotor d'amortisseur (33) comprenant au moins un support annulaire et rigide (34, 35) en position radiale externe, qui présente radialement vers l'intérieur des portions (37) de surfaces concaves adhérisées à des éléments de matériau visco-élastique (38, 39) qui sont également adhérisés à des portions (32) de surfaces convexes présentées radialement vers l'extérieur par le stator d'amortisseur (21), lequel comprend au moins un support annulaire et rigide (30,31) en position radiale intermédiaire, qui entoure lui-même radialement le stator (18-20) de vérin, en position radiale interne.

23. Dispositif selon la revendication 22, caractérisé en ce qu'un vérin hydraulique rotatif, dont le rotor (21-24) entoure le stator (18-20) est disposé dans un évidement ménagé dans la face radiale interne du stator d'amortisseur (21) et/ou du support rigide (21) de la rotule sphérique qui est lié au rotor (21-24) du vérin rotatif.

24. Dispositif selon la revendication 22, caractérisé en ce que le rotor (21-24) du vérin hydraulique rotatif constitue simultanément le stator (21) d'amortisseur et présente des portions de faces radiales externe et interne qui sont des portions de sphères respectivement convexes et concaves et centrées sur le centre (C) de la rotule sphérique (21, 33, 38, 39).

25. Dispositif selon la revendication 24, caractérisé en ce que le rotor d'amortisseur et le support rigide de la rotule sphérique qui est solidaire de la pale (9) en torsion autour de l'axe de pas (X-X) de la pale sont essentiellement et simultanément constitués par une armature radiale externe (33) reliée par ledit matériau élastique (38, 39, 40) à une armature radiale interne (21) constituant simultanément l'autre support rigide de la rotule sphérique, le stator d'amortisseur, portant chaque palette d'amortisseur (46) en saillie radiale vers l'extérieur, et le rotor du vérin rotatif portant la ou les palettes mobiles (24) du vérin en saillie radiale vers l'intérieur, en regard du stator de vérin, qui est conformé en manchon cylindrique (18) portant la ou les palettes fixes (20) de vérin en saillie radialement vers l'extérieur.

26. Dispositif selon la revendication 25, caractérisé en ce que, d'un côté et/ou de l'autre de leurs palettes de vérin (20, 24) en direction axiale, le manchon cylindrique (18) et l'armature interne (21) ont des portées cylindriques radialement en regard formant un palier lisse d'incidence (18-22, 18-23) et d'encastrement, au niveau duquel l'étanchéité du vérin rotatif est assurée par au moins un joint (28, 29) logé dans une gorge radiale ménagée dans l'une des deux portées en regard.

27. Dispositif selon l'une des revendications 25 et 26, caractérisé en ce que le manchon cylindrique (18) du stator de vérin présente des cannelures axiales internes (19) par lesquelles il est destiné à venir en prise avec des cannelures axiales externes sur la périphérie d'une protubérance (3) du moyeu (1) sur laquelle le manchon (18) est destiné à être encastré afin d'être immobilisé en rotation autour de son axe (X-X).

28. Dispositif selon l'une des revendications 25 à 27, caractérisé en ce que l'une au moins des parties d'extrémité axiale du manchon cylindrique (18) est percée d'au moins une canalisation (27) de raccordement d'au moins une chambre à volume variable (25) du vérin à un circuit hydraulique externe du dispositif (17).

29. Dispositif selon l'une des revendications 16 à 28,caractérisé en ce que l'amortisseur hydraulique comporte deux palettes d'amortissement (46) sensiblement radiales et symétriques l'une de l'autre par rapport à l'axe de rotation relatif (B-B) du rotor (33) et du stator (21) d'amortisseur, les palettes (46) étant solidaires du stator (21) d'amortisseur, et chacune d'elles s'étendant sensiblement perpendiculairement au plan de traînée (T-T) de la pale (9) et sensiblement symétriquement au-dessus et au-dessous de ce plan de traînée (T-T), dans l'une respectivement de deux chambres d'amortisseur (45) délimitées chacune par un évidement s'étendant radialement et en direction circonférentielle dans le rotor (33) de l'amortisseur, par une partie de la surface radiale du stator (21) d'amortisseur en regard de l'évidement correspondant dans le rotor (33) d'amortisseur et autour du pied de la palette (45) engagée dans cet évidement, et par des portions de surfaces annulaires du ou des organes en matériau élastique (38, 39) reliant le stator d'amortisseur au rotor d'amortisseur (33).

30. Dispositif selon la revendication 29, caractérisé en ce que les évidements du rotor (33) d'amortisseur logeant les palettes d'amortisseur (46) sont fermés radialement vers l'extérieur par une chemise périphérique (36) montée avec étanchéité (42) et amovible sur le pourtour du rotor (33) d'amortisseur.

31. Dispositif selon l'une des revendications 29 et 30, caractérisé en ce que chaque palette d'amortisseur (46) est fixée de manière inamovible, de préférence par soudage par bombardement électronique, sur ladite portion de la face du stator (21) d'amortisseur qui forme le fond d'un évidement logeant la palette (46).

32. Dispositif selon l'une des revendications 16 à 31, caractérisé en ce que chaque chambre interne (45) de l'amortisseur hydraulique est reliée par au moins un passage de communication (58, 59), à au moins une chambre de compensation (56) des dilatations du fluide hydraulique d'amortisseur, pressurisé par un mécanisme de pressurisation (57) assurant une mise en pression statique de l'amortisseur (21, 33, 45, 46).

33. Dispositif selon la revendication 32, caractérisé en ce que le ou les passages de communication (58, 59) entre une chambre de compensation (56) et une chambre interne d'amortisseur (45) est ou sont calibrés de façon à constituer un filtre dynamique pour les fréquences de fonctionnement de l'amortisseur.

34. Dispositif selon l'une des revendications 32 et 33 telle que rattachée à la revendication 30, caractérisé en ce que le ou les passages de communication entre la chambre interne d'amortisseur (45) et la chambre de compensation (56) est ou sont délimités par un jeu radial (59) entre d'une part la chemise périphérique (36) et d'autre part le rotor d'amortisseur (33) et/ou un support rigide de la rotule sphérique.

35. Dispositif selon l'une des revendications 32 à 34, caractérisé en ce que le mécanisme de pressurisation comprend au moins une membrane souple (57) de préférence élastiquement déformable, qui délimite au moins partiellement la chambre de compensation (56) correspondante.

36. Dispositif selon la revendication 34, caractérisé en ce que la membrane souple est une vessie étanche (57) logée dans la chambre de compensation (56) et gonflable de l'extérieur du mécanisme de pressurisation.

37. Dispositif selon la revendication 36, caractérisé en ce que l'étanchéité de la chambre de compensation (56) est assurée par au moins un élément en matériau élastique (38, 39, 40) appartenant de préférence à l'amortisseur et/ou à la rotule sphérique.

38. Dispositif selon l'une des revendications 32 à 37, caractérisé en ce qu'au moins une chambre de compensation (56) est au moins partiellement délimitée entre le rotor (33) et le stator (21) d'amortisseur et/ou dans un évidement de l'un desdits rotor (33) et stator (21) d'amortisseur, et l'étanchéité de ladite chambre de compensation (56) est assurée par au moins un élément élastique (38, 39, 40) de liaison du rotor (33) au stator (21) d'amortisseur.

39. Dispositif selon la revendication 38, telle que rattachée à la revendication 29, caractérisé en ce qu'il comporte deux chambres hydrauliques de compensation (56), sensiblement symétriques l'une de l'autre par rapport à l'axe de rotation relatif (B-B) du rotor (33) et du stator (21) d'amortisseur, et par rapport au plan de traînée (T-T) de la pale, (9), chacune étant délimitée au moins partiellement par l'un des deux évidements s'étendant en direction circonférentielle, en positions alternées dans cette direction avec les évidements des chambres d'amortisseur (45), dans l'un des rotor (33) et stator (21) d'amortisseur et/ou des supports rigides (21, 33) de la rotule sphérique, et/ou dans au moins une partie d'au moins un élément élastique (38, 39, 40) de l'amortisseur et/ou de la rotule sphérique,

40. Dispositif selon l'une des revendications 32 à 39, caractérisé en ce que chaque chambre interne d'amortisseur (45) est séparée de chacune des chambres de compensation (56) entre lesquelles elle est située, en direction circonférentielle, par une partie massive de matériau visco-élastique (40) solidaire du ou des éléments de matériau élastique (38, 39) reliant l'un à l'autre le rotor (33) et le stator d'amortisseur (21) et/ou les deux supports rigides (21, 33) de la rotule sphérique.

41. Dispositif selon l'une des revendications 5 à 40, caractérisé en ce que l'un au moins des paliers d'incidence et d'encastrement est un palier lisse et sec (78, 82-83), avec au moins une bague autolubrifiante (89) logée dans une gorge de maintien annulaire ménagée dans celle (82, 83) de deux portées cylindriques en regard l'une de l'autre de ce palier qui est présentée par le rotor (81-84) de vérin et/ou le stator d'amortisseur (81) et/ou le support rigide (81) de la rotule sphérique qui est lié au rotor de vérin (81-84).

42. Dispositif selon l'une des revendications 5 à 41, caractérisé en ce qu'il comprend également un dispositif de rattrapage automatique du jeu d'au moins un palier d'incidence et d'encastrement (78, 82-83).

43. Dispositif selon la revendication 42 telle que rattachée à la revendication 41, caractérisé en ce que le dispositif de rattrapage automatique de jeu est un dispositif hydraulique comprenant au moins une chambre de compensation (116) remplie d'un fluide hydraulique pressurisé par au moins un mécanisme de pressurisation (117), et en communication avec chacune des gorges de maintien du palier (78, 82-83) par au moins une canalisation (122) débouchant entre le fond de la gorge et la bague autolubrifiante (89) correspondante montée avec étanchéité dans ladite gorge, de sorte que le rattrapage de jeu soit assuré par déplacement diamétral de la bague (89) sous l'action de la pression du fluide hydraulique dans la ou les chambres de compensation (116) du dispositif de rattrapage de jeu.

44. Dispositif selon la revendication 43, caractérisé en ce que le mécanisme de pressurisation d'une chambre de compensation (116) du dispositif de rattrapage de jeu comprend au moins une membrane souple (117), de préférence élastiquement déformable, délimitant au moins partiellement ladite chambre de compensation (116).

45. Dispositif selon la revendication 44, caractérisé en ce que ladite membrane souple du mécanisme de pressurisation du dispositif de rattrapage de jeu est une vessie étanche et gonflable (117) logée dans ladite chambre de compensation correspondante (116).

46. Dispositif selon la revendication 45, telle que rattachée à l'une des revendications 32 à 40, caractérisé en ce qu'au moins une chambre de compensation (116) des dilatations de fluide hydraulique de l'amortisseur (81, 93) et son mécanisme de pressurisation (117) constituent simultanément et respectivement une chambre de compensation du dispositif hydraulique de rattrapage du jeu (116, 117, 122, 89) et son mécanisme de pressurisation.

47. Dispositif selon la revendication 46, caractérisé en ce que la ou les canalisations (122) reliant une chambre de compensation (116) à une gorge de maintien d'une bague (89) d'un palier est ou sont calibrées de façon à constituer un filtre dynamique pour les fréquences de fonctionnement de l'amortisseur (81, 93).

48. Dispositif selon l'une des revendications 43 à 47 telles que rattachée à la revendication 17, caractérisé en ce que le dispositif hydraulique de rattrapage de jeu est au moins partiellement intégré dans l'amortisseur hydraulique.

49. Dispositif selon l'une des revendications 1 à 48, caractérisé en ce qu'au moins un vérin hydraulique rotatif (18-20, 21-24), et, le cas échéant, au moins un palier cylindrique d'incidence et d'encastrement, (18, 22-23) au moins un capteur de position (50) une rotule sphérique (21, 33, 38, 39) un amortisseur rotatif (21, 33, 45, 46) et un dispositif de rattrapage de jeu (116, 117, 122, 89), est ou sont monté(s) libre(s) en translation axiale limitée grâce à un jeu axial de montage du stator (18-20) du ou des vérins sur le moyeu (1).

50. Moyeu de rotor, pour rotor à pas variable de giravion, et du type comprenant un corps central (2) de moyeu (1), centré sur l'axe (A) de rotation du moyeu, et des extensions radiales (3) par rapport à l'axe de rotation (A), qui sont solidaires du corps central (2) et en nombre égal au nombre des pales (9) du rotor pour assurer chacune la liaison d'une pale (9) au moyeu (1) caractérisé en ce qu'il comprend de plus des dispositifs hydrauliques (17) de commande individuelle du pas d'une pale (9) selon l'une des revendications 1 à 50, en nombre égal au nombre des pales (9), et dont chacun est monté sur une extension radiale (3) de sorte que le stator (18-20) du ou des vérins hydrauliques rotatifs du dispositif correspondant soit retenu sur ladite extension (3) et immobilisé en rotation autour de l'axe (X-X) de pas de la pale (9) correspondante.

51. Moyeu de rotor selon la revendication 50, du type dont chaque extension radiale (3) supporte, pour la liaison à la pale (9) correspondante, au moins un palier d'incidence (18, 22-23) et, centrée sur l'axe (X-X) du palier d'incidence, une articulation à rotule sphérique (21, 33) à au moins un élément en matériau élastique (38, 39, 40) permettant autour de son centre (C), une liberté relative de mouvement de la pale correspondante (9) en battement et en traînée, par cisaillement du matériau élastique, caractérisé en ce qu'au moins un vérin rotatif (18-20, 21-24) du dispositif hydraulique correspondant de commande individuelle du pas d'une pale (9) est combiné à au moins un palier d'incidence (18, 22-23), et le rotor (21) du ou des vérins rotatifs dudit dispositif hydraulique est solidaire en rotation, autour de l'axe (X-X) du ou des paliers d'incidence, de l'un (21) de deux supports rigides (21, 33) de la rotule sphérique entre lesquels est ou sont montés le ou les éléments en matériau visco-élastique (38, 39, 40).

52. Moyeu de rotor selon l'une des revendications 50 et 51, du type comprenant, pour chaque pale (9) du rotor, un organe de liaison rigide en traction mais souple en flexion et torsion (4), accouplé par une partie d'emplanture (5) à une extension radiale (3) et destiné à être accouplé à une pale (9) afin de retenir la pale à l'encontre de la force centrifuge et afin d'autoriser les oscillations de battement et de traînée de la pale et les variations angulaire de son pas, ainsi qu'un organe rigide en flexion et torsion (14) relié à ladite extension radiale (3) et destiné à être solidarisé en rotation à la pale (9) autour de l'axe de pas (X-X) de cette dernière, caractérisé en ce que la liaison dudit organe rigide en flexion et torsion (14) à ladite extension radiale (3) est assurée au moins partiellement par l'intermédiaire du dispositif hydraulique (17) correspondant de commande individuelle du pas d'une pale (9), de sorte que le rotor (21) du ou des vérins rotatifs de ce dispositif hydraulique soit lié en rotation audit organe rigide en flexion et torsion (14) autour de l'axe de pas (X-X) de la pale (9).

53. Moyeu de rotor selon l'une des revendications 52 et 51, du type comprenant, pour la liaison de chaque pale (9) à l'extension radiale (3) correspondante, un dispositif (17) de palier combiné d'incidence (18, 22-23) à rotule sphérique élastique (21, 33, 38, 39, 40) et à amortisseur hydro-élastique (21, 33, 45, 46) dans lequel l'amortisseur est rotatif et intégré dans la rotule comportant au moins un élément élastique (38, 39), retenu entre deux supports rigides (21, 33) dont un premier (33) est destiné à être solidarisé à la pale (9) correspondante, et dont le second (21) est relié par au moins un palier d'incidence (18, 22, 23) à ladite extension (3) de sorte que le dispositif de palier combiné (17) permette la variation angulaire du pas de la pale (9) correspondante par rotation de la rotule et de l'amortisseur autour de l'axe (X-X) du ou des paliers d'incidence, et assure un amortissement incorporé des oscillations de traînée de la pale 9 caractérisé en ce que ledit dispositif hydraulique correspondant de commande individuelle du pas est au moins partiellement intégré dans ledit dispositif de palier combiné (17) correspondant, de sorte qu'au moins un vérin rotatif (18-20, 21-24) soit disposé à l'intérieur de la rotule et de l'amortisseur (21, 38, 39, 33) et empilé axialement avec au moins un palier d'incidence (18, 22, 23), et que le rotor (21-24) du ou des vérins rotatifs soit solidaire du second support (21) rigide de la rotule.

54. Moyeu de rotor selon la revendication 53, telle que rattachée à la revendication 52, du type dans lequel ledit organe de liaison souple en flexion et torsion est un bras allongé (4), formant un tirant sensiblement radial, par rapport à l'axe (A) du moyeu (1), et de retenue de la pale (9) correspondante à l'encontre de la force centrifuge, la partie d'extrémité radiale interne (5) dudit bras (4) constituant ladite partie d'emplanture qui est retenue à l'intérieur de l'extension radiale (3) correspondante, de forme cylindrique et tubulaire, d'axe (X-X) sensiblement perpendiculaire à l'axe de rotation (A) du moyeu (1), tandis que la partie d'extrémité radiale externe (7) dudit bras (4) est solidaire, d'une part, d'une pièce de liaison intermédiaire (8), servant d'attache à la pale (9) correspondante, et, d'autre part, de la partie d'extrémité radiale externe (15) dudit organe rigide en flexion et torsion, qui est conformé en manchette rigide (14) entourant sans contact ledit bras allongé (4) jusqu'à proximité du corps central (2) du moyeu (1), et dont la partie d'extrémité radiale interne (16) prend appui sur ladite extension tubulaire (3) par ledit dispositif de palier combiné (17), autour de l'amplanture (5) du bras allongé (4), caractérisé en ce que le dispositif hydraulique correspondant de commande individuelle du pas de la pale correspondante (9) est monté autour de l'extension tubulaire (3) par au moins un manchon cylindrique (18) solidaire d'au moins un stator (18-20) de vérin rotatif dudit dispositif, et qui est emmanché sur l'extension tubulaire (3) et immobilisé en rotation vis-à-vis de ladite extension (3) par des cannelures axiales (19) en prise avec des cannelures complémentaires sur ladite extension (3).

55. Moyeu de rotor selon l'une des revendications 50 à 54, caractérisé en ce que ledit corps central (2) de moyeu (1) est tubulaire et loge un servo-distributeur hydraulique (49) monté en repère tournant avec le moyeu (1) et en communication par des conduites rigides (48) avec chacun des vérins rotatifs (18-20, 21-24) des dispositifs hydrauliques de commandes individuelles du pas des pales.

56. Moyeu de rotor selon l'une des revendications 50 à 55, caractérisé en ce que chaque servo-distributeur d'alimentation d'un vérin rotatif (18-20, 21-24) d'un dispositif hydraulique de commande individuelle du pas d'une pale est un servo-distributeur à servo-valve, dont chaque servovalve (9) est montée directement sur le stator (18) dudit vérin.

57. Rotor à pas variable pour giravion, utilisable notamment comme rotor principal d'hélicoptère ou comme hélice basculante de convertible, comprenant un moyeu (1) de rotor entraîné en rotation autour d'un axe de rotation (A) du rotor par un mât rotor, des pales (9) dont chacune est retenue au moyeu (1) par l'intermédiaire d'au moins un organe de liaison (4) rigide en traction mais souple en flexion et torsion autorisant les oscillations de battement et de traînée de la pale (9) correspondante ainsi que les variations angulaires de son pas sous l'effet d'un organe rigide en flexion et torsion (14), qui est lié à la pale (9), caractérisé en ce qu'il comprend de plus, pour chaque pale (9), une installation de commande de pas en repère tournant, agencée en servo-commande hydraulique et rotative, qui comporte un dispositif hydraulique de commande individuelle du pas d'une pale (9) selon l'une des revendications 1 à 49, monté de sorte que le stator (18) du ou des vérins rotatifs dudit dispositif hydraulique soit retenu sur le moyeu (1) et immobilisé en rotation sur ce dernier, autour de l'axe de pas (X-X) de la pale (9) correspondante, alors que le rotor (21) du ou des vérins rotatifs est lié en rotation à l'organe (14) rigide en flexion et torsion autour dudit axe de pas (X-X).

58. Rotor selon la revendication 57, dont le moyeu (1) comporte un corps central (2) qui est tubulaire, solidaire d'une extrémité du mât rotor également tubulaire, et coaxial audit mât rotor, caractérisé en ce que les vérins rotatifs (18-20, 21-24) de tous les dispositifs hydrauliques de commande individuelle du pas d'une pale (9) sont raccordés à un servo-distributeur logé dans le corps central (2) du moyeu (1) et raccordé à au moins un circuit hydraulique de puissance au moins partiellement logé dans le mât rotor.

59. Rotor selon la revendication 58, dont le servo-distributeur comprend des servo-valves qui sont du type à commande électrique, caractérisé en ce que le mât rotor loge également un collecteur électrique de transfert, d'une part, de signaux de commande desdites servo-valves et, d'autre part, de signaux provenant de détecteur de position (50) des différentes pales (9).

60. Rotor selon l'une des revendications 58 et 59, caractérisé en ce que les servo-valves sont montées en repère tournant, entre au moins un servo-distributeur tournant et les vérins rotatifs (19-20, 21-24) correspondants.

61. Rotor selon l'une des revendications 57 à 60, caractérisé en ce qu'il comprend un moyeu (1) de rotor selon l'une des revendications 50 à 56.

## Claims

1. A hydraulic device for the individual control of the pitch of a blade (9) of an aerodyne rotor, such as a helicopter rotor or a tilting propeller of a convertible aircraft, comprising : at least one hydraulic actuator (18-20, 21-24) for controlling the pitch of the blade (9), the said actuator being intended to be mounted on the rotor and driven in rotation with this, each actuator being connected to at least one hydraulic power circuit by means of at least one servo-distributor likewise rotating with the rotor and controlling the supply of pressurized hydraulic fluid to at least one actuator, each servo-distributor receiving control signals prepared from pilot control commands and/or signals indicating the state of at least one blade (9) coming from at least one detector (50) of the position and/or movements and/or deformations of at least one blade (9),at least one actuator, but preferably each of them, been a rotary hydraulic jack, the axis of rotation of which coincides with the longitudinal pitch-changing axis (XX) of each blade (9) and of which the stator (18-20) is, fixed to the central part of the hub (1) of the rotor head of the aerodyne and the rotor (21-24), coaxial relative to the stator (18, 20), is connected in terms of rotation to the blade (9), and which possesses at least one inner chamber (25) of variable volume, delimited at least partially between the jack rotor (21-24) and the jack stator (18-20) and connected to at least one control servo-distributor, so that the supply of pressurized hydraulic fluid to the chamber (25) and its increase in volume or the drainage of the chamber and its decrease in, volume cause, about the pitch axis (X-X) of the blade (9), a rotation of the jack rotor (21-24) relative to the jack stator (18-20) which is transmitted to the blade (9) and which varies its pitch, characterised in that there is, furthermore, a ball joint (21, 33, 38-39) centered substantially on the pitch axis (X-X) of the blade (9) and comprising at least one element made of an elastic material (38, 39) which is substantially and at least partially in the form of at least one portion of at least one spherical cap and which is retained between two rigid supports (21, 33), of which one (33) is intended to be integral with the blade (9) in terms of torsion about the pitch axis (X-X) of the blade and the other (21) is integral in terms of rotation with the rotor of at least one rotary hydraulic jack (18-20, 21-24) about the said pitch axis, and so that the ball joint is rigid circumferentially about the pitch axis, whilst at the same time allowing, about its center (C), a relative freedom of angular movement of the blade under flapping and drag as a result of the shearing of the elastic material.

2. A device as claimed in claim 1, characterised in that at least one rotary hydraulic jack (18-20, 21-24), but preferably each of them, is a double-acting jack comprising at least two inner chambers (25) of variable volume connected to at least one servo valve (26) controlled in such a way that the feeding of one chamber (25) and its increase in volume are simultaneous with the corresponding drainage of another chamber (25) and its decrease in volume, so that the rotation of the jack rotor (21-24), and therefore of the blade (9), relative to the jack stator (18-20) and about the pitch axis (X-X) of the blade (9) can be controlled in the two opposite directions.

3. A device as claimed in one of claims 1 and 2, characterised in that the stator (18-20) and the rotor (21-24) of at least one jack are two substantially tubular members coaxial about the pitch axis (X-X) of the blade (9) and each having opposite the other a lateral surface of revolution about their common axis (X-X), at least one jack vane (20-24), but preferably two vanes diametrically opposed relative to the said common axis, projecting on each of the lateral surfaces and extending to the immediate vicinity of the opposite lateral surface, and the jack vane or jack vanes (20) projecting on one of the said lateral surfaces being offset circumferentially about the pitch axis (X-X) of the blade (9) in relation to the vane or vanes (24) projecting on the other lateral surface, in order to delimit at least two, but preferably four chambers (25) of variable volume with a small leakage flow from one chamber (25) to the other via the small radial play between the vanes (20, 24) and the mutually opposite surfaces of revolution.

4. A device as claimed in claim 3, characterised in that one of the said lateral surfaces of revolution is a cylindrical surface (18) of circular cross-section, on which each projecting vane (20) has substantially the form of a segment of a convexity facing towards the other lateral surface which is a surface in the form of a spherical cap (21), on which each projecting vane (24) likewise has substantially the form of a spherical segment connected by means of its convex face to the spherical cap and having a face in the form of a portion of a cylinder of circular cross-section opposite the said cylindrical surface (18).

5. A device as claimed in one of claims 1 to 4, characterised in that there is at least one axial stack, substantially concentric relative to the pitch axis (X-X) of the blade (9), of at least one rotary hydraulic jack (18-20, 21-24) and of at least one cylindrical pivot bearing (18, 22-23) for the pitch of the blade (9) and for fixing to the hub (1), which allows the blade (9) to rotate about its pitch axis relative to the hub (1).

6. A device as claimed in one of claims 1 to 5, characterised in that the rotor (21-24) of at least one rotary hydraulic jack is mounted rotatably relative to the corresponding jack stator (18-20) by means of at least one cylindrical bearing (18, 22-23) forming a pivot bearing for the pitch of the blade (9) and for fixing on the hub (1).

7. A device as claimed in one of claims 5 and 6, characterised in that at least one cylindrical bearing in a bearing (18, 22-23) with two axially spaced pairs of cylindrical bearing surfaces opposite one another, the rotor (21-24) and the stator (18-20) of at least one rotary hydraulic jack being integrated between the said pairs of bearing surfaces.

8. A device as claimed in one of claims 1 to 7, characterised in that the element or elements made of elastic material of the ball joint comprise two radially serrated rings (38, 39) adhesively bonded radially to the two rigid supports (21, 33) of the ball joint, between mutually opposite serrated surfaces of the said two rigid supports, in order to stiffen the connection between the ball-joint support (33) connected to the blade (9) and the rotor (21) of at least one rotary hydraulic jack in terms of rotation about the pitch axis (X-X) of the blade (9), so that any rotation of the jack rotor (21, 34) relative to the jack stator (18-20) is transmitted to the ball-joint support (33) connected to the blade (9), and therefore to the blade (9).

9. A device as claimed in any one of claims 1 to 8, in combination with claim 4, characterised in that the said surface of revolution in the form of a spherical cap (21) and the said jack vanes (20, 24) in the form of spherical segments are concentric relative to the ball joint (21, 33, 38-39).

10. A device as claimed in any one of claims 1 to 9, characterised in that at least one cylindrical pitch and fixing bearing (18, 22-23) is, on the one hand, connected to that (21) of the rigid supports (21, 33) of the ball joint which is integral in terms of rotation with at least one jack rotor (21, 24) and, on the other hand, substantially coaxial relative to the other rigid support (33) of the ball joint.

11. A device as claimed in any one of claims 1 and 10, characterised in that the ball joint (21, 33, 38-39) is, on the one hand radially in series, relative to the pitch axis (X-X) of the blade (9), with the axial stack of at least one rotary hydraulic jack (18-20, 21-24) and of at least one cylindrical pitch and fixing bearing (18, 22-23) and, on the other hand, substantially concentric relative to the corresponding cylindrical bearing or cylindrical bearings.

12. A device as claimed in one of claims 1 to 11, characterised in that there is at least one detector (50) of the position of the corresponding blade (9), the said detector (50) being a rotation transducer of the inductive or capacitive type which comprises at least one movable member connected in terms of rotation to the rotor (21-24) of at least one rotary jack and mounted rotatably relative to a member fixed in relation to the stator (18-20) of the said rotary jack, so as to supply an output signal indicating the respective relative angular position of the movable and fixed members of the rotation transducer.

13. A device as claimed in claim 12, characterised in that at least one fixed member of each rotation transducer (50) is seated in an axial recess formed in an axial end part of the stator (18-20) of the jack and/or of a pitch and fixing pivot bearing (18-20) in an axial stack with the said jack stator (18-20), and at least one movable member of each rotation transducer (50) is mounted rotatably about an axis parallel to the pitch axis (X-X) of the blade (9) in the said fixed member or about the latter and is integral in terms of rotation with a pinion (51) outside the said jack and/or the said bearing and in engagement with the toothing (52) of a ring (53) integral in terms of rotation with the rotor (2124) of the said jack.

14. A device as claimed in claim 13, characterised in that the toothed ring (53) has an annular form of revolution defined by the rotation about the pitch axis (X-X) of the blade (9) of a cross-section in the form of a U laid horizontally, so that the ring (53) has a radial flange supporting two coaxial tubular collars (54, 55), of which one (54) is fastened to the rotor (21-24) of the said jack and the other (55) carries the toothing (52) with radial teeth in engagement with the corresponding pinion (51) of each rotation transducer (50), each pinion (51) being seated in the recess delimited between the two collars (54, 55) and by the said flange of the ring (53) thus shaped as a cover for protecting the pinion or pinions (51) projecting axially relative to the stator (18-20) of the said jack and/or to the said part (23) of the bearing (18-23) in an axial stack with the said jack stator (18, 20).

15. A device as claimed in one of claims 1 to 14, characterised in that there is at least one hydraulic shock absorber (21, 33, 45, 46) for damping the angular movements of the blade (9) under drag.

16. A device as claimed in claim 15, characterised in that the hydraulic shock absorber is a rotary shock absorber of the type comprising a stator (21) and a rotor (33) which are substantially coaxial and which between them delimit at least one inner shock-absorber chamber (45) filled with a hydraulic fluid, such as a silicone oil or gel of high viscosity, and at least one shock-absorber vane (46) integral with the rotor (33) or stator (21) of the shock absorber and subdividing the inner chamber (45) into two damping chambers (45a, 45b) connected to one another by lamination means (47), so that any relative rotation of the shock-absorber stator (21) and shock-absorber rotor (33) about their common axis (B-B) causes a rotation of each vane (46) in the corresponding inner chamber (45), thereby compressing one of the two damping chambers (45a, 45b) and causing expansion in the other, so as to ensure a damping of the rotational movement as a result of the lamination, via the lamination means (47), of fluid circulating from the compressed chamber towards the expanded chamber, the shock-absorber stator (21) being integral in terms of rotation about the axis (X-X) of the blade (9) with the rotor (21-24) of at least one rotary hydraulic jack, and the shock-absorber rotor (33) being connected to the blade (9).

17. A device as claimed in claim 16, characterised in that the lamination means comprise a narrow passage (47) between the free end of each shock-absorber vane (46) carried by the shock-absorber rotor (33) or shock-absorber stator (21) and an opposite surface on the shock-absorber stator or shock-absorber rotor (33) respectively.

18. A device as claimed in one of claims 16 and 17, characterised in that each inner shock-absorber chamber (45) is sealed by at least one member made of elastic material (38, 39) connecting the shock-absorber rotor (33) to the shock-absorber stator (21).

19. A device as claimed in one of claims 15 to 18, characterised in that the hydraulic shock absorber (21, 33, 45-46) is radially in series, relative to the pitch axis (X-X) of the blade (9), with at least one rotary hydraulic jack (18-20, 21-24) and/or at least one axial stack of at least one rotary hydraulic jack and of at least one cylindrical bearing (18, 22-23).

20. A device as claimed in one of claims 16 to 19, in combination with claim 8, characterised in that the hydraulic shock absorber (21, 33, 45, 46) is at least partially integrated in the ball joint (21, 33, 38-39), at least one inner shock-absorber chamber (45) being delimited at least partially between the rigid supports (21, 33) of the ball joint and/or in a recess of at least one of the said rigid supports.

21. A device as claimed in claim 20, characterised in that the shock-absorber stator (21) and rotor (33) and at least one member made of elastic material (38, 39) connecting them to one another consist respectively of the rigid support (21) of the ball joint which is integral in terms of rotation with the rotor (21-24) of at least one rotary hydraulic jack, of the rigid support (33) of the said ball joint which is connected in terms of torsion to the blade (9), and of at least one element made of elastic material (39, 38) connecting the rigid supports (21, 33) of the ball joint.

22. A device as claimed in one of claims 15 to 21, in combination with claim 8, characterised in that the ball joint (21, 33 38, 39) and the rotary hydraulic shock absorber (21, 33, 45, 46) radially surround a rotary hydraulic jack, the rotor (21-24) of which surrounds the jack stator (18-20) radially, the shock-absorber rotor (33) possessing at least one rigid annular support (34, 35) in the outer radial position, and which possesses, radially inwards, portions (37) of concave surfaces adhesively bonded to elements of viscoelastic material (38, 39) likewise adhesively bonded to portions (32) of convex surfaces arranged radially outwards on the shock-absorber stator (21) which possesses at least one rigid annular support (30, 31) in the intermediate radial position, and which itself radially surrounds the jack stator (18-20) in the inner radial position.

23. A device as claimed in claim 22, characterised in that a rotary hydraulic jack, the rotor (21-24) of which surrounds the stator (18-20), is arranged in a recess made in the inner radial face of the shock-absorber stator (21) and/or of the rigid support (21) of the ball joint which is connected to the rotor (21-24) of the rotary jack.

24. A device as claimed in claim 22, characterised in that the rotor (21-24) of the rotary hydraulic jack at the same time forms the shock-absorber stator (21) and has portions of outer and inner radial faces which are respectively convex and concave portions of spheres centered on the center (C) of the ball joint (21, 33, 38, 39).

25. A device as claimed in claim 24, characterised in that the shock-absorber rotor and the rigid support of the ball joint which is integral with the blade (9) in terms of torsion about the pitch axis (X-X) of the blade consist essentially and simultaneously of an outer radial reinforcement (33) connected by means of the said elastic material (38, 39, 40) to an inner radial reinforcement (21) which at the same time forms the other rigid support of the ball joint, the shock-absorber stator carrying each shock-absorber vane (46) projecting radially outwards, and the rotor of the rotary jack carrying the movable vane or movable vanes (24) of the jack projecting radially inwards, opposite the jack stator which is shaped as a cylindrical sleeve (18) carrying the fixed jack vane or vanes (20) projecting radially outwards.

26. A device as claimed in claim 25, characterised in that in the cylindrical sleeve (18) and the inner reinforcement (21), on one side and/or the other of their jack vanes (20, 24) in the axial direction, have radially opposite cylindrical bearing surfaces forming a plain pitch and fixing bearing (18-22, 18-23), in the region of which the sealing of the rotary jack is ensured by at least one gasket (28, 29) seated in a radial groove made in one of the two mutually opposite bearing surfaces.

27. A device as claimed in one of claims 25 and 26, characterised in that the cylindrical sleeve (18) of the jack stator has inner axial flutes (19), by means of which it is intended to come into engagement with outer axial flutes on the periphery of a protuberance (3) of the hub (1), onto which the sleeve (18) is intended to be fixed in order to be immobilized in terms of rotation about its axis (X-X).

28. A device as claimed in one of claims 25 to 27, characterised in that at least one of the axial end parts of the cylindrical sleeve (18) is pierced with at least one conduit (27) for connecting at least one chamber of variable volume (25) of the jack to a hydraulic circuit located outside the device (17).

29. A device as claimed in one of claims 16 to 28, characterised in that the hydraulic shock absorber possesses two shock-absorber vanes (46) substantially radial and symmetrical relative to one another in relation to the relative axis of rotation (B-B) of the shock-absorber rotor (33) and stator (21), the vanes (46) being integral with the shock-absorber stator (21), and each of them extending substantially perpendicularly relative to the drag plane (T-T) of the blade (9) and substantially symmetrically above and below this drag plane (T-T), respectively in one of two shock-absorber chambers (45), each delimited by a recess extending radially and circumferentially in the rotor (33) of the shock absorber, by a part of the radial surface of the shock-absorber stator (21) opposite the corresponding recess in the shock-absorber rotor (33) and round the root of the vane (45) engaged in this recess, and by portions of annular surfaces of the member or members made of elastic material (38, 39) connecting the shock-absorber stator to the shock-absorber rotor (33).

30. A device as claimed in claim 29, characterised in that in the recesses of the shock-absorber rotor (33) accommodating the shock-absorber vanes (46) are closed radially outwards by means of a peripheral casing (36) mounted sealingly (42) and removably on the perimeter of the shock-absorber rotor (33),

31. A device as claimed in one of claims 29 and 30, characterised in that each shock-absorber vane (46) is fastened unremovably, preferably by electron-beam welding, to the said portion of the face of the shock-absorber stator (21) which forms the bottom of a recess accommodating the vane (46).

32. A device as claimed in one of claims 16 to 31, characterised in that each inner chamber (45) of the hydraulic shock absorber is connected by means of at least one communication passage (58, 59) to at least one chamber (56) for compensating the expansions of the hydraulic damping fluid pressurized by means of a pressurizing mechanism (57) ensuring static pressurization of the shock absorber (21, 33, 45, 46).

33. A device as claimed in claim 32, characterised in that the communication passage or communication passages (58, 59) between a compensation chamber (56) and an inner shock-absorber chamber (45) is or are calibrated so as to form a dynamic filter for the operating frequencies of the shock absorber.

34. A device as claimed in one of claims 32 and 33, in combination with claim 31, characterised in that the communication passage or communication passages between the inner shock-absorber chamber (45) and the compensation chamber (56) is or are delimited by a radial play (59) between the peripheral casing (36) on the one hand and the shock-absorber rotor (33) and/or a rigid support of the ball joint on the other hand.

35. A device as claimed in one of claims 32 to 34, characterised in that the pressurinzing mechanism comprises at least one preferably elastically deformable flexible diaphragm (57) which at least partially delimits the corresponding compensation chamber (56).

36. A device as claimed in claim 34, characterised in that the flexible diaphragm is a sealed bladder (57) seated in the compensation chamber (56) from outside the pressurizing mechanism.

37. A device as claimed in claim 36, wherein the seating of the compensation chamber (56) is ensured by at least one element made of elastic material (38, 39, 40) preferably belonging to the shock absorber and/or to the ball joint.

38. A device as claimed in one of claims 32 to 37, characterised in that at least one compensation chamber (56) is at least partially delimited between the shock-absorber rotor (33) and stator (21) and/or in a recess of one of the said shock-absorber rotor (33) and stator (21), and the sealing of the said compensation chamber (56) is ensured by at least one elastic element (38, 39, 40) for connecting the shock-absorber rotor (33) to the shock-absorber stator (21).

39. A device as claimed in claim 38 in combination with claim 30, characterised in that there are two hydraulic compensation chambers (56) substantially symmetrical relative to one another in relation to the relative axis of rotation (B-B) of the shock-absorber rotor (33) and stator (21) and in relation to the drag plane (T-T) of the blade (9), each being delimited at least partially by one of the two recesses extending circumferentially, in positions alternating in this direction with the recesses of the shock-absorber chambers (45), in one of the shock-absorber rotor (33) and stator (21) and/or of the rigid supports (21, 33) of the ball joint and/or in at least one part of at least one elastic element (38, 39, 40) of the shock absorber and/or of the ball joint.

40. A device as claimed in one of claims 32 to 39, characterised in that each inner shock-absorber chamber (45) is separated from each of the compensation chambers (56) between which it is located, in the circumferential direction, by a solid part made of viscoelastic material (40) integral with the element or elements made of elastic material (38, 39) connecting to one another the shock-absorber rotor (33) and stator (21) and/or the two rigid supports (21, 33) of the ball joint.

41. A device as claimed in one of claims 5 to 40, characterised in that at least one of the pitch and fixing bearings is a plain dry bearing (78, 82-83), with at least one self-lubricating ring (89) seated in an annular retaining groove made in that (82, 83) of two mutually opposite cylindrical bearing surfaces of this bearing which is located on the jack rotor (81-84) and/or the shock-absorber stator (81) and/or the rigid support (81) of the ball joint which is connected to the jack rotor (81-84).

42. A device as claimed in one of claims 5 to 41, characterised in that there is also a device for the automatic take-up of the play of at least one pitch and fixing bearing (78, 82-83).

43. A device as claimed in claim 42, in combination with claim 32, characterised in that the device for the automatic take-up of play is a hydraulic device comprising at least one compensation chamber (116) filled with a hydraulic fluid pressurized by means of at least one pressurizing mechanism (117) and in communication with each of the retaining grooves of the bearing (78, 82-83) via at least one conduit (122) opening out between the bottom of the groove and the corresponding self-lubricating ring (89) mounted sealingly in the said groove, so that the take-up of play is ensured as a result of the diametral displacement of the ring (89) under the action of the pressure of the hydraulic fluid in the compensation chamber or compensation chambers (116) of the play take-up device.

44. A device as claimed in claim 43, characterised in that the mechanism for pressurizing a compensation chamber (116) of the play take-up device comprises at least one preferably elastically deformable flexible diaphragm (117) delimiting at least partially the said compensation chamber (116).

45. A device as claimed in claim 44, characterised in that the said flexible diaphragm of the pressurizing mechanism of the play take-up device is a sealed inflatable bladder (117) seated in the said corresponding compensation chamber (116).

46. A device as claimed in, claim 45, in combination with one of claims 33 to 41, characterised in that at least one chamber (116) for compensating the expansions of hydraulic fluid of the shock absorber (81, 93) and its pressurizing mechanism (117) form simultaneously and respectively a compensation chamber of the hydraulic play take-up device (116, 117, 122, 89) and its pressurizing mechanism.

47. A device as claimed in claim 46, characterised in that the conduit or conduits (122) connecting a compensation chamber (116) to a retaining groove of a ring (89) of a bearing is or are calibrated so as to form a dynamic filter for the operating frequencies of the shock absorber (81, 93).

48. A device as claimed in one of claims 43 to 47, in combination with claim 17, characterised in that the hydraulic take-up device is at least partially integrated in the hydraulic shock absorber.

49. A device as claimed in one of claims 1 to 48, characterised in that at least one rotary hydraulic jack (18-20, 21-24) and, where appropriate, at least one cylindrical pitch and fixing bearing (18, 22-23), at least one position sensor (50), a ball joint (21, 33, 38, 39), a rotary shock absorber (21, 33, 45, 46) and a play take-up device (116, 117, 122, 89) is or are mounted freely in terms of limited axial translational motion as a result of an axial assembly play of the stator (18-20) of the jack or jacks on the hub (1).

50. A rotor hub for a variable-pitch rotor of a rotarywing aircraft, of the type comprising a central body (2) of a hub (1), centered on the axis of rotation (A) of the hub, and extensions (3) which are radial relative to the axis of rotation (A) and are integral with the central body (2) and which are of a number equal to the number of the blades (9) of the rotor, so as each to ensure the connection of a blade (9) to the hub (1), characterised in that there are also hydraulic devices (17) for the individual control of the pitch of a blade (9), as claimed in one of claims 1 to 50, which are of a number equal to the number of blades (9) and each of which is mounted on a radial extension (3), so that the stator (18-20) of the rotary hydraulic jack or rotary hydraulic jacks of the corresponding device is retained on the said extension (3) and immobilized in terms of rotation about the pitch axis (X-X) of the corresponding blade (9).

51. A rotor hub as claimed in claim 50, of the type of which each radial extension (3) supports, for connection to the corresponding blade (9), at least one pitch bearing (18, 22-23) and, centered on the axis (X-X) of the pitch bearing, a ball joint (21, 33) with at least one element made of elastic material (38, 39, 40) allowing, about its center C, a relative freedom of movement of the corresponding blade (9) under flapping and under drag, as a result of the shearing of the elastic material, characterised in that at least one rotary jack (18-20, 21-24) of the corresponding hydraulic device for the individual control of the pitch of a blade (9) is combined with at least one pitch bearing (18, 22-23), and the rotor (21) of the rotary jack or rotary jacks of the said hydraulic device is integral in terms of rotation about the axis (X-X) of the pitch bearing or pitch bearings with one (21) of two rigid supports (21, 33) of the ball joint, between which the element or elements made of viscoelastic material (38, 39, 40) is or are mounted.

52. A rotor hub as claimed in one of claims 50 and 51, of the type comprising, for each blade (9) of the rotor, a connecting member rigid under tension, but flexible under bending and torsion (4), coupled by means of a footing part (5) to a radial extension (3) and intended to be coupled to a blade (9), in order to retain the blade counter to the centrifugal force and in order to allow the flapping and drag oscillations of the blade and the angular variations of its pitch, and a member rigid under bending and torsion (14) connected to the said radial extension (3) and intended to be made integral in terms of rotation with the blade (9) ; about the pitch axis (X-X) of the latter, characterised in that the connection of the said member rigid under bending and torsion (14) to the said radial extension (3) is made at least partially by means of the corresponding hydraulic device (17) for the individual control of the pitch of a blade (9), so that the rotor (21) of the rotary jack or rotary jacks of this hydraulic device is connected in terms of rotation about the pitch axis (X-X) of the blade (9) to the said member rigid under bending and torsion (14).

53. A rotor hub as claimed in one of claims 52 and 51, of the type comprising, for connecting each blade (9) to the corresponding radial extension (3), a combined device (17) of a pitch bearing (18, 22-23) with an elastic ball joint (21, 33, 38, 39, 40) and with a hydroelastic shock-absorber (21, 33, 45, 46), in which the shock absorber is rotary and integrated in the ball joint comprising at least one elastic element (38, 39) retained between two rigid supports (21, 33), of which a first (33) is intended to be fixed to the corresponding blade (9) and the second (21) is connected to the said extension (3) by means of at least one pitch bearing (18, 22, 23), so that the combined bearing device (17) allows the angular variation of the pitch of the corresponding blade (9) as a result of the rotation of the ball joint and shock absorber about the axis (X-X) of the pitch bearing or pitch bearings and ensures incorporated damping of the drag oscillations of the blade (9), characterised in that the said corresponding hydraulic device for the individual control of the pitch is at least partially integrated in the said corresponding combined bearing device (17), so that at least one rotary jack (18-20, 21-24) is arranged inside the ball joint and the shock absorber (21, 38, 39, 33) and is stacked axially with at least one pitch bearing (18, 22, 23), and that the rotor (21-24) of the rotary jack or rotary jacks is integral with the second rigid support (21) of the ball joint.

54. A rotor hub as claimed in claim 53, in combination with claim 52, of the type in which the said connecting member flexible under bending and torsion is an elongate arm (4) forming a tie substantially radial relative to the axis (X) of the hub (1) and for retaining the corresponding blade (9) counter to the centrifugal force, the inner radial end part (5) of the said arm (4) forming the said footing part which is retained inside the corresponding radial extension (3), of cylindrical and tubular shape, of an axis (X-X) substantially perpendicular to the axis of rotation (A) of the hub (1), whilst the outer radial end part (7) of the said arm (4) is fixed, on the one hand, to an intermediate connection piece (8) serving as a fastening for the corresponding blade (9) and, on the other hand, to the outer radial end part (15) of the said member rigid under bending and torsion, which is shaped as a rigid cuff (14) which surrounds the said elongate arm (4) without contact up to the vicinity of the central body (2) of the hub (1) and of which the inner radial end part (16) bears on the said tubular extension (3) by means of the said combined bearing device (17), about the footing (5) of the elongate arm (4), characterised in that the corresponding hydraulic device for the individual control of the pitch of the corresponding blade (9) is mounted about the tubular extension (3) by means of at least one cylindrical sleeve (18) which is integral with at least one stator (18-20) of a rotary jack of the said device and which is fitted onto the tubular extension (3) and immobilized in terms of rotation relative to the said extension (3) by means of axial flutes (19) in engagement with matching flutes on the said extension (3).

55. A rotor hub as claimed in one of claims 50 to 54, characterised in that the said central body (2) of the hub (1) is tubular and accommodates a hydraulic servo-distributor (49) mounted as a reference rotating with the hub (1) and in communication via rigid pipelines (48) with each of the rotary jacks (18-20, 21-24) of the hydraulic devices for the individual control of the pitch of the blades.

56. A rotor hub as claimed in one of claims 50 to 55, characterised in that each servo-distributor for feeding a rotary jack (18-20, 21-24) of a hydraulic device for the individual control of the pitch of a blade is a servo-distributor of the servo-valve type, of which each servo valve (9) is mounted directly on the stator (18) of the said jack.

57. A variable-pitch rotor for a rotary-wing aircraft, which can be used particularly as a main helicopter rotor or as a tilting propeller of a convertible aircraft, comprising a rotor hub (1) driven in rotation about an axis of rotation (A) of the rotor by means of a rotor mast, and blades (9), each of which is retained on the hub (1) by means of at least one connecting member (4) rigid under tension, but flexible under bending and torsion, allowing the flapping and drag oscillations of the corresponding blade (9) and the angular variations of its pitch under the effect of a member rigid under bending and torsion (14) which is connected to the blade (9), characterised in that there is also, for each blade (9), a rotary-reference pitch-control system designed as a hydraulic and rotary servo-control which comprises a hydraulic device for the individual control of the pitch of a blade (9), as claimed in one of claims 1 to 49, mounted in such a way that the stator (18) of the rotary jack or rotary jacks of the said hydraulic device is retained on the hub (1) and immobilized on the latter in terms of rotation about the pitch axis (X-X) of the corresponding blade (9), whilst the rotor (21) of the rotary jack or rotary jacks is connected in terms of rotation to the member (14) rigid under bending and torsion about the said pitch axis (X-X).

58. A rotor as claimed in claim 57, of which the hub (1) comprises a central body (2) which is tubular, integral with one end of the likewise tubular rotor mast and coaxial relative to the said rotor mast, characterised in that the rotary jacks (18-20, 21-24) of all the hydraulic devices for the individual control of the pitch of a blade (9) are connected to a servo-distributor accommodated in the central body (2) of the hub (1) and connected to at least one hydraulic power circuit accommodated at least partially in the rotor mast.

59. A rotor as claimed in claim 58, of which the servo-distributor comprises servo valves which are of the electrically controlled type, characterised in that the rotor mast also accomodates an electrical collector for the transfer of, on the one hand, control signals of the said servo valves and, on the other hand, signals coming from position detector (50) of the various blades (9).

60. A rotor as claimed in one of claims 58 and 59, characterised in that the servo valves are mounted as a rotary reference between at least one rotary servo-distributor and the corresponding rotary jacks (19-20, 21-24).

61. A rotor as claimed in one of claims 57 to 60, characterised in that there is a rotor hub (1) as claimed in one of claims 51 to 57.

**Ansprüche**

1. Hydraulische Vorrichtung zur individuellen Steuerung des Einstellwinkels eines Blattes (9) am Rotor eines Fluggeräts wie etwa dem Rotor eines Hubschraubers oder der schwenkbaren Luftschraube eines konvertiblen Fluggerätes, mit: wenigstens einer hydraulischen Stellvorrichtung (18-20, 21-24) zur Steuerung des Einstellwinkels des Blattes (9), wobei die Stellvorrichtung dazu vorgesehen ist, am Rotor angebracht und in Drehrichtung mit diesem angetrieben zu werden, wobei jede Stellvorrichtung mit wenigstens einem Leistungshydraulikkreis über wenigstens einen Servo-Verteiler verbunden ist, der sich ebenfalls mit dem Rotor dreht und die Versorgung wenigstens einer Stellvorrichtung mit unter Druck stehender Hydraulikflüssigkeit steuert, wobei jeder Servo-Verteiler Steuersignale empfängt, die aus Vorsteuerungssignalen und/oder aus Zustandssignalen wenigstens eines Blattes (9), die aus wenigstens einem Detektor (50) der Position und/oder der Bewegungen und/oder der Verformungen wenigstens eines Blattes (9) hervorgehen, entwickelt werden, wobei eine Stellvorrichtung, jedoch vorzugsweise jede von ihnen, ein hydraulischer Drehsteller ist, dessen Drehachse mit der Längsachse der Einstellwinkeländerung (X-X) eines jeden Blattes (9) übereinstimmt, dessen Stator (18-20) mit dem Mittelteil der Nabe (1) des Rotorkopfes des Fluggeräts fest verbunden ist und dessen zum Stator (18, 20) koaxialer Rotor (21-24) am Blatt (9) drehfest angeschlossen ist und der wenigstens eine Innenkammer (25) mit variablem Volumen enthält, das wenigstens teilweise durch den Rotor (21-24) und durch den Stator (18-20) des Stellers begrenzt wird und mit wenigstens einem Steuerungs-Servoverteiler verbunden ist, derart, daß die Füllung der Kammer (25) mit unter Druck stehender Hydraulikflüssigkeit und ihre Volumenvergrößerung oder die Entleerung der Kammer und ihre Volumenverkleinerung eine Drehung des Rotors des Stellers (21-24) in bezug auf den Stator (18, 20) des Stellers um die Einstellwinkelachse (X-X) des Blattes (9) bewirken, die auf das Blatt (9) Übertragen wird und dessen Anströmwinkel verändert, dadurch gekennzeichnet, daß sie außerdem ein Kugelgelenk (21, 33, 38-39) umfaßt, das im wesentlichen auf der Einstellwinkelachse (X-X) des Blattes (9) zentriert ist und wenigstens ein Element aus elastischem Material (38, 39) enthält, das im wesentlichen und wenigstens teilweise die Form wenigstens eines Teils wenigstens einer sphärischen Kalotte besitzt und zwischen zwei starren Trägern (21, 33) gehalten wird, von denen einer (33) verdrehungsfest um die Einstellwinkelachse (X-X) des Blattes mit dem Blatt (9) vorgesehen ist und der andere (21) drehtest um die Einstellwinkelachse mit dem Rotor wenigstens eines hydraulischen Drehstellers (18-20, 21-24) verbunden ist, derart, daß das Kugelgelenk in Umfangsrichtung um die Einstellwinkelachse starr ist und dabei durch eine Scherbeanspruchung des elastischen Materials um seinen Mittelpunkt (C) eine relative Winkelbewegungsfreiheit des Blattes bezüglich Schlag und Nachlauf zuläßt.

2. Vorrichtung gemäß Anspruch 1, dadurch gekennzeichnet, daß wenigstens ein hydraulischer Drehsteller (18-20, 21-24), aber vorzugsweise jeder von ihnen, ein doppelt wirkender Steller ist, der wenigstens zwei Innenkammern (25) mit variablem Volumen umfaßt, die mit wenigstens einem Servorventil (26) verbunden sind, das so gesteuert wird, daß das Füllen einer Kammer (25) und ihre Volumenvergrößerung gleichzeitig mit der entsprechenden Leerung der anderen Kammer (25) und ihrer Volumenverringerung stattfindet, damit die Drehung des Rotors des Stellers (11-14) und daher des Blattes (9) in bezug auf den Stator des Stellers (18-20) und in bezug auf die Einstellwinkelachse (X-X) des Blattes (9) in den zwei entgegengesetzten Richtungen gesteuert werden kann.

3. Vorrichtung gemäß einem der Ansprüche 1 und 2, dadurch gekennzeichnet, daß der Stator (18-20) und der Rotor (21-24) wenigstens eines Stellers zwei im wesentlichen röhrenförmige Elemente sind, die im wesentlichen Koaxial um die Einstellwinkelachse (X-X) des Blattes (9) angeordnet sind und jedes in bezug auf das andere eine Umlaufmantelfläche um ihre gemeinsame Achse (X-X) darstellt, wobei ein Schieber des Stellers (20-24), jedoch vorzugsweise zwei im bezug auf die gemeinsame Achse diametral entgegengesetzte Schieber, in Richtung einer jeden der Mantelflächen vorspringen und sich bis in die unmittelbare Nähe der betreffenden Mantelfläche erstrecken und wobei der oder die Schieber des Stellers (20), die in Richtung einer der Mantelflächen vorstehen, in Umfangsrichtung um die Einstellwinkelachse (X-X) des Blattes (9) in bezug auf den oder die Schieber (24), die zur anderen Mantelfläche vorstehen, versetzt ist (sind), damit wenigstens zwei, jedoch vorzugsweise vier Kammern (25) mit variablen Volumen begrenzt werden, die mittels eines geringen radialen Spiels zwischen den Schiebern (20, 24) und der betreffenden Umlauffläche eine geringe Leckrate vor einer Kammer (25) zur anderen besitzen.

4. Vorrichtung gemäß Anspruch 3, dadurch gekennzeichnet, daß eine der Umlaufmantelflächen eine Zylinderfläche (18) mit kreisförmigem Querschnitt ist, auf der jeder vorstehende Schieber (20) im wesentlichen die Form eines Segmentes mit zur anderen Mantelfläche weisender Konvexität hat, wobei die andere Mantelfläche eine sphärische Kalotte (21) ist, auf der jeder vorstehende Schieber (24) ebenfalls im wesentlichen die Form eines sphärischen Segmentes hat, die mit ihrer konvexen Fläche mit der sphärischen Kalotte verbunden ist und gegenüber der Zylinderfläche (18) eine Fläche mit einem zylindrischen Bereich mit kreisförmigen Querschnitt aufweist.

5. vorrichtung gemäß einem der Ansprüche 1 bis 4, dadurch gekennzeichnet, daß sie wenigstens eine in bezug auf die Einstellwinkelachse (X-X) des Blattes (9) axiale und im wesentlichen konzentrische Anordnung wenigstens eines hydraulischen Drehstellers (18-20, 21-24) und wenigstens eines zylindrischen Lagers (18, 22-23) für die Einstellung des Anströmwinkels des Blattes (9) und für den Einbau in der Nabe (1), das die Drehung des Blattes (9) in bezug auf die Nabe (1) um ihre Einstellwinkelachse ermöglicht, umfaßt.

6. vorrichtung gemäß einem der Ansprüche 1 bis 5, dadurch gekennzeichnet, daß der Rotor (21-24) wenigstens eines hydraulischen Drehstellers mittels wenigstens eines zylindrischen Lagers (18, 22-23), das ein Lager für die Einstellung des Anströmwinkels des Blattes (9) und für den Einbau in der Nabe (1) bildet, drehbar gegenüber dem entsprechenden Stator des Stellers (18-20) angebracht ist.

7. Vorrichtung gemäß einem der Ansprüche 5 und 6, dadurch gekennzeichnet, daß wenigstens ein zylindrisches Lager ein Lager (18, 22-23) mit zwei in einem gegenseitigen axialen bestand befindlicher Paarer von zylindrischen Lagerflächen ist, wobei dar Rotor (21-24) und der Stator (18-20) wenigstens eines hydraulischen Drehstellers zwischen die Paare von Lagerflächen eingesetzt sind.

8. Vorrichtung gemäß einem der Ansprüche 1 bis 7, dadurch gekennzeichnet, daß das oder dia Elemente das Kugelgelenks aus elastischem Material zwei in radialer Richtung ausgezackte Kränze (38, 39) umfassen, die in radialer Richtung mit den gegenüber den zwei starren Trägern (21, 33) befindlichen gezackten Oberflächen an den zwei starren Trägern (21, 33) des Kugelgelenkes haften, damit die Verbindung zwischen dem Träger des mit dem Blatt (9) verbundenen Gelenks und dem Rotor (21) wenigstens eines hydraulischen Drehstellers bei der Drehung um die Einstellwinkelachse (X-X) des Blattes (9) versteift wird, derart, daß jede Drehung des Rotors des Stellers (21, 34) in bezug auf den Stator des Stellers (18-20) an den Träger des mit dem Blatt (9) verbundenen Gelenks (33) und folglich an das Blatt (9) übertragen wird.

9. Vorrichtung gemäß einem der mit dem Anspruch 4 kombinierten Ansprüche, dadurch gekennzeichnet, daß die Umlauffläche der sphärischen Kalotte (21) und die Schieber (20, 24) des Stellers in den sphärischen Segmenten konzentrisch zum Kugelgelenk (21, 33, 38-39) sind.

10. Vorrichtung gemäß einem der Ansprüche 1 bis 9, dadurch gekennzeichnet, daß wenigstens ein zylindrisches Lager für den Anströmwinkel und den Einbau (18, 22-23) einerseits mit demjenigen (21) der starren Träger (21, 33) des Kugelgelenks verbunden ist, der drehfest mit wenigstens einem Rotor (21, 24) des Stellers verbunden ist, und andererseits im wesentlichen koaxial zum anderen starren Träger (33) des Kugelgelenks ist.

11. Vorrichtung gemäß einem der Ansprüche 1 bis 8, dadurch gekennzeichnet, daß das Kugelgelenk (21, 33, 38-39) einerseits in radialer Richtung nacheinander in bezug auf die Einstellwinkelachse (X-X) des Blattes (9) mit der axialen Anordnung wenigstens eines hydraulischen Drehstellers (18-20, 21-24) und wenigstens eines zylindrischen Lagers für den Anströmwinkel und den Einbau (18, 22-23) verbunden ist und andererseits im wesentlichen konzentrisch zu dem(den) entsprechenden zylindrischen Lager(n) ist.

12. Vorrichtung gemäß einem der Ansprüche 1 bis 11, dadurch gekennzeichnet, daß sie wenigstens einen Detektor (50) für die Position des entsprechenden Blattes (9) umfaßt, wobei der Detektor (50) ein Drehsignalumformer vom induktiven oder kapazitiven Typ ist, der wenigstens ein bewegliches Element aufweist, das drehfest mit dem Rotor (21-24) wenigstens eines Drehstellers verbunden ist und drehbar in bezug auf ein festes Element gegenüber dem Stator (18-20) des Drehstellers angebracht ist, derart, daß er ein Ausgangssignal liefert, das die relative Winkelposition des (der) beweglichen bzw. des (der) festen Elemente des Drehsignalumformers angibt.

13. Vorrichtung gemäß Anspruch 12, dadurch gekennzeichnet, daß sich wenigstens ein festes Element eines jeden Drehsignalumformers (50) in einer axialen Aussparung befindet, die in einem axialen Endbereich des Stators (18-20) des Stellers und/oder eines Lagers zum Einstellen des Anströmwinkels und zum Einbau (18-20), die in axialer Richtung mit dem Stator (18-20) des Stellers angeordnet sind, ausgespart ist, und wenigstens ein bewegliches Element eines jeden Drehsignalumformers (50) drehbar um eine zur Einstellwinkelachse (X-X) des Blattes (9) parallele Achse im festen Element oder um dieses letztere angebracht ist und drehfest mit einem Ritzel (51), das sich außerhalb des Stellers und/oder des Lagers befindet, verbunden ist und mit mit der Zahnung (52) eines drehfest mit dem Rotor (21-24) des Stellers verbundenen Kranzes (53) in Eingriff ist.

14. Vorrichtung gemäß Anspruch 13, dadurch gekennzeichnet, daß der Zahnkranz (53) eine durch die Drehung um die Einstellwinkelachse (X-X) des Blattes (9) definierte ringförmige Umlaufform mit einem Querschnitt, der einem liegenden U entspricht, besitzt, derart, daß der Kranz (53) ein radiales Schild aufweist, das zwei röhrenförmige, koaxiale Ränder (54, 55) trägt, von denen einer (54) am Rotor (21-24) des Stellers befestigt ist und der andere (55) die Zahnung (52) mit radialen Zähnen, die mit dem jedem Drehsignalumformer (50) entsprechenden Ritzel (51) in Eingriff sind, trägt, wobei sich jedes Ritzel (51) in der von den zwei Rändern (54, 55) und dem Schild des Kranzes (53) begrenzten Aussparung befindet, so daß die Aussparung eine Schutzmaske für das oder die in axialer Richtung in bezug auf den Stator (18-20) des Stellers und/oder in bezug auf dasjenige Teil des Lagers (18-22), das in axialer Richtung mit dem Stator (18-20) des Stellers angeordnet ist, vorspringende(n) Ritzel (51) bildet.

15. Vorrichtung gemäß einem der Ansprüche 1 bis 14, dadurch gekennzeichnet, daß sie wenigstens eine hydraulische Dämpfungsvorrichtung (21, 33, 45, 46) für die Winkelbewegungen des Blattes (9) bezüglich des Nachlaufs umfaßt.

16. Vorrichtung gemäß Anspruch 15, dadurch gekennzeichnet, daß die hydraulische Dämpfungsvorrichtung eine Rotationdämpfungsvorrichtung von einer Bauart mit einem Stator (21) und einern Rotor (33), die im wesentlichen koaxial sind, wenigstens einer inneren Dämpfungskammer (45), die mit einer Hydraulikflüssigkeit wie etwa einem Silikonöl oder -gel mit hoher Viskosität gefüllt ist, und wenigstens einem Dämpfungsschieber (46), der mit dem Rotor (33) oder dem Stator (21) der Dämpfungsvorrichtung fest verbunden ist und die Innenkammer (45) in zwei Dämpfungskammern (45a, 45b) unterteilen, die miteinander durch Schichtbildungsmittel (47) verbunden sind, ist, derart, daß bei jeder relativen Drehung des Stators (21) gegenüber dem Rotor (33) der Dämpfungsvorrichtung um ihre gemeinsame Achse (B-B) eine Drehung eines jeden Schiebers (46) in der entsprechenden Innenkammer (45) zur Folge hat und eine der zwei Dämpfungskammern (45a und 45b) komprimiert und in der anderen eine Druckminderung hervorruft, derart, daß durch die Schichtbildung der in der komprimierten Kammer zirkuliererden Flüssigkeit durch die Schichtbildungsmittel (47) in die durckverminderte Kammer eine Dämpfung der Drehbewegung gewährleistet wird, wobei der Stator (21) der Dämpfungsvorrichtung drehfest um die Achse (X-X) des Blattes (9) mit dem Rotor (21-24) wenigstens eines hydraulischen Drehstellers verbunden ist und der Rotor (33) der Dämpfungsvorrichtung an das Blatt (9) angeschlossen ist.

17. Vorrichtung gemäß Anspruch 16, dadurch gekennzeichnet, daß die Schichtbildungsmittel zwischen dem freien Ende eines jeden vom Rotor (33) oder vom Stator (21) der Dämpfungsvorrichtung getragenen Schiebers der Dämpfungsvorrichtung (46) und einer fläche gegenüber dem entsprechenden Stator (21) oder dem Rotor (33) der Dämpfungsvorrichtung einen engen Durchlaß (47) aufweisen.

18. Vorrichtung gemäß einem der Ansprüche 16 und 17, dadurch gekennzeichnet, daß die Dichtheit einer jeden Innenkammer der Dämpfungsvorrichtung (45) durch wenigstens ein Element aus elastischem Material (38, 39) gewährleistet wird, das den Rotor (33) der Dämpfurgsvorrichtung mit dem Stator (21) der Dämpfungsvorrichtung verbindet.

19. Vorrichtung gemäß einem der Ansprüche 15 bis 18, dadurch gekennzeichnet, daß die hydraulische Dämpfungsvorrichtung (21, 33, 45-46) in radialer Richtung in bezug auf die Einstellwinkelachse (X-X) des Blattes (9) mit wenigstens einens hydraulischen Drehsteller (18-20, 21-24) und/oder wenigstens einer axialer Anordnung wenigstens eines hydraulischen Drehstellers und wenigstens eines zylindrischen Lagers (18, 22-23) in einer Reihe angeordnet ist.

20. Vorrichtung gemäß einem der Ansprüche 16 bis 19, dadurch gekennzeichnet, daß die hydraulische Dämpfungsvorrichtung (21, 33, 45, 46) wenigstens teilweise in das Kugelgelenk (21, 33, 38-39) integriert ist, wobei wenigstens eine Innenkammer der Dämpfungsvorrichtung (45) wenigstens teilweise durch die starren Träger (21, 33) des Kugelgelenks und/oder eine Aussparung wenigstens eines der starren Träger begrenzt wird.

21. Vorrichtung gemäß Anspruch 20, dadurch gekennzeichnet, daß der Stator (21) und der rotor (33) der Dämpfungsvorrichtung und wenigstens ein Element aus elastischem Material (38, 39), das sie miteinander verbindet, durch den starren Träger (21) des Kugelgelenks, der drehfest mit dem Rotor (21-24) wenigstens eines Drehstellers verbunden ist, bzw. durch den starren Träger (33) des Kugelgelenks, der verdrehungsfest am Blatt (9) angeschlossen ist, bzw. durch wenigstens ein Element aus elastischem Material (39, 38), das die starren Träger (21, 33) des Kugelgelenks verbindet, gebildet werden,

22. Vorrichtung gemäß einem der Ansprüche 15 bis 21, dadurch gekennzeichnet, daß das Kugelgelenk (21, 33, 38, 39) und die hydraulische Drehdämpfungsvorrichtung (21, 33, 45, 46) in radialer Richtung einen hydraulischen Drehsteller: umgeben, dessen Rotor (21-24) in radialer Richtung den Stator (18-20) des Stellers umgibt, wobei der Rotor der Dämpfungsvorrichtung (33) in der in radialer Richtung äußeren Position wenigstens einen ringförmigen und starren Träger (34, 35) umfaßt, der radial nach innen konkave Oberflächenbereiche (37) aufweist, die an Elementen aus einem viskoelastischen Material (38, 39) haften, die wiederum an konvexen Oberflächenbereichen (32) haften, die radial nach innen durch den Stator der Dämpfungsvorrichtung (21) gebildet werden, wobei der Stator in einer radialen Zwischenposition wenigstens einen ringförmigen und starren Träger (30, 31) umfaßt, der selbst in einer in radialer Richtung inneren Position den Stator (18-20) des Stellers in radialer Richtung umgibt.

23. Vorrichtung gemäß Anspruch 22, dadurch gekennzeichnet, daß ein hydraulischer Drehsteller, dessen Rotor (21-24) den Stator (18-20) umgibt, in einer Aussparung angeordnet ist, die in der in radialer Richtung inneren Fläche des Stators der Dämpfungsvorrichtung (21) und/oder des starren Trägers (21) des Kugelgelenks, der am Rotor (21-24) des Drehstellers angeschlossen ist, ausgespart ist.

24. Vorrichtung gemäß Anspruch 22, dadurch gekennzeichnet, daß der Rotor (21-24) des hydraulischen Drehstellers gleichzeitig den Stator (21) der Dämpfungsvorrichtung bildet und Bereiche von in radialer Richtung äußeren und inneren Flächen aufweist, die sphärisch konvexe bzw. konkave Bereich darstellen und im Mittelpunkt (C) des Kugelgelenks (21, 33, 38, 39) zentriert sind.

25. Vorrichtung gemäß Anspruch 24, dadurch gekennzeichnet, daß der Rotor der Dämpfungsvorrichtung und der starre Träger des Kugelgelenks, der mit dem Blatt (9) verdrehungsfest um die Einstellwinkelachse (X-X) verbunden ist, im wesentlichen und gleichzeitig durch eine in radialer Richtung äußere Ummantelung (33) gebildet werden, die durch das elastische Material (38, 39, 40) mit einer in radialer Richtung inneren Ummantelung (21) verbunden ist, welche gleichzeitig den anderen starren Träger des Kugelgelenks darstellt, wobei der Stator der Dämpfungsvorrichtung jeden der in radialer Richtung nach außen vorstehenden Dämpfungsschieber (46) trägt und der Rotor des Drehstellers den oder die in radialer Richtung nach innen vorstehenden beweglichen Schieber (24) des Stellers gegenüber dem Stator des Stellers trägt, der als zylindrische Muffe (18) ausgebildet ist, die den oder die in radialer Richtung nach außer vorsteherden festen Schieber (20) des Stellers trägt.

26. Vorrichtung gemäß Anspruch 25, dadurch gekennzeichnet, daß die zylindrische Muffe (18) und die innere Ummantelung (21) in axialer Richtung auf einer und/oder auf der anderen Seite ihrer Schieber des Stellers (20, 24) in radialer Richtung einander gegenüber angeordnete, zylindrische Lagerflächen besitzen, die ein glattes Lager für die Einstellung des Anströmwinkels (18-22, 18-23) und für der Einbau bilden, auf dessen Höhe die Dichtheit des Drehstellers durch wenigstens eine Dichtung (28, 29) gewährleistet ist, die sich in einer radialen Nut befindet, die in einem der zwei einander gegenüberliegenden Lager ausgespart ist.

27. Vorrichtung gemäß einem der Ansprücle 25 und 26, dadurch gekennzeichnet, daß die zylindrische Muffe (18) des Stators des Stellers eine axiale Innenriffelung (19) aufweist, durch die sie mit einer axialen Außenriffelung auf der Umfangsfläche einer Ausstülpung (3) der Nabe (1) in Eingriff gelangen soll, wobei die Muffe (18) dazu vorgesehen ist, auf der Nabe (1) angebracht zu werden, um in Drehrichtung um ihre Achse (X-X) unbeweglich gemacht zu werder.

28. Vorrichtung gemäß einem der Ansprüche 25 bis 27, dadurch gekennzeichnet, daß wenigstens einer der axialer Endbereiche der zylindrischen Muffe (18) von wenigstens einer Leitung (27) für die Verbindung wenigstens einer Kammer mit variablem Volumen (259) des Stellers mit einem zur Vorrichtung externen Hydraulikkreis (17) durchsetzt ist.

29. Vorrichtung gemäß einem der Ansprüche 16 bis 28, dadurch gekennzeichnet, daß die hydraulische Dämpfungsvorrichtung zwei Dämpfungschieber (46) enthält, die im wesentlichen radial und zueinander in bezug auf die relative Drehachse (B-B) des Rotors (33) und des Stators (21) der Dämpfungsvorrichtung symmetrisch sind, wobei die Schieber (46) mit dem Stator (21) der Dämpfungsvorrichtung fest verbunden sind und wobei sich jeder vor ihrer im wesentlicher senkrecht zur Zugebene (T-T) des Blattes (9) und im wesentlichen symmetrisch oberhalb und unterhalb dieser Zugebene (T T) in jeweils eine der zwei Kammern der Dämpfungsvorrichtung erstreckt, wobei die zwei Kammern der Dämpfungsvorrichtung (45) jeweils durch eine Aussparung, die sich in radialer Richtung und in Umfangsrichtung in den Rotor (33) der Dämpfungsvorrichtung erstreckt, durch einen Teil der radialen Fläche des Stators (21) der Dämpfungsvorrichtung, der sich gegenüber der entsprechenden Aussparung im Rotor (33) der Dämpfungsvorrichtung befindet und den Fuß des in diese Aussparung eingreifenden Schiebers (45) umgibt, und durch ringförmige Oberflächenbereiche des oder der Elemente aus elastischem Material (38, 39), die den Stator der Dämpfungsvorrichtung und den Rotor der Dämpfungsvorrichtung (33) verbinden, begrenzt werden.

30. Vorrichtung gemäß Anspruch 29, dadurch gekennzeichnet, daß die Aussparungen des Rotors (33) der Dämpfungsvorrichtung, die sich in den Schiebern der Dämpfungsvorrichtung (46) befinden, in radialer Richtung nach außen durch eine periphere Buchse (36) verschlossen werden, die dicht (42) und unbeweglich am äußeren Umfang des Rotors (33) der Dämpfungsvorrichtung angebracht ist.

31. Vorrichtung gemäß einem der Ansprüche 29 und 30, dadurch gekennzeichnet, daß jeder Dämpfungsschieber (46) auf unablösbare Weise, vorzugsweise durch Schweißen mittels Elektronenbeschuß, an dem Flächenabschnitt des Dämpfungsstators (21) befestigt ist, der den Boden einer den Schieber (46) aufnehmenden Aussparung bildet.

32. Vorrichtung gemäß einem der Ansprüche 16 bis 31, dadurch gekennzeichnet, daß jede Innenkammer (45) der hydraulischen Dämpfungsvorrichtung über wenigstens einen Verbindungsdurchlaß (58, 59) mit wenigstens einer Kammer (56) für die Kompensation der Ausdehnungen der Hydraulikflüssigkeit der Dämpfungsvorrichtung, die durch einen die Erzeugung eines statischen Drukkes der Dämpfungsvorrichtung (21, 33, 45, 46) gewährleistenden Druckbeaufschlagungsmechanismus unter Druck gesetzt wird, verbunden ist.

33. Vorrichtung gemäß Anspruch 32, dadurch gekennzeichnet, daß der oder die Verbindungsdurchlässe (58, 59) zwischen einer Kompensationskammer (56) und einer Innenkammer der Dämpfungsvorrichtung (45) so kalibriert sind, daß sie für die Arbeitsfrequenz in der Dämpfungsvorrichtung ein dynamisches Filter bilden.

34. Vorrichtung gemäß einem Ansprüche 32 und 33 sowie in Verbindung mit Anspruch 30, dadurch gekennzeichnet, daß der oder die Verbindungsdurchlässe zwischen der Innenkammer der Dämpfungsvorrichtung (45) und der Kompensationskammer (56) durch ein radiales Spiel (59) zwischen der Umfangsbuchse (36) einerseits und dem Dämpfungsrotor (33) und/oder dem starren Träger des Kugelgelenks andererseits begrenzt sind.

35. Vorrichtung gemäß einem der Ansprüche 32 bis 34, dadurch gekennzeichnet, daß der Druckbeaufschlagungsmechanismus wenigstens eine vorzugsweise elastisch verformbare, biegsame Membran umfaßt, die wenigstens teilweise die entsprechende Kompensationskammer (56) begrenzt.

36. Vorrichtung gemäß Anspruch 34, dadurch gekennzeichnet, daß die biegsame Membran ein dichter Balg (57) ist, der sich in der Kompensationskammer (56) befindet und von außerhalb des Druckbeaufschlagungsmechanismus aufblasbar ist.

37. Vorrichtung gemäß Anspruch 36, dadurch gekennzeichnet, daß die Dichtheit der Kompensationskammer (56) durch wenigstens ein Element aus elastischem Material (38, 39, 40) gewährleistet wird, das vorzugsweise der Dämpfungsvorrichtung und/oder dem Kugelgelenk zugehörig ist.

38. Vorrichtung gemäß einem der Ansprüche 32 bis 37, dadurch gekennzeichnet, daß wenigstens eine Kompensationskammer (56) wenigstens teilweise durch den Dämpfungsrotor (33) und den Dämpfungsstator (21) und/oder eine Aussparung entweder im Dämpfungsrotor (33) oder im Dämpfungsstator (21) begrenzt wird und die Dichtheit der Kompensationskammer (56) durch wenigstens ein elastisches Verbindungselement (38, 39, 40) des Dämpfungsrotors (33) mit dem Dämpfungsstator (21) gewährleistet ist.

39. Vorrichtung gemäß Anspruch 38 sowie in Verbindung mit Anspruch 29, dadurch gekennzeichnet, daß sie zwei hydraulische Kompensationskammer (56) umfaßt, die in bezug auf die Achse (B-B) der relativen Drehung des Dämpfungsrotors (33) und des Dämpfungsstators (21) und in bezug auf die Ebene (T-T) des Nachlaufs des Blattes (9) zueinander symmetrisch sind und jeweils wenigstens teilweise durch eine der zwei Aussparungen, die sich in Umfangsrichtung an in dieser Richtung mit den Aussparungen der Dämpfungskammern (45) abwechselnden Positionen entweder im Dämpfungsrotor (33) oder im Dämpfungsstator (21) und/oder in den starren Trägern (21, 33) des Kugelgelenks und/oder in wenigstens einem Teil wenigstens eines elastischen Elementes (38, 39, 40) der Dämpfungsvorrichtung und/oder des Kugelgelenks erstrecken, begrenzt werden.

40. Vorrichtung gemäß einem der Ansprüche 32 bis 39, dadurch gekennzeichnet, daß jede Innenkammer (45) der Dämpfungsvorrichtung in Umfangsrichtung von jeder der Kompensationskammern (56), zwischen denen sie angeordnet ist, durch ein massives Teil aus viskoelastischem Material getrennt ist, wobei dieses Teil (40) mit dem oder den Elementen aus elastischem Material (38, 39), die den Dämpfungsrotor (33) und den Dämpfungsstator (21) und/oder die zwei starren Träger (21, 33) des Kugelgelenks miteinander verbinden, fest verbunden ist.

41. Vorrichtung gemäß einem der Ansprüche 5 bis 40, dadurch gekennzeichnet, daß wenigstens eines der Lager für die Einstellung des Anströmwinkels und für den Einbau ein glattes und trockenes Lager (78, 82-83) ist und wenigstens einen selbstschmierenden Ring (89) aufweist, der sich in einer ringförmigen Haltenut befindet, die in derjenigen (82, 83) der zwei einander gegenüber befindlichen zylindrischen Lagerflächen dieses Lagers ausgespart ist, die durch den Rotor (81-84) des Stellers und/oder den Dämpfungsstator (81) und/oder den starren Träger (81) des Kugelgelenks, der mit dem Rotor des Stellers (81-84) verbunden ist, gebildet wird.

42. Vorrichtung gemäß einem der Ansprüche 5 bis 41, dadurch gekennzeichnet, daß sie außerdem eine Vorrichtung zur automatischen Nachstellung des Spiels wenigstens eines Lagers für die Einstellung des Anströmwinkels und für den Einbau (78, 82-83) umfaßt.

43. Vorrichtung gemäß Anspruch 42 sowie in Verbindung mit Anspruch 41, dadurch gekennzeichnet, daß die Vorrichtung zur automatischen Nachstellung des Spiels eine hydraulische Vorrichtung ist, die wenigstens eine Kompensationskammer (116) umfaßt, die mit einer durch wenigstens einen Druckbeaufschlagungsmechanismus (117) mit Druck beaufschlagten Hydraulikflüssigkeit gefüllt ist und mit jeder der Haltenuten des Lagers (78, 82-83) durch wenigstens eine Leitung (122) verbunden ist, die zwischen dem Boden der Nut und dem entsprechenden selbstschmierenden Ring (89), der dicht in der Nut angebracht ist, mündet, derart, daß die Nachstellung des Spiels durch die diametrale Verschiebung des Rings (89) unter der Wirkung des Drucks der Hydraulikflüssigkeit in der oder den Kompensationskammern (116) der Vorrichtung für die Nachstellung des Spiels gewährleistet ist.

44. Vorrichtung gemäß Anspruch 43, dadurch gekennzeichnet, daß der Druckbeaufschlagungsmechanismus einer Kompensationskammer (116) der Vorrichtung für die Nachstellung des Spiels wenigstens eine biegsame Membran (117), die vorzugsweise elastisch verformbar ist, umfaßt, die wenigstens teilweise die Kompensationskammer (16) begrenzt.

45. Vorrichtung gemäß Anspruch 44, dadurch gekennzeichnet, daß die biegsame Membran des Druckbeaufschlagungsmechanismus der Vorrichtung für die Nachstellung des Spiels ein dichter und aufblasbarer Balg (117) ist, der sich in der entsprechenden Kompensationskammer (116) befindet

46. Vorrichtung gemäß Anspruch 45 sowie in Verbindung mit einem der Ansprüche 32 bis 40, dadurch gekennzeichnet, daß wenigstens eine Kompensationskammer (116) für die Ausdehnungen der Hydraulikflüssigkeit der Dämgfungsvorrichtung (81, 93) und ihr Druckbeaufschlagungsmechanismus (117) gleichzeitig jeweils eine Kompensationskammer für die hydraulische Vorrichtung für die Nachstellung des Spiels (116, 117, 122, 89) und ihren Druckbeaufschlagungsmechanismus bilden.

47. Vorrichtung gemäß Anspruch 46, dadurch gekennzeichnet, daß die Leitung(en) (122), die eine Kompensationskammer (116) mit einer Haltenut eines Rings (89) eines Lagers verbindet(verbinden), so kalibriert ist(sind), daß sie für die Arbeitsfrequenzen der Dämpfungsvorrichtung (81, 83) ein dynamisches Filter bildet(bilden).

48. Vorrichtung gemäß einem der Ansprüche 43 bis 47 sowie in Verbindung mit Anspruch 17, dadurch gekennzeichnet, daß die hydraulische Vorrichtung für die Nachstellung des Spiels wenigstens teilweise in die hydraulische Dämpfungsvorrichtung integriert ist.

49. Vorrichtung gemäß einem der Ansprüche 1 bis 48, dadurch gekennzeichnet, daß wenigstens ein hydraulischer Drehsteller (18-20, 21-24) und gegebenenfalls wenigstens ein zylindrisches Lager für die Einstellung des Anströmwinkels und für den Einbau (18, 22-23), wenigstens einen Positionswertaufnehmer (50), ein Kugelgelenk (21, 33, 38, 39),,eine Drehdämpfungsvorrichtung (21, 33, 45, 46) und eine Vorrichtung für die Nachstellung des Spiels (116, 117, 122, 89) so angebracht ist oder sind, daß sie kraft eines axialen Spiels bei der Anbringung des Stators (18-20) des oder der Steller an der Nabe (1) in axialer Richtung in einem begrenzten Bereich frei verschiebbar sind.

50. Rotornabe für einen Drehflügelflugzeugrotor mit variablem Einstellwinkel und von einer Bauart, die einen Mittelkörper (29 der Nabe (1), der auf der Drehachse (2) der Nabe zentriert ist, und radiale Erweiterungen (3) bezüglich der Drehachse (A), die mit dem Mittelkörper (2) fest verbunden sind und in einer Anzahl vorhanden sind, die gleich der Anzahl der Blätter (9) des Rotors ist, um jeweils eine Verbindung eines Blattes (9) mit der Nabe (1) zu gewährleisten, umfaßt, dadurch gekennzeichnet, daß sie Außerdem hydraulische vorrichtungen (17) zur individuellen Steuerung des Einstellwinkels eines Blattes (9) gemäß einem der Ansprüche 1 bis 49 umfaßt, deren Anzahl gleich der Anzahl der Blätter (9) ist und von denen jede an einer radialen Erweiterung (3) so angebracht ist, daß der Stator (18-20) des oder der hydraulischen Drehsteller der entsprechenden Vorrichtung an der Erweiterung (3) gehalten wird und in Drehrichtung um die Einstellwinkelachse (X-X) des entsprechenden Blattes (9) unbeweglich gemacht wird.

51. Rotornabe gemäß Anspruch 50 von einer Bauart, bei der jede radiale Erweiterung (3) für die Verbindung des entsprechenden Blattes (9) wenigstens ein Lager für die Einstellung des Anströmwinkels (18, 22-23) und ein auf der Achse (X-X) des Lagers für die Einstellung des Anströmwinkels zentriertes Kugelgelenk (21, 33) mit wenigstens einem Element aus elastischen Material (38, 39, 40) trägt, wobei das Kugelgelenk um sein Zentrum (C) mittels einer Scherbeanspruchung des elastischen Materials eine freie relative Bewegung des entsprechenden Blattes (9) bezüglich Schlag und Nachlauf ermöglicht, dadurch gekennzeichnet, daß wenigstens ein Drehsteller (18-20, 21-24) der entsprechenden hydraulischen Vorrichtung zur individuellen Steuerung des Einstellwinkels eines Blattes (9) mit wenigstens einem Lager für die Einstellung des Anströmwinkels (18, 22-23) kombiniert ist und der Rotor (219 des oder der Drehsteller der hydraulischen Vorrichtung drehfest um die Achse (X-X) des oder der Lager für die Einstellung des Anströmwinkels mit einem (21) der zwei starren Träger (21, 33) des Kugelgelenks verbunden ist, wobei zwischen den zwei starren Trägern (21, 33) das oder die Elemente aus visoelastischem Material (38, 39, 40) angebracht ist(sind).

52. Rotornabe gemäß einem der Ansprüche 50 und 51 von einer Bauart, die für jedes Rotorblatt (9) ein Verbindungselement (4), das bezüglich Zug starr und bezüglich Biegung und Verdrehung elastisch ist, mittels eines Blattfußteils (5) an eine radiale Erweiterung (3) angekoppelt ist und dazu vorgesehen ist, an ein Blatt (9) angekoppelt zu werden, um das Blatt gegen die Zentrifugalkraft zu halten und um Schwingungen des Schlages und des Nachlaufs des Blattes und Winkelveränderungen von dessen Einstellwinkel zuzulassen, sowie ein bezüglich Biegung und Verdrehung (14) starres Element, das mit der radialen Erweiterung (3) verbunden ist und dazu vorgesehen ist, mit dem Blatt (9) um die Einstellwinkelachse (X-X) des letzteren drehfest verbunden zu werden, umfaßt, dadurch gekennzeichnet, daß die Verbindung des bezüglich Biegung und Verdrehung starren Elementes (14) mit der radialen Erweiterung (3) wenigstens teilweise durch die dazwischen eingesetzte, entsprechende hydrauliscle Vorrichtung (17) zur individuellen Steuerung des Einstellwinkels eines Blattes (9) gewährleistet wird, derart, daß der Rotor (21) des oder der Drehsteller dieser hydraulischen Vorrichtung drehfest mit dem bezüglich Biegung und Verdrehung (14) um die Einstellwinkelachse (X-X) des Blattes (9) starren Element verbunden ist.

53. Rotornabe gemäß einem der Ansprüche 52 und 51 von einer Bauart, die für die Verbißdung eines jeden Blattes (9) mit der entsprechenden radialen Erweiterung (3) eine kombinierte Lagervorrichtung (17) für die Einstellung des Anströmwinkels (18, 22-23) mit einem elastischen Kugelgelenk (21, 33, 38, 39, 40) und einer hydroelastischen Dämpfungsvorrichtung umfaßt, in der die Dämpfungsvorrichtung drehbar in das Gelenk integriert ist, das wenigstens ein elastisches Element (38, 39), das zwischen zwei starren Trägern (21, 33) gehalten wird, enthält, wobei der erste starre Träger (33) dazu vorgesehen ist, mit dem entsprechenden Blatt (9) fest verbunden zu werden und wobei der zweite starre Träger (21) durch wenigstens ein Lager für die Einstellung des Anströmwinkels (18, 22, 23) mit der Erweiterung (3) verbunden ist, derart, daß die kombinierte Lagervorrichtung (17) die Veränderung des Einstellwinkels des entsprechenden Blattes (9) mittels Drehung des Kugelgelenks und der Dämpfungsvorrichtung um die Achse (X-X) des oder der Lager für die Einstellung des Anströmwinkels erlaubt und eine eingebaute Dämpfung der Schwingungen des Nachlaufs des Blattes (9) gewährleistet, dadurch gekennzeichnet, daß die entsprechende hydraulische Vorrichtung zur individuellen Steuerung des Einstellwinkels wenigstens teilweise in die entsprechende kombinierte Lagervorrichtung (17) integriert ist, derart, daß wenigstens ein Drehsteller (18-20, 21, 24) im Inneren des Kugelgelenks und der Dämpfungsvorrichtung (21, 38, 39, 33) angeordnet und in axialer Richtung in einer Reihe mit wenigstens einem Lager für die Einstellung des Anströmwinkels (18, 22, 23) angeordnet ist und daß der Rotor (21-24) des oder der Drehsteller mit dem zweiten starren Träger (21) des Kugelgelenkes fest verbunden ist.

54. Rotornabe gemäß Anspruch 53 sowie in Verbindung mit Anspruch 52, von einer Bauart in der das bezüglich Biegung und Verdrehung flexible Verbindungselement ein langgestreckter Arm (4) ist, der eine in bezug auf die Achse (A) der Nabe (1) im wesentlichen radiale Strebe zum Halten des entsprechenden Blattes (9) gegen die Zentrifugalkraft bildet, wobei der in radialer Richtung innere Endteil (5) des Arms (4) den Fußteil des Blattes (9) darstellt, der im Inneren der entsprechenden radialen Erweiterung (3) von zylindrischer und röhrenförmiger Gestalt gehalten wird, wobei seine Achse (X-X) zur Drehachse (A) der Nabe (1) im wesentlichen senkrecht orientiert ist, während der in radialer Richtung äußere Endteil (7) des Arms (4) einerseits mit einem Verbindungszwischenstück (8), das der Befestigung des entsprechenden Blattes (9) dient, und andererseits mit dem in radialer Richtung äußeren Endteil (15) des bezüglich Biegung und Drehung starren Elementes fest verbunden ist, wobei dieses Element als starre Muffe (14) ausgebildet ist, das den langgestreckten Arm (4) bis in die Nähe des Mittelkörper (2) der Nabe (1) berührungsfrei umgibt und dessen in radialer Richtung innerer Endteil (16) sich auf der röhrenförmigen Erweiterung (2) mittels der kombinierten Lagervorrichtung (17) um den Fuß (5) des langgestrecken Arms (4) abstützt, dadurch gekennzeichnet, daß die entsprechende hydraulische Vorrichtung zur individuellen Steuerung des Einstellwinkels des entsprechenden Blattes (9) um die röhrenförmige Erweiterung (3) mittels wenigstens einer zylindrischen Muffe (18) angebracht ist, die mit wenigstens einem Stator (18-20) des Drehstellers der Vorrichtung fest verbunden ist und auf die röhrenförmige Erweiterung (3) aufgepreßt und bezüglich einer Drehung relativ zur Erweiterung (3) durch eine axiale Riffelung (19), die mit einer komplementären Riffelung auf der Erweiterung (3) in Eingriff ist, unbeweglich ist.

55. Rotornabe gemäß einem der Ansprüche 50 bis 54, dadurch gekennzeichnet, daß der Mittelkörper (2) der Nabe (1) röhrenförmig ist und einen hydraulischen Servoverteiler (49) aufnimmt, der so angebracht ist, daß er mit der Nabe (1) eine beschränkte Drehung ausführt, und der über starre Leitungen (48) mit jedem der Drehsteller (18-20, 21-24) der hydraulischen Vorrichtungen zur individuellen Steuerung der Blatteinstellwinkel verbunden ist.

56. Rotornabe gemäß einem der Ansprüche 50 bis 55, dadurch gekennzeichnet, daß jeder Servoverteiler für die Versorgung eines Drehstellers (18-20, 21-24) einer hydraulischen Vorrichtung zur individuellen Steuerung des Einstellwinkels eines Blattes ein Servoventil-Servoverteiler ist, dessen Servorventil (26) direkt am Stator (18) des Stellers angebracht ist.

57. Rotor mit variablem Einstellwinkel für Drehflügelflugzeug, der insbesondere als Hauptrotor eines Hubschraubers oder ale schwenkbare Luftschraube eines konvertiblen Fluggeräts verwendbar ist, mit einer Rotornabe (1), die in Drehrichtung um eine Drehachse (A) des Rotors durch eine Rotorwelle angetrieben wird, mit Blättern (9), von denen jedes an der Nabe (1) durch wenigstens ein dazwischengeschaltetes Verbirdungselement (4) gehalten wird, das bezüglich Zug starr und bezüglich Biegung und Verdrehung elastisch ist und Schwingungen bezüglich Schlag und Nachlauf des entsprechenden Blattes (9) sowie durch die Wirkung eines bezüglich Biegung und Verdrehung starren Elementes (14), das an das Blatt (9) angeschlossen ist, Winkelveränderungen zuläßt, dadurch gekennzeichnet, daß er außerdem für jedes Blatt (9) eine Steueranlage für eine beschränkte Veränderung des Einstellwinkels umfaßt, die als Hydraulik- und Drehservosteuerung ausgebildet ist und eine hydraulische Vorrichtung zur individuellen Steuerung des Einstellwinkels eines Blattes (9) gemäß einem der Ansprüche 1 bis 49 aufweist, die so angebracht ist, daß der Stator (18) des oder der Drehsteller der hydraulischen Vorrichtung an der Nabe (1) gehalten wird und in Drehrichtung um die Einstellwinkelachse (X-X) des entsprechenden Blattes (9) an der Nabe (1) unbeweglich ist, während der Rotor (21) des oder der Drehsteller drehfest am Element (14), das bezüglich Biegung und Verdrehung um die Einstellwinkelachse (X-X) starr ist, angeschlossen ist.

58. Rotor gemäß Anspruch 57, dessen Nabe (1) einen Mittelkörper (2) aufweist, der röhrerförmig ist, mit einem Ende der ebenfalls röhrenförmigen Rotorhelle fest verbunden ist und zur Rotorwelle koaxial ist, dadurch gekennzeichnet, daß die Drehsteller (18-20, 21-24) sämtlicher hydraulischer Vorrichtungen zur individuellen Steuerung des Einstellwinkels eines Blattes (9) mit einem Servoverteiler verbunden sind, der sich im Mittelkörper (2) der Nabe (1) befindet und mit wenigsten einem Leistungshydraulikkreis, der sich wenigstens teilweise im Stilrotor befindet, verbunden ist.

59. Rotor gemäß Anspruch 58, dessen Servoverteiler Servoventile mit elektrischer Steuerung umfaßt, dadurch gekennzeichnet, daß der Stielrotor außerdem eine elektrische Sammelleitung aufnimmt, mit der einerseits Steuersignale für die Servoventile und andererseits Signale, die vom Postitionsdetektor (50) der verschiedenen Blätter (9) ausgegeben werden, übertragen werden.

60. Rotor gemäß einem der Ansprüche 58 und 59, dadurch gekennzeichnet, daß die Servoventile unter Zulassung einer beschränkten Drehung zwischen wenigstens einem umlaufenden Servoverteiler und den entsprechenden Drehstellern (19-20, 21-24) angebracht sind.

61. Rotor gemäß einem der Ansprüche 57 bis 60, dadurch gekennzeichnet, daß er eine Rotornabe (1) gemäß einem der Ansprüche 50 bis 56 umfaßt.

FIG.1

FIG.2

FIG.3

FIG.4

EP 0 321 336 B1

FIG.5

FIG.6

FIG.7

FIG.8

FIG.9